# EUROPEAN PATENT APPLICATION

(11) **EP 1 724 719 A1**
(43) Date of publication of application: **22.11.2006**
(21) Application number: 06252476.4
(22) Date of filing: 11.05.2006
(51) Int. Cl.: G06Q 10/00

(54) **Method and system for managing vehicle leases**

(30) Priority: 12.05.2005 US 680245 P; 21.11.2005 US 284258
(71) Applicant: The Crawford Group, Inc., St. Louis, MO 63105 (US)
(72) Inventor: Schuchardt, Jeff D., St. Louis, MO 63123 (US); McDaris, Mark E., Wildwood, MO 63005 (US)
(74) Representative: Hackney, Nigel John

(57) **Abstract**

An improved lease management system is disclosed herein for use by fleet managers to manage customer vehicle leases for a variety of management issues that arise throughout the lifecycle of a lease. According to one aspect, the system comprises a system for management of a plurality of vehicle leases, the system comprising: (1) at least one user computer; (2) a memory storing a database, the database being configured to store vehicle lease data for each of a plurality of vehicle leases; and (3) a server in communication with the user computer and the memory, the server being configured to execute a lease management software program, the lease management software program being configured to provide lease management functionality for each of said vehicle leases throughout a vehicle lease lifecycle via a plurality of interrelated graphical user interfaces (GUIs), the lease management functionality including a plurality of user selectable maintenance actions for an activated one of said customer vehicle leases, and wherein the lease management software program is further configured to update the stored vehicle lease data in the database in response to a user selection of at least one of said plurality of selectable maintenance actions.

## Description

This application claims the benefit of provisional patent application Serial No. 60/680,245 entitled "Method and System for Creating Vouchers for After Market Equipment Paystamps for Leased Vehicles", filed May 12, 2005, the entire disclosure of which is incorporated herein by reference.

The present invention relates to a system for managing a plurality of vehicle leases, preferably on behalf of customers, a task often referred to as fleet management.

The management of a fleet of leased vehicles on behalf of a customer is a challenging process that requires the ability to coordinate data flow and decision-making among a plurality of parties.

At any given time, a fleet management company may lease numerous vehicles to a plurality of customers for use in the customers' respective vehicle fleets. For example, a given company may lease several vehicles for use by its sales personnel. Another company may lease vehicles not only for use by its sales personnel but also for use by its field service personnel. Yet another company may lease vehicles not only for use by its sales personnel and field service personnel, but also for its executives. A fleet management company may be hired by these companies to manage the companies' leased vehicle fleets. The types of vehicles being leased and the types of leases may vary not only from customer company to customer company, but also within a single customer company. For many customers, both large and small, the needs of their leased vehicle fleets are complex and constantly shifting over time, which inevitably creates complex management issues for fleet managers who are tasked with making management decisions for multiple customers, each of which has its own unique fleet of leased vehicles. As used herein, the term "fleet manager" refers to any person employed by or contracted by a fleet management company to manage customer vehicle leases. The term manager is not meant to imply a requirement that the fleet manager actually manage other people, only that he/she be empowered to take an action on any part of a customer lease.

Lease management issues arise throughout the lifecycle of vehicle leases, with the lifecycle often including a plurality of stages, the stages comprising a lease quote creation stage, an order acceptance stage, an order vehicle stage, a pay for vehicle stage, a vehicle delivery to dealer stage, a vehicle delivery to lessor stage, a quote/lease activation stage, a maintain active lease stage, and a delete leased vehicle stage. During the maintain lease vehicle and subsequent stages, often times fleet managers are required to take maintenance actions on a lease to accommodate changed circumstances and the needs of the customer. A "maintenance action" as defined herein refers to any action that might be required to adequately retain or maintain the successful operation of one or more leased vehicles from lease activation through lease termination. Examples of such maintenance actions are discussed hereinafter.

With a previous system of the assignee of the present invention, only the stages starting from lease quote creation through the quote activated stage were integrated together through a common application. However, for maintenance actions taken by a fleet manager on a customer lease post-activation, the fleet manager was forced to access multiple separate and independent software programs. While these separate programs shared common databases, the functions of these programs were not coordinated. With the previous system, a given maintenance action may have required a fleet manager to utilize several different programs to accomplish multiple steps of the maintenance action. Experience and extensive training were required For a fleet manager to feel comfortable that all necessary programs were executed to fully accommodate a maintenance action. Furthermore, efficient navigation between the different programs was not provided nor was prompting provided to fleet managers to identify the different programs that had to be executed to fully complete a maintenance action, and often extensive re-keying of data was required.

Because of these disparate programs, an effective automated fleet management company-wide system of checks and balances was not in place to determine whether a fleet manager's maintenance action violated existing lease terms and/or internal fleet management company business policies. This shortcoming placed high demands on the knowledge and experience of fleet managers, and, even with knowledgeable and experienced fleet managers, created a risk of nonuniformity within the fleet management company as to how various maintenance actions are handled.

In an effort to improve upon the assignee's previous system, the inventors herein disclose a lease management system that provides a plurality of graphical user interfaces (GUIs) through which users can manage customer vehicle leases throughout the lease lifecycle. In particular, these GUIs are configured to provide users with the ability to handle post-activation lease maintenance actions. As used herein, an "activated" lease refers to a vehicle that has been delivered to a lessee and for which billing to the lessee has been initiated by the lessor. Thus, according to one aspect of the preferred embodiment of the present invention, disclosed herein is a system for user management of a plurality of customer vehicle leases, a system for management of a plurality of vehicle leases, the system comprising: (1) at least one user computer; (2) a memory storing a database, the database being configured to store vehicle lease data for each of a plurality of vehicle leases; and (3) a server in communication with the user computer and the memory, the server being configured to execute a lease management software program, the lease management software program being configured to provide lease management functionality for each of said vehicle leases throughout a vehicle lease lifecycle via a plurality of interrelated graphical user interfaces (GUIs), the lease management functionality including a plurality of user selectable maintenance actions for an activated one of said customer vehicle leases, and wherein the lease management software program is further configured to update the stored vehicle lease data in the database in response to a user selection of at least one of said plurality of selectable maintenance actions. As used herein, "lease management functionality" refers to a function provided by lease management software to control some aspect of a vehicle lease. As used herein, "interrelated" refers to the ability to navigate from one GUI to another either directly or indirectly via one or more intervening GUIs, all within the same software application. If the user is required to exit the software application to reach the "another" GUI, then the two GUIs are not "interrelated". Similarly, if a user is required to launch a new software application to reach the "another" GUI, then the two GUIs are not "interrelated".

The lease management system is also preferably configured to provide an automated system of checks and balances to evaluate proposed maintenance actions against predetermined business rules. Among the checks and balances, the system preferably provides users with a greater ability to determine the taxes and surcharges that are applicable to a given customer lease, both prior to quote activation and during lease maintenance if changes occur that require a tax/surcharge adjustment. With the present invention, tax and surcharge tables are stored in a database that allows for the system to identify applicable tax and surcharge data for a given customer lease based on user-specified or otherwise known geographical identifiers. For example, in many cases, a user will be able to determine the applicable taxes and surcharges for a lease by specifying the applicable postal code (i.e., zip code) for the lease. In other instances where multiple municipalities exist within the same zip code, and where those municipalities apply different taxes and/or surcharges to a vehicle lease, the system preferably allows the user to further specify the applicable municipality for the vehicle lease. Preferably, the list of available municipalities within the specified zip code are presented to the user via a drop down menu. Thus, by referencing taxes and surcharges to postal codes and municipalities, the preferred embodiment helps minimize the risk of error when determine the applicable taxes and surcharges for a vehicle lease.

According to another aspect of the preferred embodiment of the present invention, the lease management system is configured to increase the automation between itself and the business accounting software used by the fleet management company. This increased automation promotes efficiency when processing cost items such as vehicle paystamps, after market equipment (AME) paystamps, license tax and title (LT&T) paystamps, and "other costs" paystamps (such as shipping or transportation costs related to a leased vehicle or miscellaneous adjustments), and also when directly accessing a customer's financial account to obtain payment on accounts receivable items (referred to as a direct debit process).

Within an exemplary scenario of processing AME paystamps, when vehicles that are to be leased to a customer are ordered from the factory or vehicle dealer, those vehicles may not include all of the equipment desired by the customer. For example, a customer who is leasing a truck or delivery vehicle may be desirous of adding additional features (such as a ladder rack, a bedliner, etc.) to the vehicle to tailor that vehicle to its needs. Another example would be a leased vehicle that adds additional features such as a satellite radio receiver, a sun roof, or the like. This type of additional equipment is known as AME, as is well-known in the art. In instances where the factory or dealer does not offer the AME desired by the customer, where the customer chooses to add the AME to the vehicle after delivery from the factory or dealer, or where the customer simply chooses an outside vendor, the AME will be purchased from an outside vendor rather from the factory or dealer. As such, the cost of the AME may not be reflected in the invoice for the vehicle received from the factory/dealer. Instead, a separate invoice from the outside vendor for the AME items will be received by the fleet management company.

From the perspective of a fleet manager who manages a fleet of leased vehicles on behalf of a customer, the use of cost items from outside vendors creates invoicing, disbursement, and management complexities. Fleet managers who arrange to add a cost item such as AME to their customers' leased vehicles will need to either build the expected AME costs into the monthly lease payments or make arrangements with the customer to bill the customer separately for AME items. When invoices for AME items are received by the fleet management company, the fleet manager will need to review the invoiced AME items to ascertain the degree to which the invoiced cost reflects the expected cost. In cases where the invoiced cost is greater than the expected cost that was either built into the customer's monthly lease payment or quoted to the customer in advance for a separate billing, the fleet manager will be forced to make business decisions as to whether the additional cost should be passed on to the customer or taken as a loss.

An additional task that will need to be undertaken by the fleet manager is the approval of a cost item invoice so that the vendor can be paid. In previous systems operated by the assignee of the present invention, this task required the fleet manager to manually key the cost item's invoice data together with appropriate data about the Jeased vehicle to which the cost item invoice is applicable into a separate business financial/accounting software program such as PeopleSoft from either a screen display (or hard copy) produced by a separately running program that summarized AME invoice data and leased vehicle data or from a hard copy of the AME invoice itself. This task resulted in redundant data entry tasks and/or required familiarity with multiple disparate computer programs.

As such, the inventors believed a need existed in the art for a more reliable and streamlined approach to handling transaction and cost issues related to outside vendor cost items for leased vehicles. Toward this end, the inventors herein disclose a method for integrating a business accounting software program with a software program within the lease management system for managing a plurality of vehicles leased by a customer, the method comprising: (1) providing a page that lists data describing a plurality of cost items that are applicable to a customer's vehicle lease; (2) receiving an input from a user that is indicative of a command to pay a vendor for at least one of the listed cost items; and (3) responsive to the received input, automatically uploading vendor payment instructions for the at least one listed cost item to a separate business accounting software program.

Preferably, the page is configured to display a customer price for each cost item, an expected cost for each cost item, and an invoiced cost for each cost item. Furthermore, the page can also be further configured to receive input from the user indicative of a command to create a manual voucher for at least one of the listed cost items. A corresponding system and software for performing this method are also disclosed herein.

Also disclosed herein is a method and system for identifying problematic cost items, wherein a page is provided through which a user can request a report that lists each cost item that is applicable to a customer lease, wherein the listed cost item has an invoiced cost that is different than an expected cost therefor. Responsive to user input on this page, such a report can be generated for display to the user. In a preferred embodiment, this report lists each cost item that related to the customer lease, wherein the listed cost item has an invoiced cost that is different than an expected cost by more than a predetermined variance.

In addition to processing cost items such as AME paystamps in this manner, paystamps for vehicle orders, LT&T, and other costs can likewise be handled via the preferred embodiment of the present invention. For example, miscellaneous adjustments can also be processed via the preferred embodiment, such adjustment paystamps that relate to subsequent adjustments to vehicle paystamps (e.g., later discovery of applicable vehicle rebates or the like; these paystamps are usually but not always credits).

According to another aspect of the preferred embodiment of the present invention, the inventors disclose herein a plurality of GUIs for users to enter maintenance actions on customer leases wherein those maintenance actions can be globally entered for a user-specified plurality of leases simultaneously. This aspect of the preferred embodiment of the present invention promotes efficiency by alleviating fleet managers of the need to unnecessarily re-key data.

According to yet another aspect of the preferred embodiment of the present invention, the inventors disclose herein the use of customer profiles to define how various lease actions are handled. For example, the inventors herein disclose the customer profiles can be used to define how various cost variances will be handled by the lease management system.

According to yet another aspect of the preferred embodiment of the present invention, the inventors disclose herein that the lease management system can be used to generate a fleet risk report that would feed a credit review process. This report would preferably detail the unit-by-unit and total risk for a customer's fleet. Based on this report, a fleet manager can determine whether he/she is comfortable with the risk identified by the report in view of the customer's credit history. The inventors envision that this tool could also be used to forecast the fleet management company's risk for a customer's fleet as of a user-specified future date.

According to another aspect of the present invention, disclosed herein is an Internet-based customer interface to the lease management system that allows customers to identify expected total holding costs for a vehicle lease. This Internet-based customer interface may also preferably be used by the customer to access a cycling analysis tool that will identify for the customer a recommended deletion time for a vehicle lease.

These and other features and advantages of the present invention will be described hereinafter.
Figure 1 illustrates a preferred hardware environment for the lease management system;
Figure 2 depicts a preferred high level overview of an exemplary lease management lifecycle;
Figure 3 depicts an exemplary flowchart for the quote creation stage through the quote pending stage;
Figure 4 depicts an exemplary flowchart for the order acceptance stage through the quote approved stage;
Figure 5 depicts an exemplary flowchart for the vehicle order stage through the scheduled for production stage;
Figure 6 depicts an exemplary flowchart for the pay for vehicle stage through the vehicle delivery to dealer stage;
Figure 7 depicts a preferred system diagram for processing AME paystamps;
Figure 8 is a flowchart depicting a preferred method of processing AME paystamps;
Figure 9(a) depicts an exemplary preferred "Find Paystamp Items by Quote" screen;
Figure 9(b) depicts an exemplary preferred "Find Paystamp Items by Vendor" screen;
Figure 10 depicts an exemplary preferred "Paystamp Items" screen from which a user can create AME vouchers;
Figure 11 depicts an exemplary preferred "Create Manual Voucher" screen;
Figure 12 depicts an exemplary preferred "AME Variance Report Criteria" screen;
Figure 13 depicts an exemplary preferred "Payment Tracking" screen;
Figures 14, 15(a), and 15(b) depict exemplary preferred screens for searching for quotes of interest to the user;
Figures 16(a) and (b) depict an exemplary preferred screen for searching for vendors of interest to the user;
Figure 17 depict an exemplary flowchart for handling cost variances based on stored customer profiles;
Figure 18 depicts an exemplary flowchart for the vehicle delivery to lessor stage through the vehicle delivery to customer stage;
Figures 19(a) and (b) depict exemplary flowcharts for the quote activation stage through the quote activated stage;
Figure 20 depicts an exemplary flowchart of an approval process for enrolling customers into the lessor's master physical damage and liability program(s);
Figures 21(a)-(i) depict exemplary GUIs and process flows for user access of interrelated GUIs for performing maintenance actions on one or more user-selected activated customer vehicle leases;
Figure 22 depicts an exemplary flowchart for updating the enrollment program for an activated vehicle lease;
Figure 23 depicts an exemplary flowchart for making vehicle changes for an activated vehicle lease;
Figure 24 depicts an exemplary flowchart for assigning a different driver to an activated vehicle lease;
Figure 25 depicts an exemplary flowchart for changing the maintenance product for an activated vehicle lease;
Figure 26 depicts an exemplary flowchart for requesting a physical damage and liability program card for an activated vehicle lease;
Figure 27 depicts an exemplary flowchart for requesting a fuel card for an activated vehicle lease;
Figure 28 depicts an exemplary flowchart for requesting a maintenance card for an activated vehicle lease;
Figure 29 depicts an exemplary flowchart for changing address of a driver for an activated vehicle lease;
Figure 30 depicts an exemplary flowchart for changing the term of an activated vehicle lease;
Figure 31 depicts exemplary flowcharts for mileage changes to an activated vehicle lease;
Figure 32 depicts an exemplary flowchart for terminal RBV changes to an activated vehicle lease;
Figure 33 depicts an exemplary flowchart for depreciation changes to an activated vehicle lease;
Figure 34 depicts an exemplary flowchart for service charge changes to an activated vehicle lease;
Figure 35 depicts an exemplary flowchart for residual adjustments to an activated vehicle lease;
Figure 36 depicts an exemplary flowchart for overmileage charge changes to an activated vehicle lease;
Figure 37 depicts an exemplary flowchart for management fee changes to an activated vehicle lease;
Figure 38 depicts an exemplary flowchart for interest rate changes to an activated vehicle lease;
Figure 39 depicts an exemplary flowchart for secondary credit checks for an activated vehicle lease;
Figures 40(a)-(e) depict exemplary flowcharts for the delete leased vehicle stage through the terminate lease stage;
Figures 41(a)-(o) depict exemplary GUIs for determining the applicable taxes and surcharges for one or more user-specified leased vehicles;
Figure 42 depicts an exemplary customer GUIs for displaying estimated total holding costs for a vehicle lease; and
Figures 43(a)-(c) depict a fleet risk report creation process.

### Detailed Description of the Preferred Embodiment:

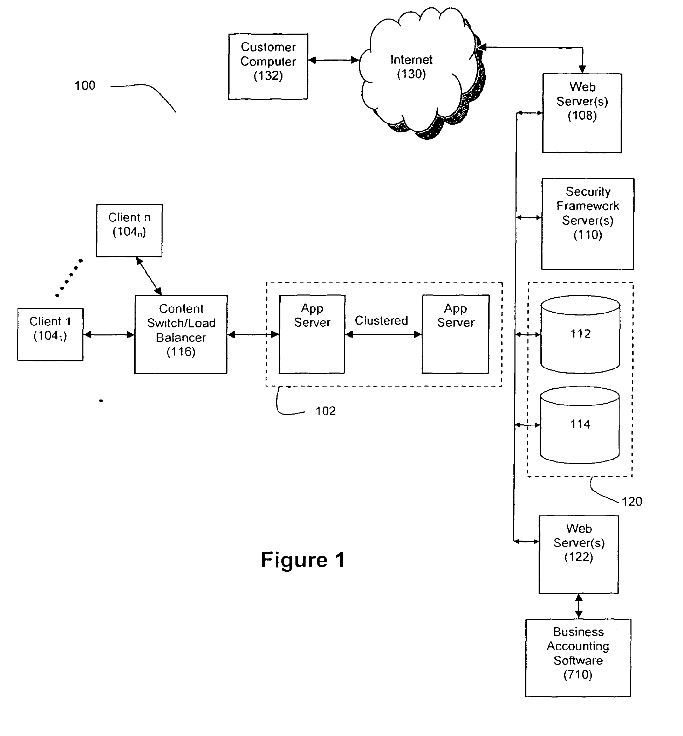

Figure 1 depicts a suitable hardware architecture for the preferred embodiment of the present invention. The system 100 comprises an application server 102 (preferably clustered servers) in communication with, at the front end, a plurality of client computers 104₁ through 104ₙ (preferably via a content switch/load balancer 116 that acts as a network traffic cop as is known in the art). The client computers 104 can interconnect with the application server 102 via any known technique for data communication, although a local area network (LAN) connection such as with an intranet is preferred. At the back end, the application server 102 is preferably in communication with one or more databases and other servers via TCP/IP over an Ethernet connection. Once again, any known technique for data communication can be used by the application server 102 to communicate with the one or more databases and backend servers.

Application server 102 can preferably access database 120, wherein database 120 is preferably configured to store the customer and vehicle lease data, such as data about the customer's current and planned leased vehicle fleets, including but not limited to data such as quote data, order data, and data for various lease parameters for each customer's leased vehicle fleet. Database 120 may comprise one or more databases. As shown in Figure 1, database 120 comprises a database 112 in which the majority of the customer data is stored and a database 114 in which vehicle-specific data from a third party provider such as Autodata is stored. Database 112 may be an Informix production database on a Sun E4500 running Solaris 2.6 and database 114 may be an Oracle production database on an IBM RS6000 running AIX 5.2. If desired, the data stored in databases 112 and 114 can be combined into a single Oracle database. However, it should be understood by those of ordinary skill in the art that still other data storage arrangements could be used. For example, the data stored in databases 112 and 114 could be stored in several distributed databases.

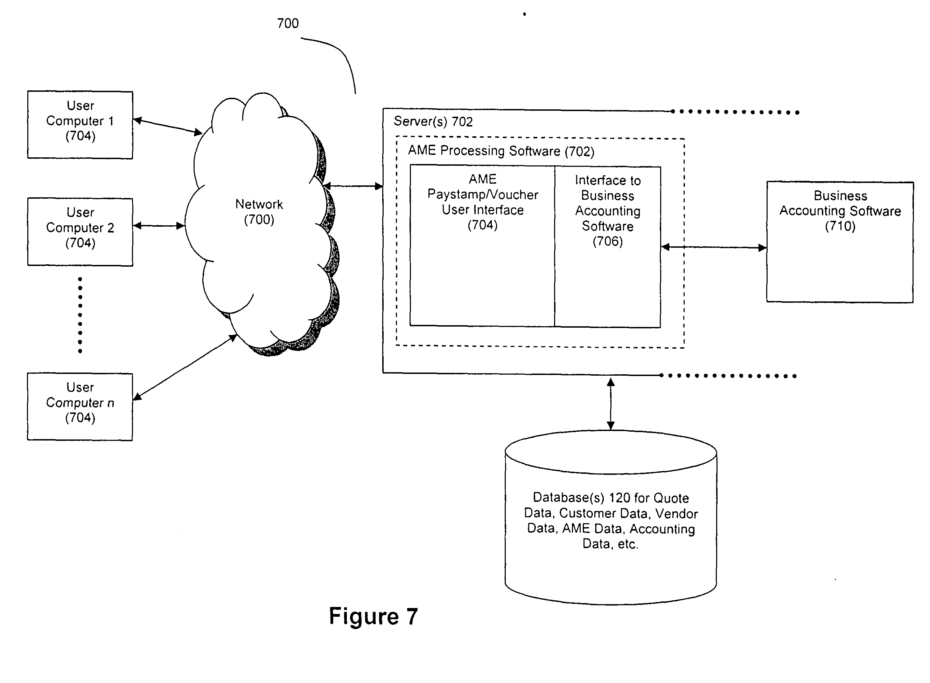

The application server may also be in communication with one or more web servers 108, which are preferably configured to access any vehicle image data that may be needed, as well as a security framework system 110. Web servers 108 may also be used to allow one or more customer computers 132 to access the application servers 102 over the Internet 150, as described below. The security framework server 110 preferably is configured to control which users have access to which GUIs as well as what actions each user can take on each GUI. As explained in greater detail below, this security is preferably based on assigned security clearances for various users. Furthermore, the application server 102 may be in communication with one or more web servers 122. Through web server 122, the application server 102 can access business accounting software 710, as explained in greater detail in connection with Figure 7.

Preferred hardware for the application server 102 and web servers 108 comprise IBM RS6000 servers running AIX 5.2. Preferred hardware for the client computers 104 are standard desktop PCs. Preferred hardware for the content switch/load balancer 116 is a Cisco 11503 running a 5.0.0 OS. Preferred hardware for the security framework system servers 110 are HP Proliant DL360 G3 servers running Windows 2000. However, it should be understood by those having ordinary skill in the art that any of a number of hardware platforms are also suitable for use in the practice of the present invention depending on the processing needs and resources that are available to a practitioner of the present invention. Moreover, system configurations other than that shown in Figure 1 may also be used in the practice of the present invention.

Application servers 102 preferably execute lease management software that allows users of the client computers 104 to interact with the various databases on the backend of system 100 and manage the vehicle leases of customers who lease a fleet of vehicles from one or more lessors. Preferably the client computer users are employees of a fleet management company, which is preferably also the lessor of the leased vehicles. However, this need not be the case as the lessor could be one or more outside entities. Through software installed on the client computers 104 (preferably standard browser software), the client computer users can access the lease management software to manage vehicle leases via a plurality of interactive graphical user interfaces (GUIs) that are displayed on the client computer by the lease management software. These GUIs provide point-and-click navigation to a powerful array of lease management features, particularly in connection with integrating the variety of maintenance actions that occur for a lease post-activation. A non-exhaustive list of maintenance action examples include vehicle changes for an activated lease, changes in services for an activated lease, changes in the enrollment program for an activated lease, changing the driver for an activated lease, changing the term of an activated lease, changing the mileage for an activated lease, changing the terminal reduced book value (RBV) for an activated lease, changing the depreciation for an activated lease, changing the applicable service charges for an activated lease, changing the residual value for an activated lease, changing the management fee for an activated lease, changing the applicable interest rate for an activated lease, and requesting/changing a physical damage and liability program card, maintenance card, or fuel card for an activated lease.

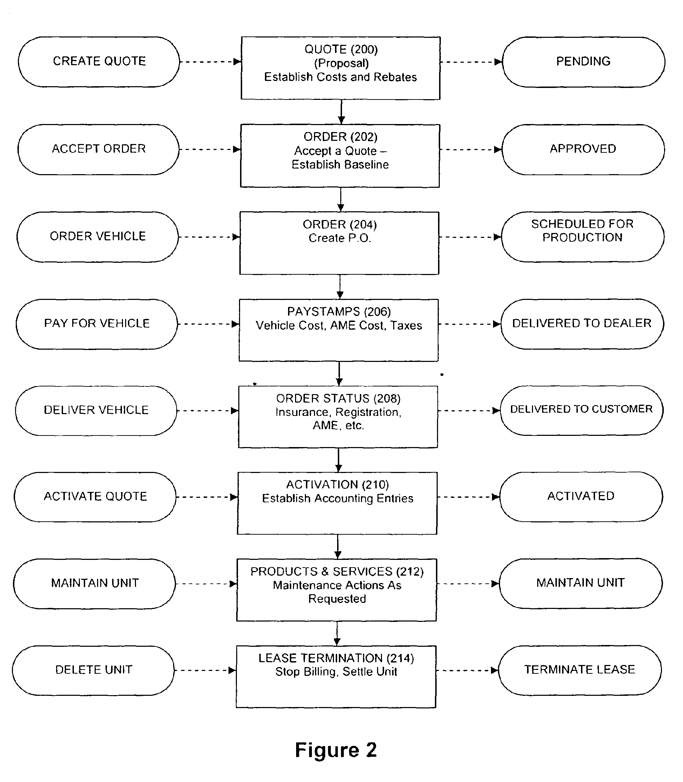

Figure 2 depicts a preferred high level overview of an exemplary lease management lifecycle, with additional details about each stage being provided in the subsequent figures. The preferred lease management system preferably provides GUIs to users for the users to manage this lifecycle.

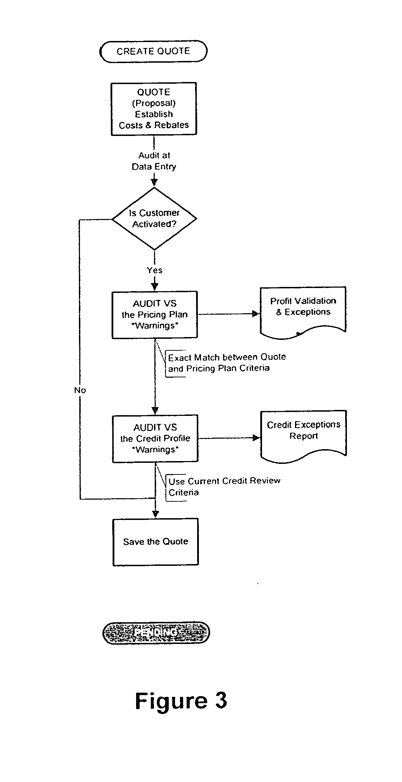

The life of a vehicle lease from quote creation to pending status generally involves a fleet manager establishing the applicable costs and rebates for a lease quote to a customer, approving that quote through appropriate supervisory authorities, and proposing the quote to the customer. A lease quote comprises all components of a lease rate from inception through termination including acquisition costs, set-up prices to the customer, and payment parameters including depreciation, interest, maintenance fees, taxes, and any applicable services. Figure 3 depicts a preferred flow for this process. Newly-created quotes are audited against a pricing plan and against the customer's credit profiles to determine whether any warnings to the lessor are applicable. Customer pricing plans are preferably stored in the database by a user after a meeting/discussion with the customer to define the customer's price expectations. Quotes that do not exactly match the customer pricing plan are preferably referred to a profit validation and exception handling task to warn interested parties such as a leasing supervisor. Commonly-owned pending patent application serial no. 11/090,400, filed March 25, 2005, entitled "Client-Server Architecture for Managing Customer Vehicle Leasing", the entire disclosure of which is incorporated by reference herein, describes the process of auditing quotes against a customer's credit profile. After performance of these audits and saving the quote in the database, a quote becomes pending.

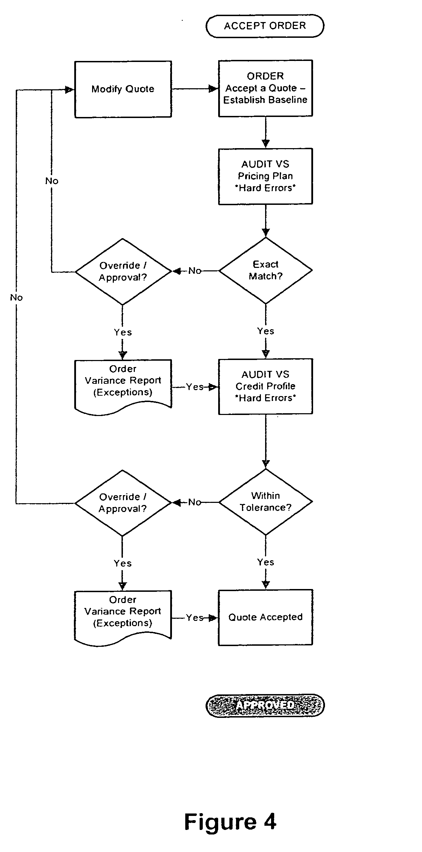

Upon acceptance of a pending quote by a customer, the order acceptance stage is reached. Figure 4 depicts a preferred flow for lease management from the order acceptance stage to the order approved stage. Once again audits are performed against the customer pricing plan and the customer credit profile. In this instance, if a quote does not pass an audit, the order must go through a review process to obtain supervisory approval before a quote can be approved.

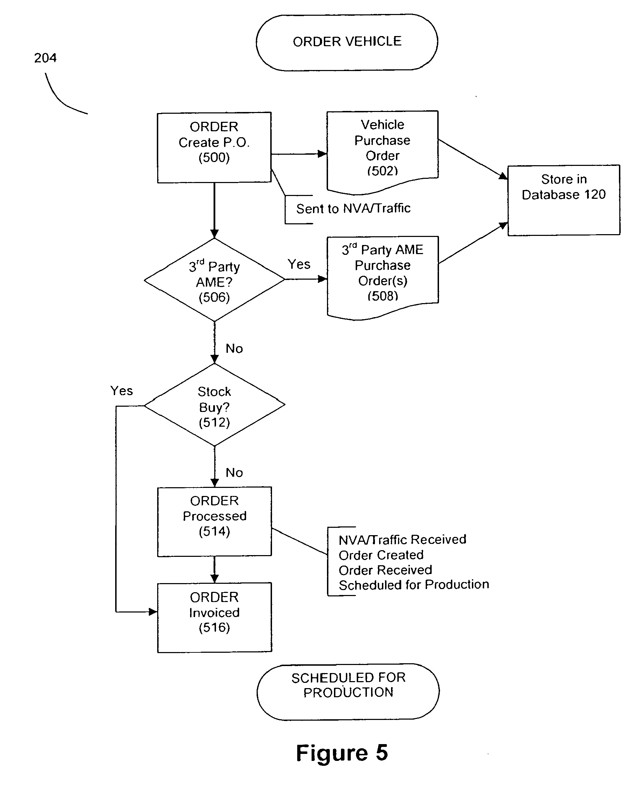

Once the leased vehicle is ordered, the order vehicle stage is reached. Figure 5 depicts a preferred flow for managing the vehicle ordering process. First a vehicle purchase order is created through a GUI, and this vehicle purchase order is stored in database 120. If third party AME is applicable to the vehicle, then an AME purchase order is created through a GUI, and this AME purchase order is also stored in database 120. If the purchase is a buy from a dealer's own inventory (a "stock buy"; as opposed to a buy from a manufacturer), then the order is invoiced to the lessor. If the purchase is not a stock buy, the order is first processed by a manufacturer before it is invoiced by the manufacturer to the lessor. After invoicing, the scheduled for production stage is reached.

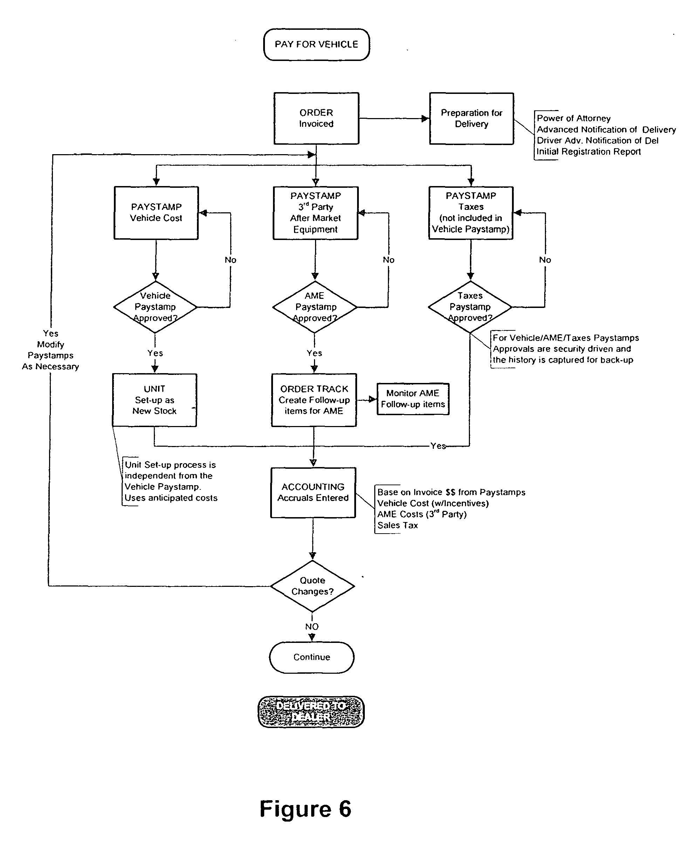

Next, Figure 6 depicts a preferred flow for paying for the vehicle and other applicable costs related to the leased vehicle. Paystamps related to the leased vehicle may include vehicle paystamps, AME paystamps, LT&T paystamps, or paystamps for other costs.

Figure 7 depicts an exemplary portion of the lease management system 100 for performing AME processing in connection with leased vehicle transactions. As previously described, the system 100 comprises a plurality of user computers 104 (such as desktop PCs, workstations, laptops, or the like) in communication with one or more servers 102 over a network 700. Network 700 can take the form of any known data communication network, such as the Internet, a company intranet, LAN, WAN, wireless data network, and the like, as would be understood by those having ordinary skill in the art.

Through network 700, a user computer 104 can access and run AME processing software 702. This AME processing software 702 is configured to, among other things, (1) allow users to retrieve AME items of interest from database 120 for display on the user computer 104, (2) create electronic vouchers for user-selected AME items, (3) upload the electronic vouchers to a business accounting software program 710, and (4) produce reports on user command that detail AME items whose invoiced costs exhibit some level of variance from expected costs.

The AME processing software 702 is preferably in communication with the network 700 (to thereby interact with user computers 104), with database 120 (to thereby retrieve and store pertinent data), and with business accounting software 710 (to thereby effectuate payment to AME vendors). Business accounting software 710 is software used by a fleet management company for accounting purposes, such as controlling disbursements, creating and sending invoices, etc. A variety of software packages are readily available for these tasks; for example PeopleSoft is a widely used business accounting software package that is suitable for use in connection with the present invention.

Database 120 preferably stores pertinent data relating to quotes for leased vehicles, data relating to the customers who lease vehicles from the fleet management company, data about the AME vendors, data about the AME items themselves, and any other data needed by the business accounting software.

Although the system of Figure 7 shows a networked system for AME processing, it is worth noting that the inventive system can also be implemented on a single stand-alone computer, as would be understood by those having ordinary skill in the art.

AME processing software 702 preferably comprises two primary components, an AME paystamp/voucher user interface component 704 and an interface component 706 to the business accounting software 710. Through interface component 704, a user of a user computer 104 can access a plurality of screens, as described hereinafter to review AME paystamp items and create AME vouchers from those AME paystamp items for submission to the business accounting software. Interface component 706 operates to convert the AME vouchers created through interface 704 to a form that is suitable for automatic upload to business accounting software 710.

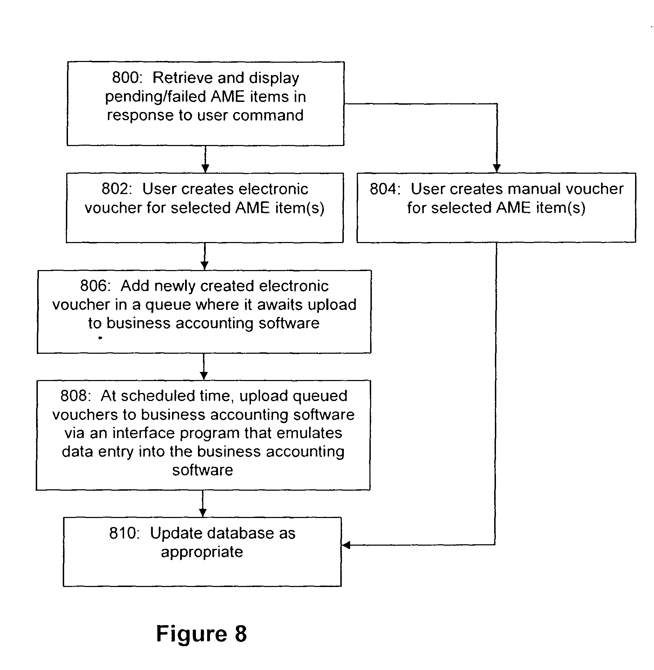

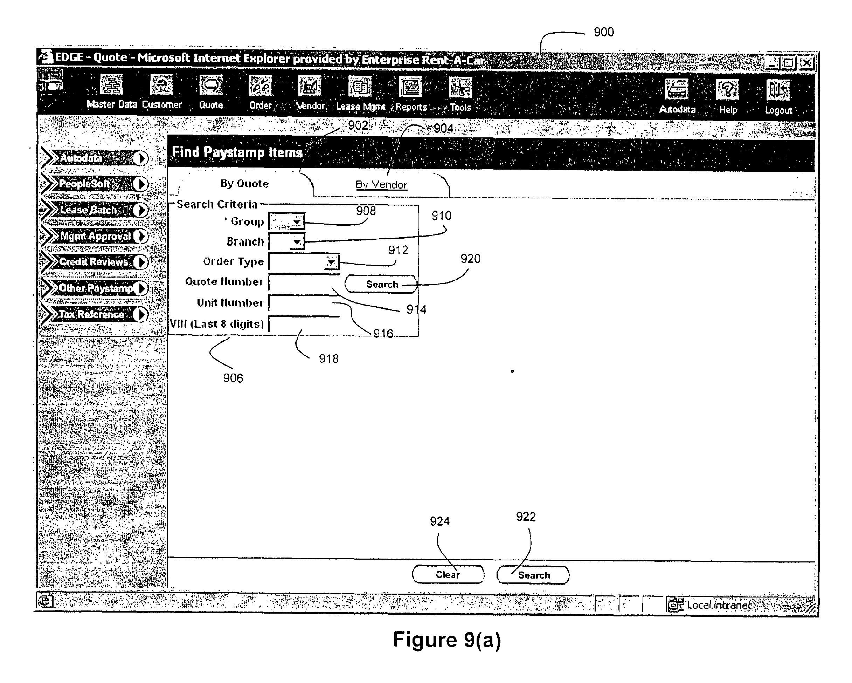

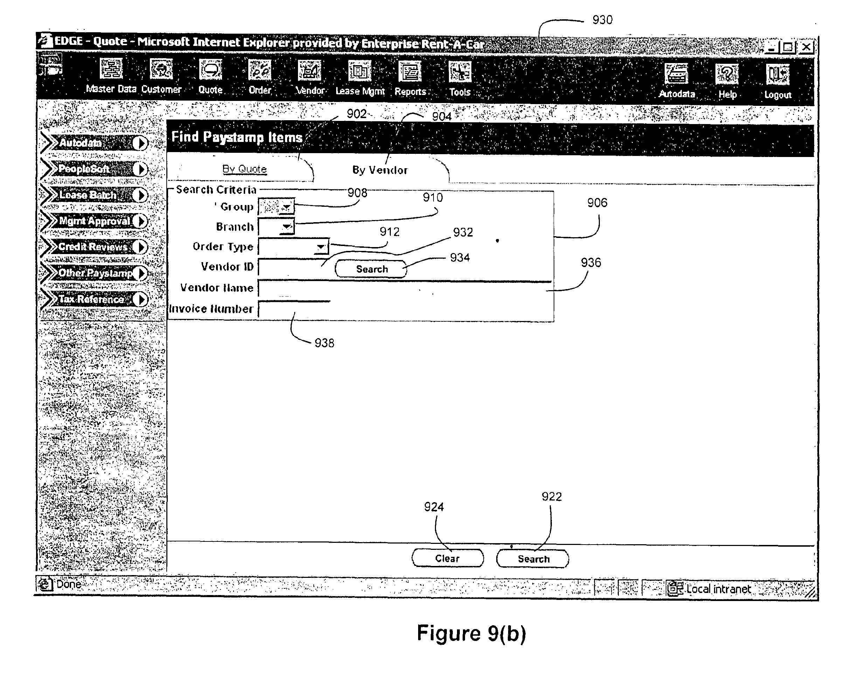

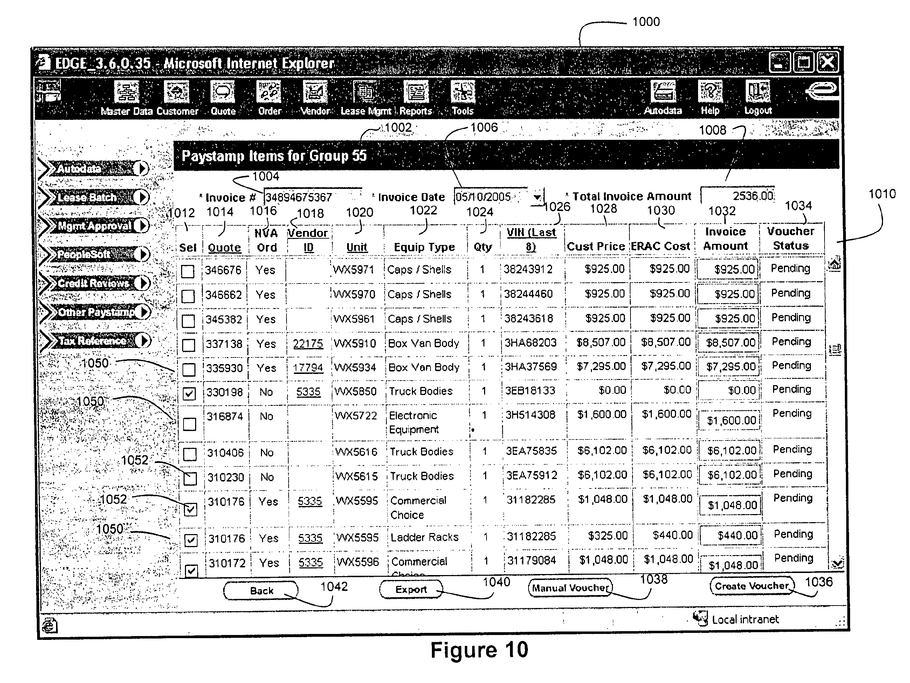

Figure 8 depicts a preferred flowchart for this process. Enclosed herewith as Exhibit A are additional details regarding steps 800-810 of Figure 8. At step 800, the AME processing software 702 retrieves and displays AME paystamp items for which user action is needed from database 120 in response to user command. Figures 9(a), 9(b), and 10 depict screens presented to the user as part of this step. Each AME paystamp item preferably corresponds to an AME item (for a quantity of one or more) for which the fleet management company has placed an order and/or included in a leased vehicle quote. Data describing the AME paystamp items, including the vendors' names, the types of AME items purchased, the quantity of AME items purchased, the leased vehicles to which the AME items are applicable, the invoiced costs, and others are stored in database 120. Also stored in database 120, when such data becomes available, are the prices charged to the customers for the AME items and the costs for the AME items that are expected by the fleet management company. Typically, these data items will be added to database 120 when quotes related to the AME items are created for the customer or when the AME items are ordered from the vendors (see, for example, Figure 5). When invoices are received from vendors for AME orders, the user will retrieve the AME paystamp items related to those invoices as described below. It is worth noting that a given AME vendor invoice may encompass more than one AME item ordered from that vendor and may also encompass more than one leased vehicle as well as more than one leased vehicle customer. For example, a single AME invoice may list line items for a particular AME order applicable to Customer A (for leased vehicle Z), another AME order applicable to Customer B (for leased vehicle X), and another AME order also applicable to Customer B (for leased vehicle Y). However, this need not be the case.

Figure 9(a) depicts an exemplary screen (or page) 900 from which a user can request retrieval of desired AME paystamp items from database 120. From screen 900, the user can toggle between conducting searches for AME paystamp items by quote (via user selection of tab 902) and by vendor (via user selection of tab 904). Figure 9(a) depicts a "by quote" search screen 900 and Figure 9(b) depicts a "by vendor" search screen 930.

With reference to Figure 9(a), section 906 depicts a plurality of search criteria data entry fields. Fields 908 and 910 allow the user to specify the group identifier and branch identifier for restricting the scope of the search. For a fleet management company that is organized into groups based on geography or other classification means (for example, a midwest group that manages the leased vehicle fleets for midwestern customers, a southeast group that manages the leased vehicle fleets for southeastern customers, a west coast group that manages the leased vehicle fleets for west coast customers, etc.), and wherein each group is further subdivided into branches (based on more narrow geographical constraint or other means of classification), group identifiers and branch identifiers may be useful means of restricting the search such that only AME paystamp items of relevance to a particular fleet manager are retrieved. While a particular group manages a customer that is said to be a "midwestern" customer, this does not necessarily mean that the customer only leases vehicles that are driven in the midwest; this may refer to the location of the customer's headquarters or the location of the customer's principal place of vehicle leasing, wherein that customer may utilize drivers of leased vehicles nationwide. To prevent fleet managers from taking actions on the AME paystamp items applicable to another groups' customers, the system can be designed such that group identifier field is a read-only value that is pre-set to the group identifier associated with the user of the user computer. Alternatively, the ability to change the group identifier in field 908 can be limited to users with sufficient approval authority, with lower level users having no authority to change the group identifier in field 908 to higher level users having some authority to change the group identifier in field 908, etc. Similar constraints can be placed on the branch identifier in field 910. The group identifiers and branch identifiers that are loaded into fields 908 and 910 can be controlled, commensurate to the user's approval authority, via drop down menus that are selectable to list a plurality of group identifiers or branch identifiers to choose from. As would be understood by those having ordinary skill in the art, depending on the organization of the fleet management company, fields 908 and 910 may be altered to conform to that company's organizational structure (or omitted altogether) in the practice of the present invention.

Through field 912, the user can identify an order type to which the search should be restricted. Depending on how the fleet management company conducts its business, that fleet management company may utilize more than one mode of purchase ordering, such as a local ordering network and a centralized/nationwide ordering network. These classifications may help a user narrow his/her search for AME paystamp items.

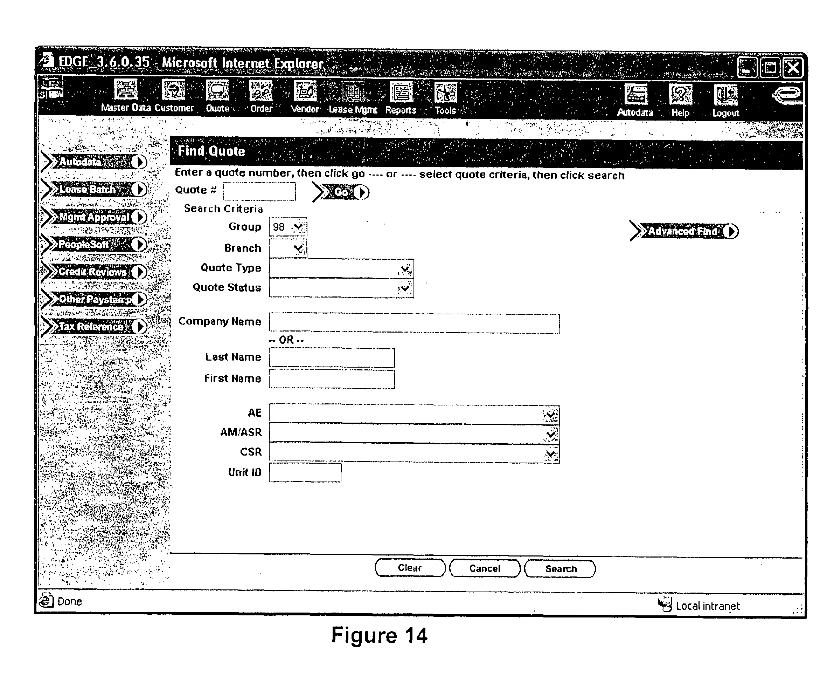

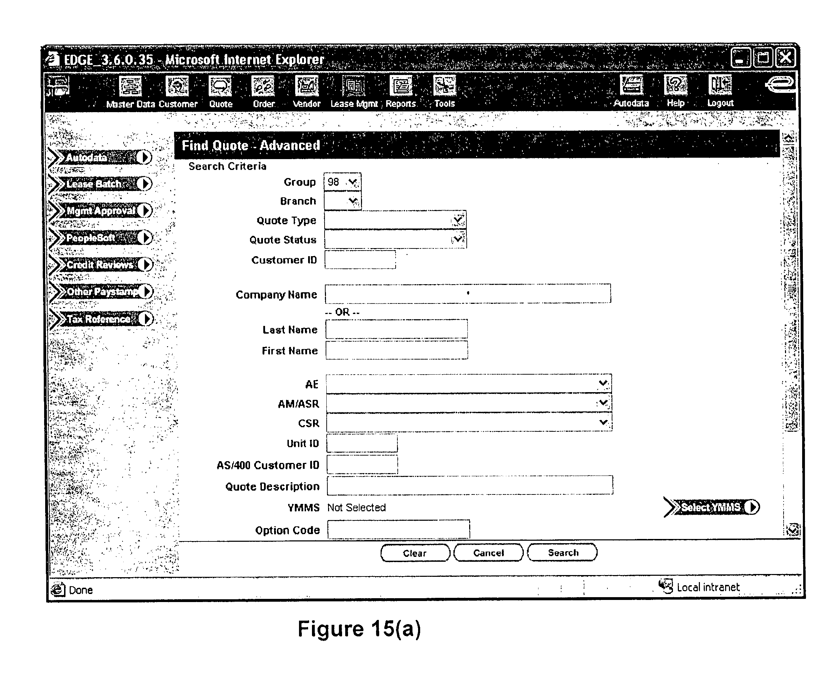

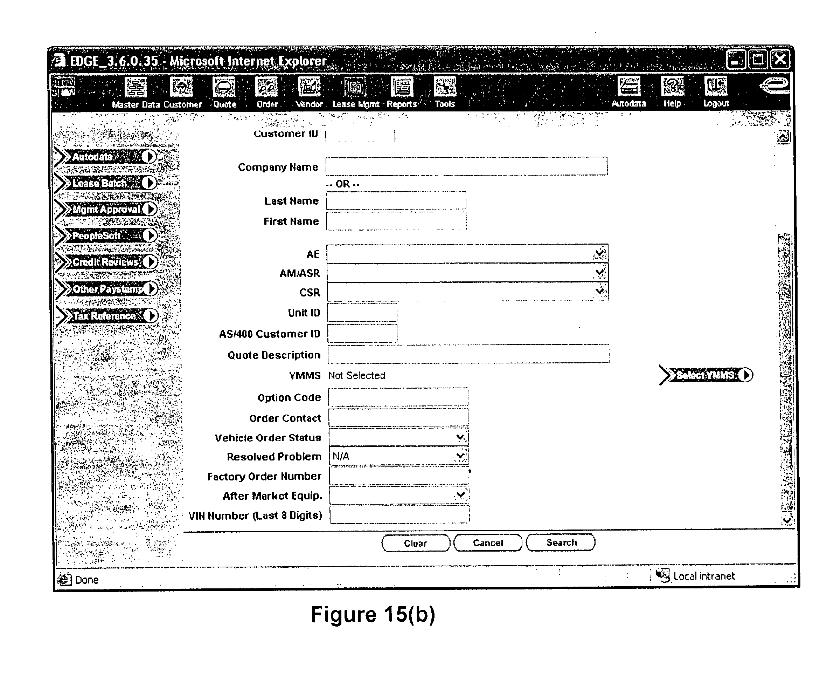

Through field 914, the user can enter a quote number to which the search should be restricted. The quote number will identify a leased vehicle for which a quote has been supplied to a customer. "Search" button 920 is user selectable to call up a screen configured to allow the user to search for quotes of interest by more detailed quote-related criteria, as shown in Figure 14. If even more detailed criteria are needed to obtain quote information, the search screen of Figures 15(a) and (b) can be used.

Through field 916, the user can also enter a unit number to which the search should be restricted. The unit number serves to uniquely identify a leased vehicle. Similarly, through field 918, the user can enter a VIN number (or a partial VIN number such as the last eight digits) to restrict the search to a uniquely identified vehicle.

After entering the appropriate search criteria in the fields of section 906, user selection of "Search" button 922 is effective to query database 120 for all AME paystamp items applicable to the defined search criteria for which user action is needed. "Clear" button 924 is effective upon user selection to clear any data that the user had previously entered in the fields of section 906. The types of AME paystamp items that require user action are preferably "pending" AME paystamp items, which can be classified as AME items for which an unpaid invoice has been received from a vendor, or "failed" AME paystamp items, which can be classified as AME paystamp items for which a previous attempt to upload an AME voucher into the business accounting software (and thereby effectuate payment on the AME item invoice) had failed for some reason.

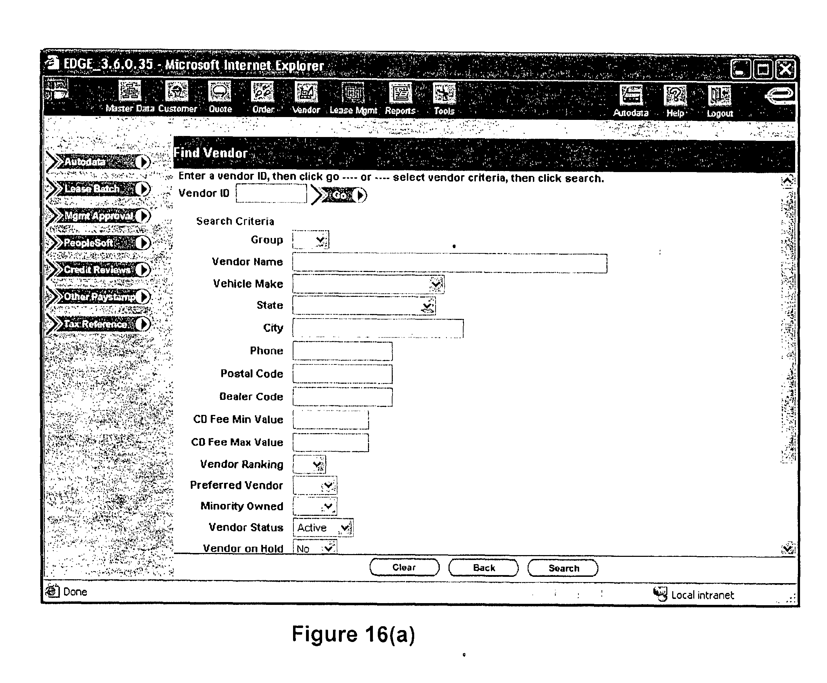

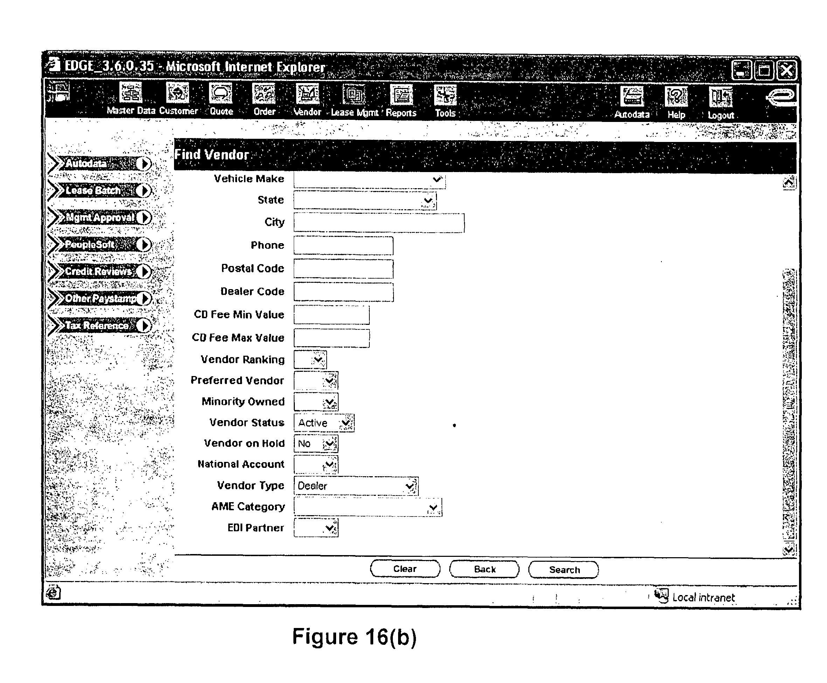

User selection of the "by vendor" tab 904 is effective to display screen 930 of Figure 9(b). From screen 930, the user can control the search parameters in terms of vendors rather than quotes, which may be useful if the user is working on processing AME paystamp items from particular vendors. The search criteria section 906 of screen 930 preferably includes fields 908, 910, and 912 as set forth in connection with Figure 9(a). It is preferred that section 906 also include a vendor ID field 932, a vendor name field 936 and a vendor invoice number field 938 to control AME paystamp search and retrieval. "Search" button 934 can be selected by the user to call up a screen configured to allow the user to search for vendors of interest by more detailed vendor-related criteria, as shown in Figures 16(a) and (b). As with screen 900, user selection of buttons 922 and 924 are effective to perform the search or clear the search terms respectively.

Figure 10 depicts a preferred screen 1000 that is displayed after the user has conducted a search/retrieval operation via pages 900 or 930. Section 1010 of screen 1000 lists the unpaid AME paystamp items retrieved by the search. Each AME paystamp item in section 1010 is listed in a row 1050. Furthermore, section 1010 preferably includes a plurality of columns populated with different types of data describing each listed AME paystamp item. The data in column 1034 preferably identifies the voucher status for each listed AME paystamp item. Preferably, the search and retrieval operation from step 800 of Figure 8 operates to limit the AME paystamp items listed in section 1010 of Figure 10 to only AME paystamp items that are "pending" or "failed". The data in column 1014 preferably identifies the quote number for the leased vehicle to which the listed AME paystamp item is applicable. The data in column 1016 preferably identifies whether the AME order was an NVA order, with an NVA order referring to an order that was placed through a centralized/nationwide ordering network. The data in column 1018 preferably identifies an identifier for the vendor of the listed AME paystamp item. The vendor ID can be displayed as a link to more information about the vendor (such as name, address, telephone number, etc.).

The data in column 1020 preferably identifies the unit number for the leased vehicle to which the listed AME paystamp item is applicable. The data in column 1022 preferably identifies the equipment type that characterizes the AME at issue, and that data in column 1024 preferably identifies the quantity of AME ordered for that leased vehicle. The data in column 1026 preferably identifies the VIN (or a partial VIN such as the VIN's last eight digits) for the leased vehicle to which the listed AME paystamp item is applicable.

The data in column 1028 preferably identifies the price for the listed AME paystamp item that was either billed to the customer or taken into consideration when configuring the customer's monthly lease payment. The data in column 1030 preferably identifies the cost that the fleet manager expected to pay for the listed AME paystamp item. The column 1030 data value is preferably the same as or somewhat less than the column 1028 data, depending on whether the fleet management company was providing the listed AME paystamp item as a pass through or a marked up item. The data in column 1032 preferably identifies the invoice cost for the listed AME paystamp item.

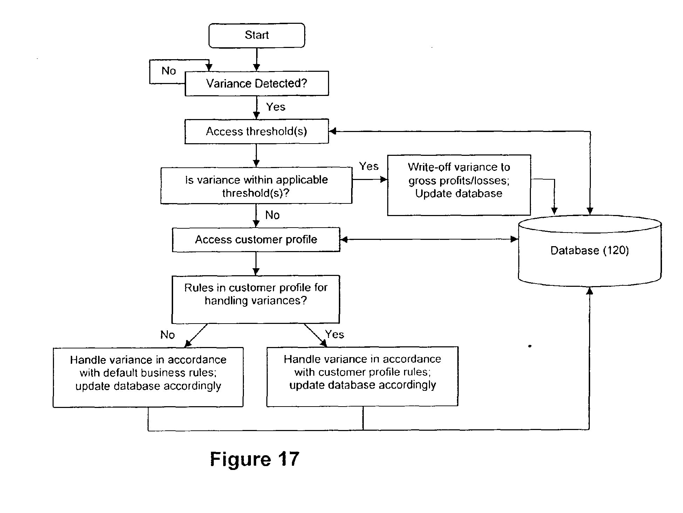

The column 1032 data is preferably entered by a user upon receipt of an invoice from the AME vendor. The value in column 1032 can be defaulted to the expected cost value for that AME item displayed in column 1030. However, this need not be the case. In situations where the invoice cost in column 1032 does not match the expected cost in column 1030, business decisions will have to be made as to how the cost difference should be handled. In a preferred embodiment, a cost difference between column 1030 and column 1032 that is within a predetermined variance will be handled as if a match between column 1030 and column 1032 occurred. A preferred variance value is $50 or 5%, wherein a cost difference that is both less than a $50 difference and less than a 5% difference will be deemed to be a match. It is worth noting that the variance value need not be the same across all segments of the fleet management company. For example, fleet managers in group A of the fleet management company may use a different variance value than fleet managers in group B of the fleet management company. A table stored in database 120 can be used to define each group's variance values. In the event that the invoiced cost in column 1032 is less than the expected cost in column 1030 by an amount that exceeds the variance, a fleet manager will need to make a business decision as to whether the customer should be fully credited for the cost difference, partially credited for the cost difference, or whether the fleet management company should retain the cost difference as additional profit. Further still, it is worth noting that the variance values (and rules for handling the variances as discussed below) can be defined on a customer-by-customer basis in customer profiles, as shown in Figure 17. If the difference between column 1030 and column 1032 exceeds this predetermined variance wherein the invoiced cost is sufficiently greater than the expected cost so as to exceed the variance, then other business decisions will have to be made (primarily, whether to pass the additional cost (or some portion thereof) on to the customer or to take the additional cost as a loss). These business decisions can be made in an automated or partly automated fashion on the basis of customer profiles, wherein each customer profile defines how variances are to be handled for that particular customer. Figure 17 depicts such an example, wherein customers for whom a profile exists with rules that define how variances are to be processed have their variances handled in accordance with the profile's rules. For customers for whom no customer-specific rules are stored, variances can be handled via default business rules- preferably these default business rules write off variances that are within a predetermined tolerance to gross profits or losses and refers variances that exceed the predetermined tolerance to user intervention to identfify what course of action should be taken. Thus, if the invoiced cost is sufficiently variant from the expected cost, additional business decisions will have to be made as to whether the invoice should be disputed with the vendor (wherein the invoiced cost is believed to be too high) or whether the vendor should be contacted to make sure the proper AME items were delivered (wherein the invoiced cost is believed to be either too high or too low). It is also worth noting that a practitioner of the present invention may choose to omit the variance feature wherein these business decisions will have to be made based on any difference between the invoiced cost and expected cost. Further still, it is worth noting that a hierarchy can be defined in the variance handling business rules such that variances are first handled in accordance with a customer profile (if applicable), then handled in accordance with a business group's defined policies (if no customer profile is available), and then handled in accordance with a corporate policy (if no business group policy has been defined).

If a user wishes to create a voucher for a listed AME paystamp item, the user can select the checkbox 1052 in column 1012 associated with that AME paystamp item. Multiple AME paystamp items from the same vendor can be selected in a single voucher submission. However, this need not be the case as business logic can be used to segment voucher submissions with multiple vendors into multiple vouchers, with each voucher being specific to a single vendor. To provide additional identifying information for a voucher, section 1002 lists the applicable group identifier for the user, section 1004 is a field in which the user can enter the invoice number from the vendor's AME invoice, and section 1006 is a field in which the user can enter the invoice date from the vendor's AME invoice.

Furthermore, through field 1008, the user can enter the total invoice amount for all AME paystamp items that have been selected in section 1010. The value in field 1008 can either be user-entered or automatically computed based on the column 1032 invoice values entered in section 1010 for the selected AME paystamp items. The value in field 1008 can also be defaulted to the sum of the column 1032 invoice values entered in section 1010 for the selected AME paystamp items. However, it is preferred that the screen be configured to force the user to manually enter the total amount in field 1008 to ensure that accidental selections of checkboxes 1052 can be detected through a validation process that checks to see if the value entered in field 1008 matches the sum of the column 1032 values for the selected AME paystamp items.

Once the user has selected the appropriate items from section 1010 and entered the appropriate values in sections 1002, 1004, 1006, and 1008, the user can create an electronic AME voucher for automatic submission to the business accounting software via "Create Voucher" button 1036. To create a "Manual Voucher" that will have to be manually keyed into the business accounting software, the user can select "Manual Voucher" button 1038. To export an AME voucher as a file to be transmitted via email, the user can select the "Export" button 1040. The export feature can be useful where a user wishes to forward a particular AME item to another person for his/her consideration. Alternatively, to return to the search screens of Figures 9(a) and 9(b), the user can select the "Back" button 1042.

Returning to Figure 8 and as stated above, at step 802, the user can create an electronic voucher via button 1036 of Figure 10. Upon selection of button 1036, the newly-created voucher is added to a queue (step 806) where it will await upload to the business accounting software as part of a batch of AME vouchers. Alternatively, the queue can be omitted, and vouchers can be uploaded into the business accounting software each time the "Create Voucher" button 1036 is selected. However, in a batch mode of processing, queued vouchers will be uploaded to the business accounting software at scheduled times. As part of this upload, an interface 706 to the business accounting software, as shown in Figure 7, operates to emulate data entry of the queued vouchers into the business accounting software. Pertinent details about this interface software are provided in Exhibit A enclosed herewith.

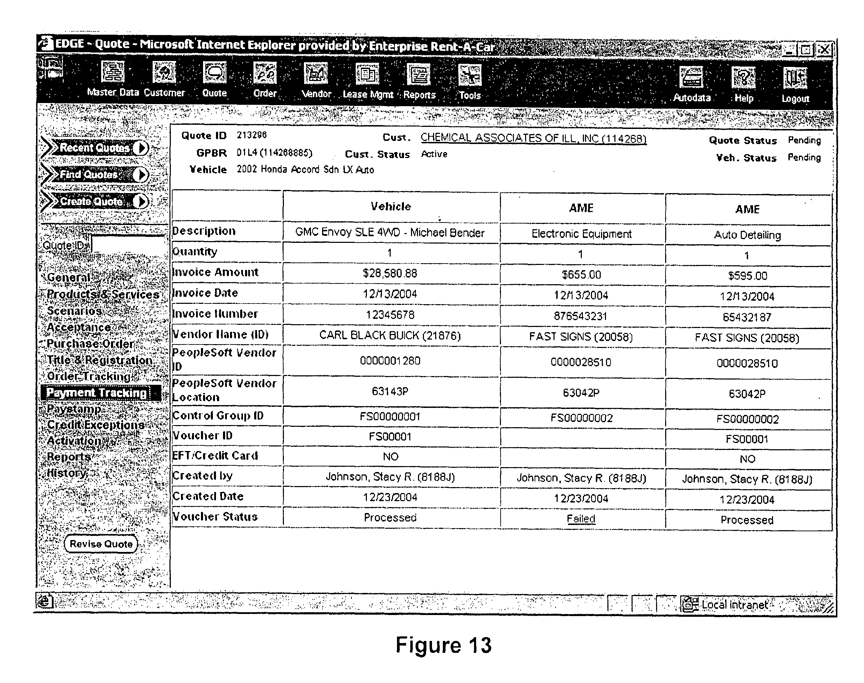

Once the vouchers have been uploaded to and accepted by the business accounting software, arrangements can be made through the business accounting software to pay the AME invoices, and database 120 can be appropriately updated (step 810); for example, by changing the status for the AME paystamp items that were the subject of the uploaded vouchers from "pending" to "submitted". If the upload for a particular AME voucher fails for some reason, the business accounting software can notify the AME processing software of the failure and the status for the AME paystamp item corresponding to that failed voucher can be changed to "failed". Once database 120 has been appropriately updated, subsequent attempts to track the payment status for a quote number of leased vehicle will show the updated status for the AME portion of the quote/leased vehicle, as shown in Figure 13.

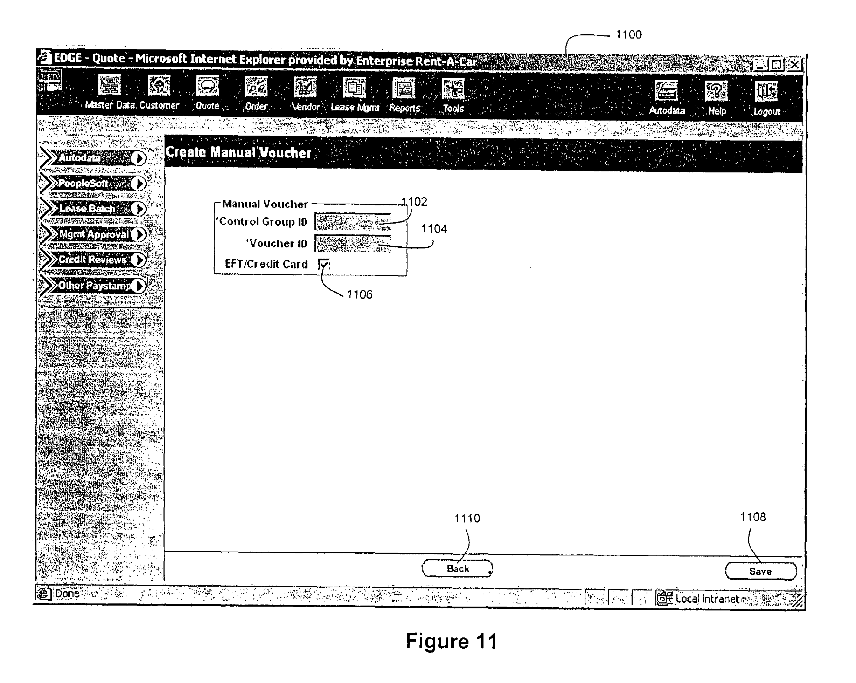

For AME paystamp items in section 1010 whose status is "failed" or for which payment to the vendor needs to be expedited, it is preferred that the user choose the "Manual Voucher" button 1038 (step 804). With a manual voucher, the voucher information is manually keyed into the business accounting software rather than through the automated process of steps 802, 806, and 808 of Figure 8. When manual vouchers are used, it is desirable to also update database 120 with pertinent parameters for the manual voucher provided by the business accounting software. Figure 11 depicts a preferred screen 1100 through which the user can enter these parameters into database 120 for a manual voucher. Included in screen 1100 are preferably a plurality of fields through which the user can further describe the manual voucher, such as a field 1102 in which the user can enter a Control Group ID, which corresponds to a batch number for the business accounting software, a field 1104 in which the user can enter a Voucher ID which identifies a particular voucher and vendor in the business accounting software (which may possibly include multiple AME line items from that vendor), and a checkbox 1106 in which the user can specify whether the invoice was paid via EFT or check. Upon filling out these fields, the user can complete creation of the manual voucher by saving this data to database 120 via "Save" button 1108. Alternatively, the user can choose not to complete creation of the manual voucher by returning to screen 1000 via "Back" button 1110.

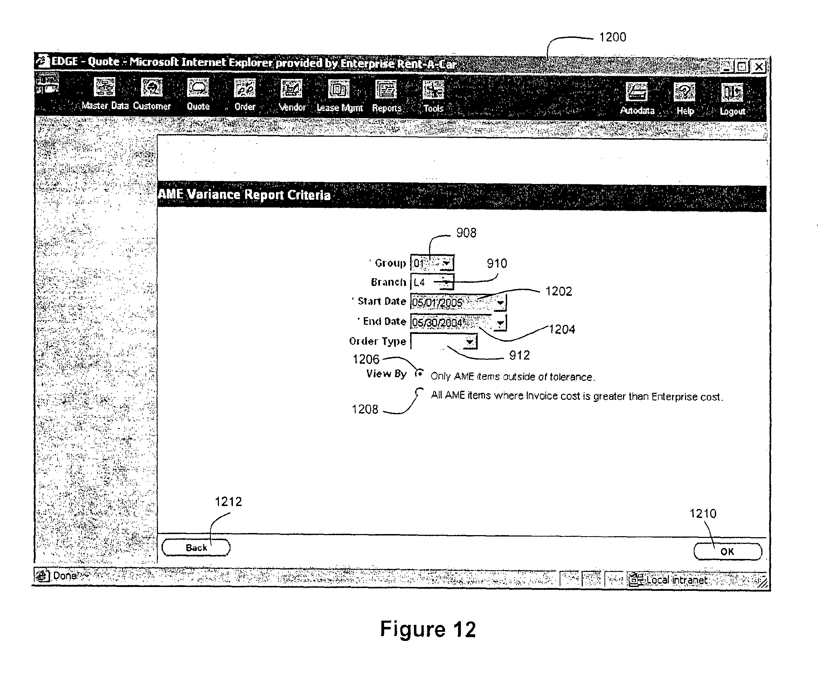

To notify users of potentially problematic AME paystamp items, the AME processing software 702 also preferably includes the capability to generate a report that lists AME paystamp items whose invoiced cost (column 1032 in Figure 10) is different than the expected cost (column 1030 in Figure 10). Such a report can be generated via screen 1200 of Figure 12. Screen 1200 preferably includes a plurality of fields through which the user can refine the search for aberrant AME paystamp items. Fields 908, 910, and 912 of Figure 12 preferably function as explained in connection with Figures 9(a) and 9(b). Through fields 1202 and 1204, the user can specify a start date and end date by which to limit the search for aberrant AME paystamp items to AME paystamp items that were last processed within a given date range. The user can further specify the aberrant AME paystamp items that will be listed on the report via radio boxes 1206 and 1208, by which the user can choose to list (a) only the AME paystamp items outside the variance (via 1206) or (b) all of the AME paystamp items whose invoiced cost is different than the expected cost (via 1208). User selection of button 1210 is effective to create the report. If the user does not wish to create a report, then button 1212 can be selected.

The report generated upon selection of button 1210 is preferably a spreadsheet with data for the applicable AME paystamp items listed in the following columns: (a) group, (b) branch, (c) quote number, (d) AME equipment type, (e) AME description, (f) customer price, (g) expected cost, (h) invoiced cost, (i) cost difference between expected cost and invoiced cost, (j) percent difference between expected cost and invoiced cost, (k) an identifier for whether the difference is outside the predetermined variance, (1) the predetermined variance amount, (m) the predetermined variance percentage, (n) the vendor identifier, (o) the vendor name, (p) the customer identifier, (q) the customer name, (r) the name of account manager for that customer, (s) the name of the customer service representative for that customer, (t) the order type, (u) the name of the person who processed/created the voucher (if applicable), and (v) the date on which the voucher was processed (if applicable).

Alternatively, the results of the search conducted after the user has selected button 1210 can be displayed in a manner similar to the AME paystamp items listed in screen 1000 of Figure 10.

From an aberrant AME paystamp item report that was generated through screen 1200, fleet managers can identify problematic issues in a timely manner, which may be critical in maintaining good rapport with customer and vendors. Exhibit B provides additional details about the AME invoiced cost/expected cost variance reporting feature of AME processing software 702.

While the above example has been described in connection with cost items that are AME paystamps, it should be understood that the processing within Figure 6 for handling vehicle paystamps, LT&T paystamps, or any other cost items could also be handled in the manner described in connection with Figures 7-16(b).

It is also worth noting that an interface with the business accounting software 710 can also be used by the lease management software executed by server 102 to obtain direct debit data for customers who make monthly and other payments via direct debit. After pulling the appropriate direct debit information from the business accounting software, the lease management software defines a schedule for each direct debit transaction that is performed by the business accounting software.

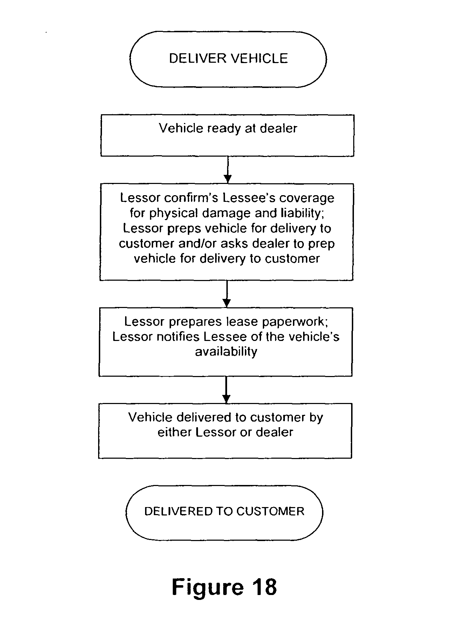

Figure 18 depicts an exemplary flow for the stages extending from vehicle delivery to lessor through the vehicle delivery to customer stage. As can be seen, this flow generally involves confirming the lessee's coverage for physical damage and liability and preparing the vehicle for delivery to the customer.

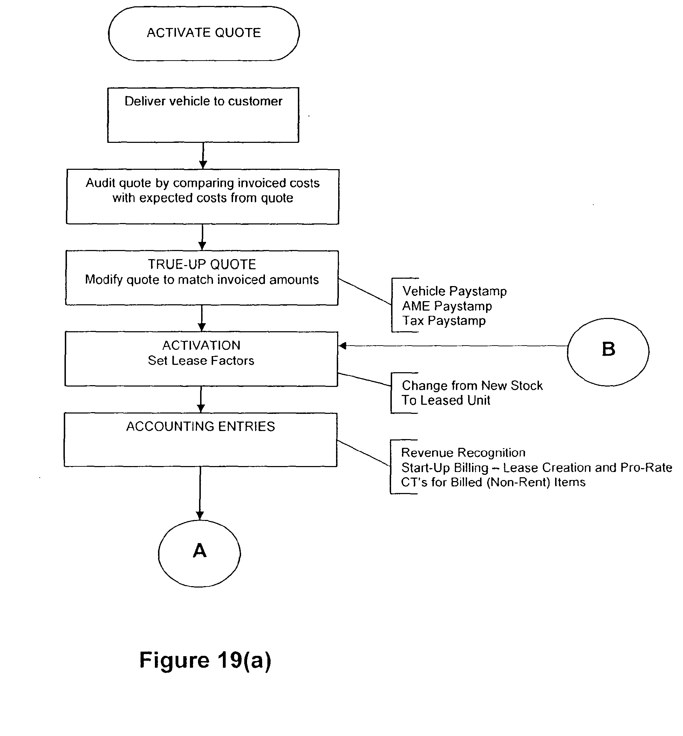

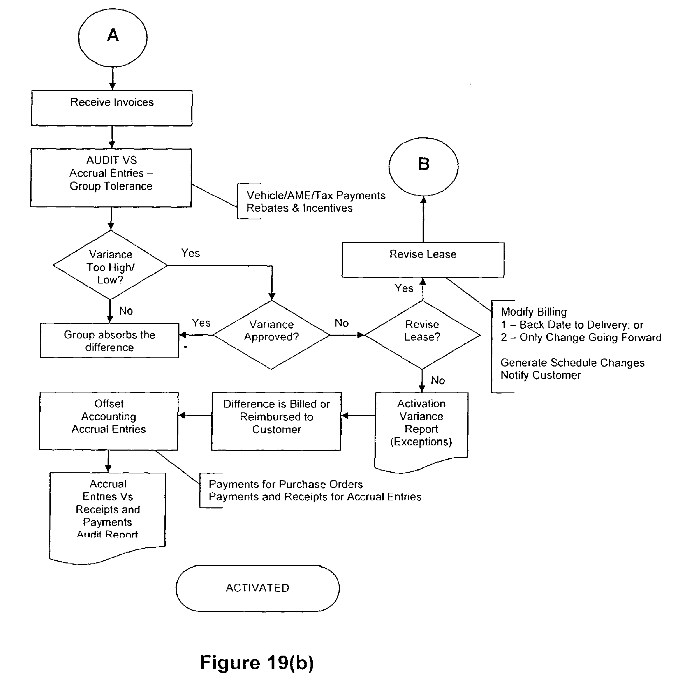

Figures 19(a) and (b) depict an exemplary flow for the stages extending from quote activation through quote activated. As an initial step in this process, a "true up" audit between the lease quote and the invoice cost amounts (vehicle paystamp, any AME paystamps, LT&T paytamps, etc.) is performed. Depending on the outcome of this "true up" comparison, the quote may be modified to correspond with the actual invoiced costs. Next, the lease is activated and appropriate entries are made in database 120 to initiate billing and revenue recognition.

Thereafter, as shown in Figure 19(b), when invoices related to the lease continue to be received post activation, another audit is performed to compare the invoiced costs with the quoted costs. The flow of Figure 17 explains this aspect of the flow of Figure 19(b) in greater detail. If necessary, the lease is revised to accommodate a new cost that will be charged to the customer.

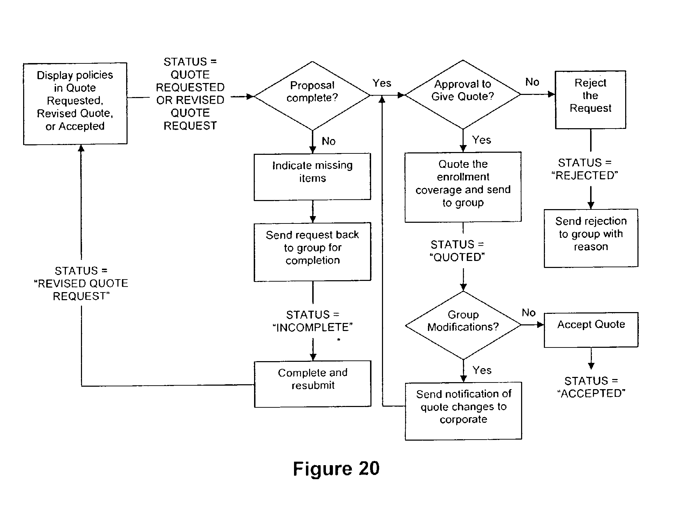

Figure 20 illustrates a preferred flow for obtaining supervisory approval for customer enrollment in a physical damage and liability program offered by the lessor. Before a proposal for enrollment is extended to the customer, it is preferably reviewed by appropriate supervisors within the lessor's business organization. This process may run during the "maintain unit" stage if the enrollment occurs after activation, or it can be at an earlier time in the leasing lifecycle. The flow of Figure 20 is preferably carried out by interactions among users via a plurality of GUIs.

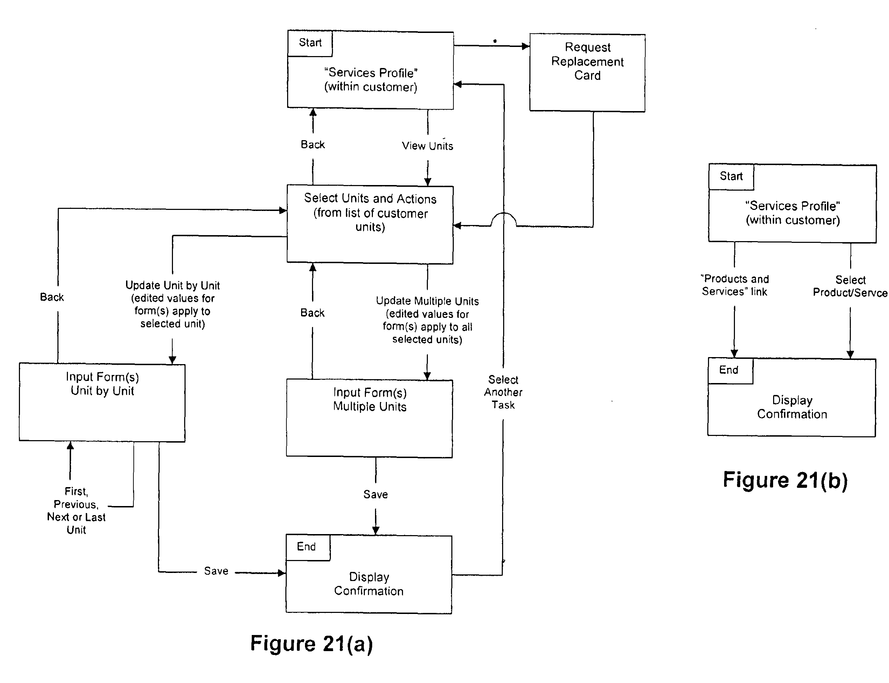

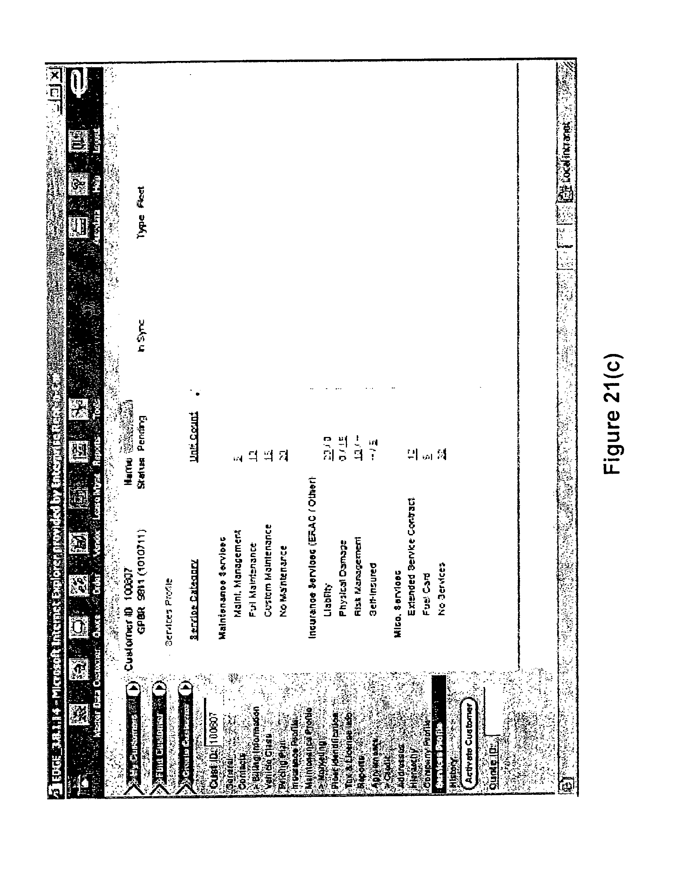

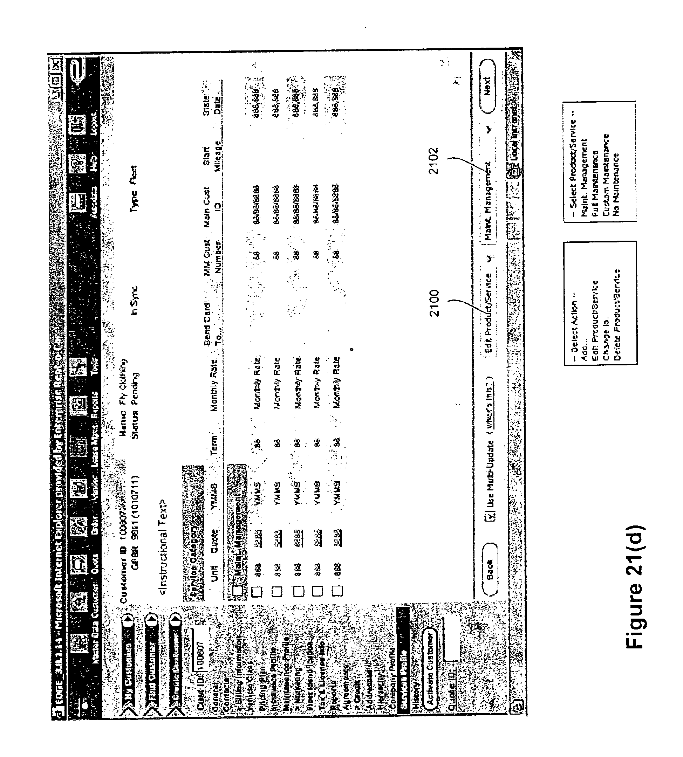

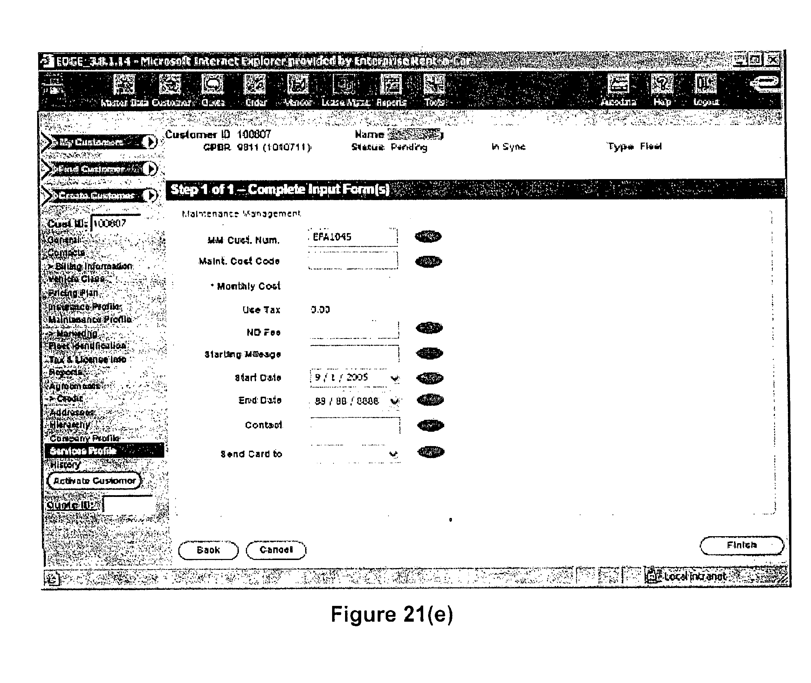

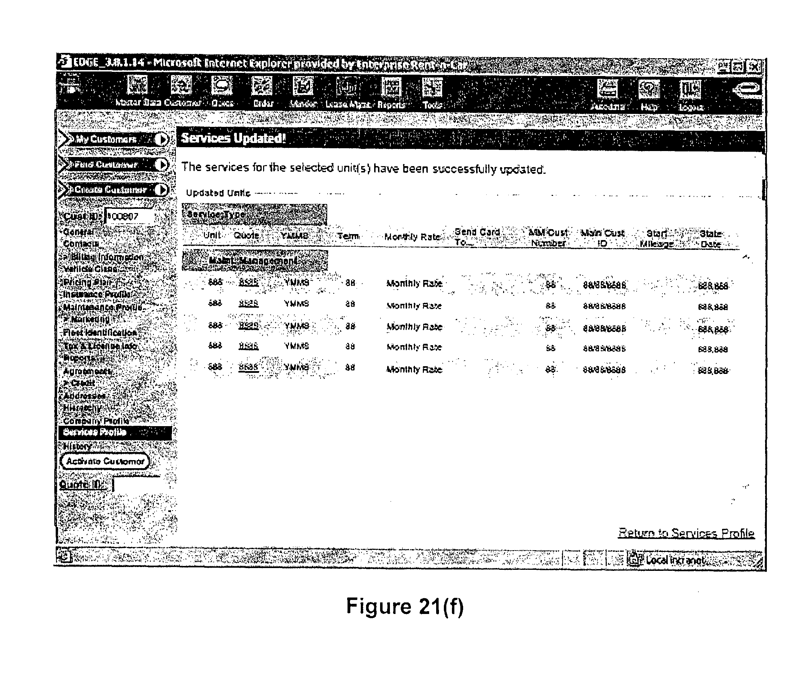

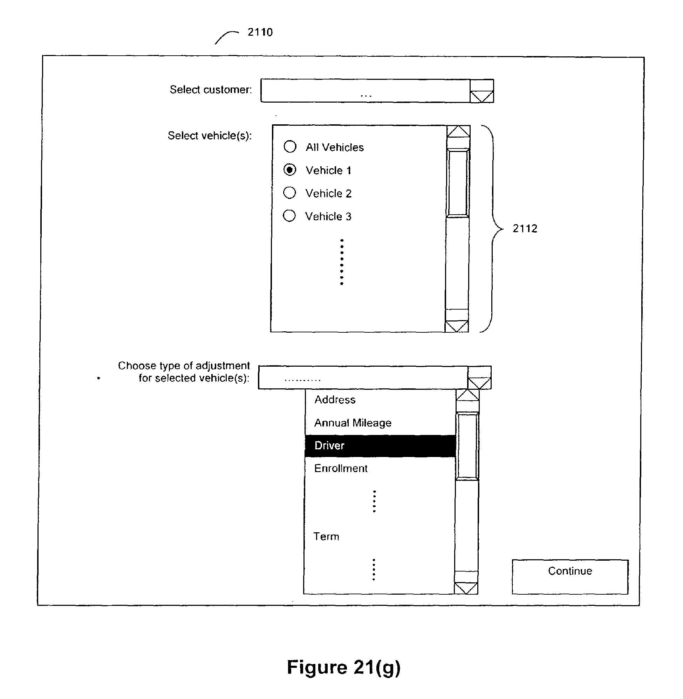

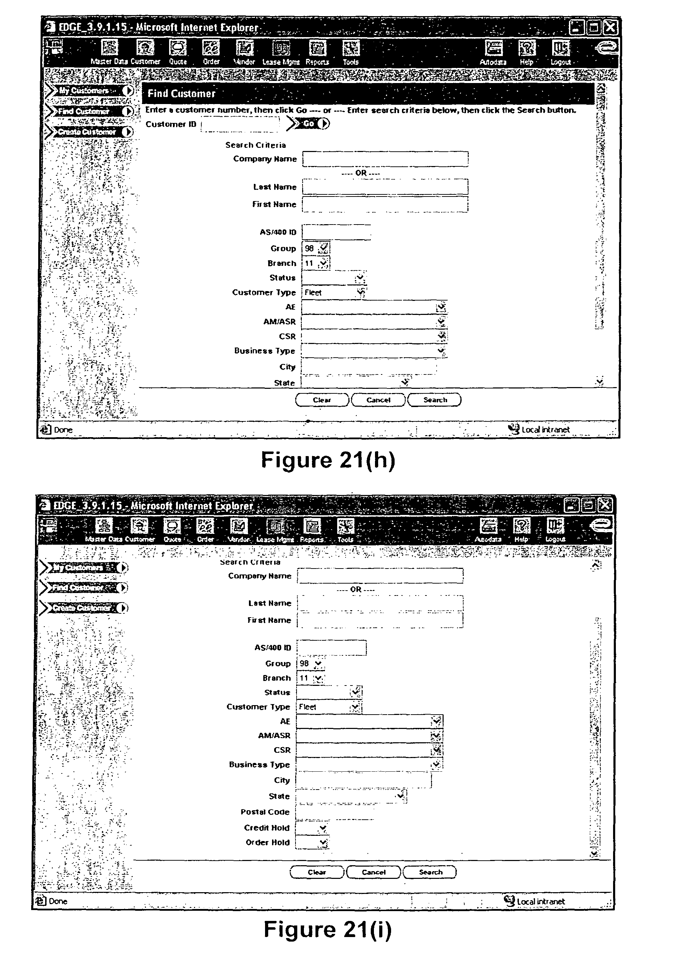

Once a lease has become activated, it may become necessary for fleet managers to perform a variety of maintenance actions thereon to account for new developments and changed circumstances with the vehicle and/or customer. Figures 21(a)-(g) illustrate exemplary high level flows and sample GUIs for this process. Figure 21(a) depicts a flow for adding/changing/deleting a service for one or more vehicle leases after specifying the customer for whom the maintenance action will be performed. As part of this process, the user needs to select the leased vehicles and the maintenance action types that will be performed. The maintenance actions can be performed on a leased vehicle-by-leased vehicle basis or can be performed on multiple leased vehicles at once. Figure 21 (b) depicts a flow for adding/changing/deleting a service for one or more vehicle leases after specifying a quote for which the maintenance action will be performed. Figure 21(c) displays a GUI that summarizes a customer's leased vehicle fleet and provides vehicle counts for that fleet broken down by the maintenance services, physical damage and liability coverages, and miscellaneous services that are applicable to that fleet. Preferably, the listed vehicle counts that are shown in Figure 21(c) serve as links to a GUI through which a user can selectively perform maintenance actions on one or more leased vehicles. For example, user selection of the "5" link in the maintenance management row of the table of Figure 21(c) will cause the GUI of Figure 21(d) to be displayed. Figure 21(d) lists individually lists the leased vehicles that made up the vehicle count selected by the user from the table of Figure 21(c). The list of Figure 21(d) also displays pertinent data about those vehicles' maintenance management attributes. Through the checkboxes adjacent each listed vehicle, the user can selectively choose one or more vehicles upon which a maintenance action will be simultaneously performed. Also, via the topmost checkbox adjacent the maintenance management header, the user can select all of the listed vehicles without the need to individually select each listed vehicle. From the GUI of Figure 21(d), the user can access drop down menus 2100 and 2102 to select the maintenance action that will be performed on the vehicles selected via the checkboxes Upon user selection of the "next" button shown in Figure 21(d), the GUI of Figure 21(e) is displayed, which depicts a GUI that allows the user to input data for performing the selected maintenance action. Figure 21(f) depicts a confirmation GUI that is displayed after the user has successfully performed the selected maintenance action.

Figure 21(g) depicts an exemplary alternative GUI 2110 for initiating the performance of a user-selected maintenance action on one or more user-selected customer vehicle leases. Within the "select customer" field of GUI 2110, the user can select the customer for whom the maintenance action will be performed. A drop down menu can be provided (or a "customer search" tool (see Figures 21(h) and (i))) to facilitate the user's selection of a customer.

After the customer has been selected, section 2112 of GUI 2110 preferably lists all vehicle leases for the selected customer. Preferably, the listed vehicle leases for the customers are limited to activated vehicle leases, although this need not be the case. The activated vehicle leases on the list are preferably displayed in a manner that allows the user to select one or more listed vehicle leases simultaneously. For example, a checkbox can be provided adjacent to each listed vehicle lease. Preferably, a checkbox is also provided in section 2112 that allows the user to select all of the listed vehicle leases.

Once the user has selected the appropriate vehicle lease(s) for which a maintenance action will be performed, the user can then choose the type of maintenance action to be performed thereon. A list of available maintenance action options can be presented via a drop down menu or a side bar (not shown) that lists maintenance actions either individually or hierarchically. After the user has selected the appropriate maintenance action, the user can select the "continue" button to initiate the performance of the selected maintenance action on the selected one or more vehicle leases to thereby launch GUI(s) configured to interact with the user on the selected maintenance action.

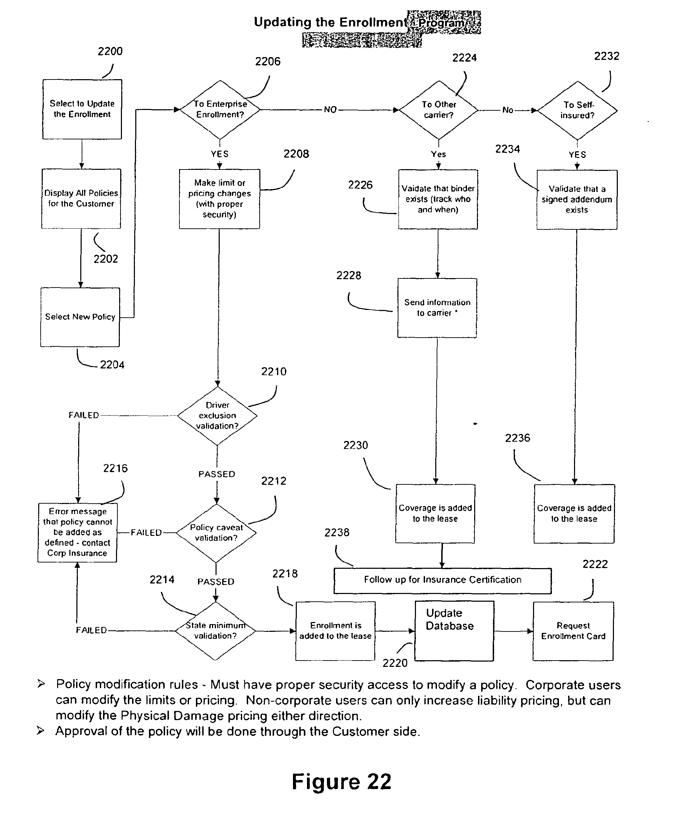

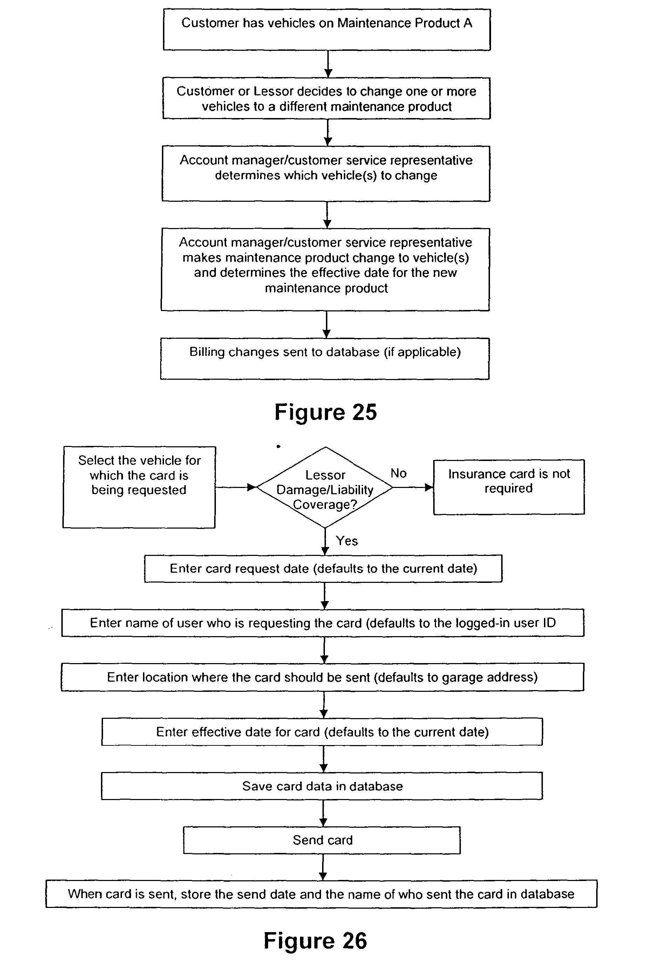

Figure 22 depicts a preferred flow for a maintenance action relating to changing the physical damage and liability program in which the customer is enrolled. The process of Figure 22 may run as part of a maintenance action when a customer who is enrolled in an physical damage and liability program provided by the lessor chooses to change physical damage and liability programs or when a customer who was not previously enrolled in a lessor-provided physical damage and liability program requests to become so enrolled. At step 2200, the user can select through one or more GUIs the applicable customer and vehicle(s) to which the enrollment update is applicable. At step 2202, one or more GUIs preferably displays all applicable physical damage and liability program for that customer. In many instances, a customer will have some leased vehicles covered under Physical Damage and Liability Program A while others are covered by Physical Damage and Liability Program B and so on, wherein the coverage can be programs through the lessor or insurance from a third party insurance carrier or self-insurance. At step 2204, the user selects a new policy for one or more vehicles leased by the customer. This new policy may either be a switch to one of the existing policies for the customer or to a new policy altogether. At step 2206, the system checks whether the enrollment adjustment is an adjustment to a lessor-provided physical damage and liability program. If so, at step 2208, the terms of coverage are defined and at step 2210, the driver(s) for the one or more vehicles are checked against a stored list of drivers that are to be excluded from coverage. If a proposed driver is found on this list, an error message is provided at step 2216 that the requested enrollment cannot be provided. If no driver exclusion exists, then other aspects of the proposed enrollment adjustment are validated for compliance with physical damage and liability program coverage. For example, the leased vehicle is checked to determine whether it is excluded from the coverage of the selected program. Lastly, the program is validated at step 2214 against the applicable state minimum damage and liability coverage requirements. Each of steps 2010, 2012, and 2214 are preferably performed automatically by predetermined business rules. If tests 2210-2214 are passed, then at step 2218, the proposed enrollment is added to the customer lease and the database 120 is updated accordingly at step 2220. Thereafter, at step 2222, an enrollment card is requested. Figure 26 depicts the preferred flow for step 2222.

Returning to Figure 22, if the enrollment adjustment is not a lessor-provided physical damage and liability program, step 2224 checks whether the change in enrollment is to an insurance policy of an insurance carrier. If so, step 2226 operates to validate that this third party insurance binds insurance to the leased vehicle. This validation can be recorded on a GUI or the like after a user receives adequate proof of whether a binder provided by an insurance agent exists. Next, at step 2228, evidence of title and instructions that identify the lessor as an additional insured and a loss payee on the policy and how to handle payments are sent to the applicable insurance carrier. Then, at step 2230, the change in coverage is added to the lease and database 120 is updated accordingly.

If lessor-provided physical damage and liability coverage or third party insurance is not applicable, then step 2232 operates to determine whether the customer's enrollment adjustment is to self-insurance. If so, step 2234 operates to validate that a signed addendum or other appropriate documentation that describes the self-insurance exists for the leased vehicle. Preferably this step is performed by the user who obtains a copy or other evidence of the self-insurance. Preferably, a credit check is run against the customer's credit profile to assess whether this self-insurance is sufficient and whether the self-insurance should be approved by the lessor. Then, at step 2236, presuming that the self-insurance has been approved, the change in coverage is added to the lease and database 120 is updated accordingly.

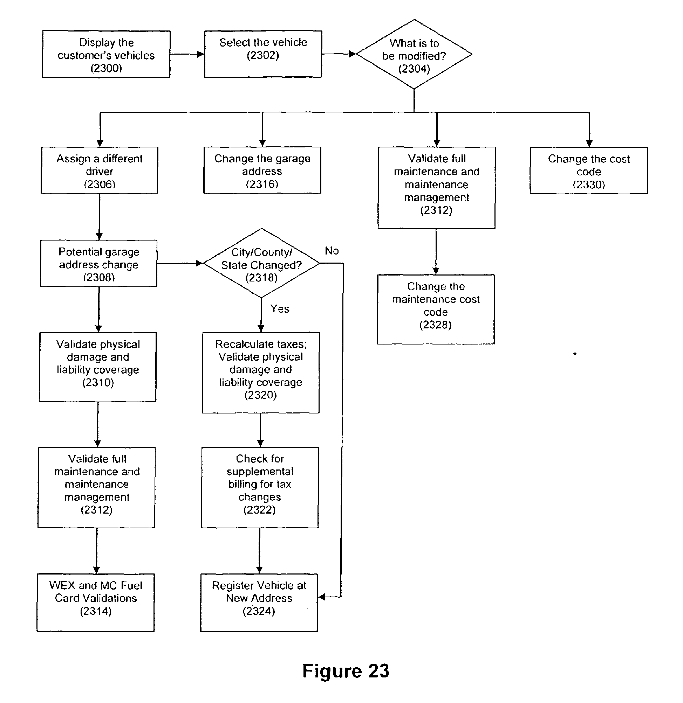

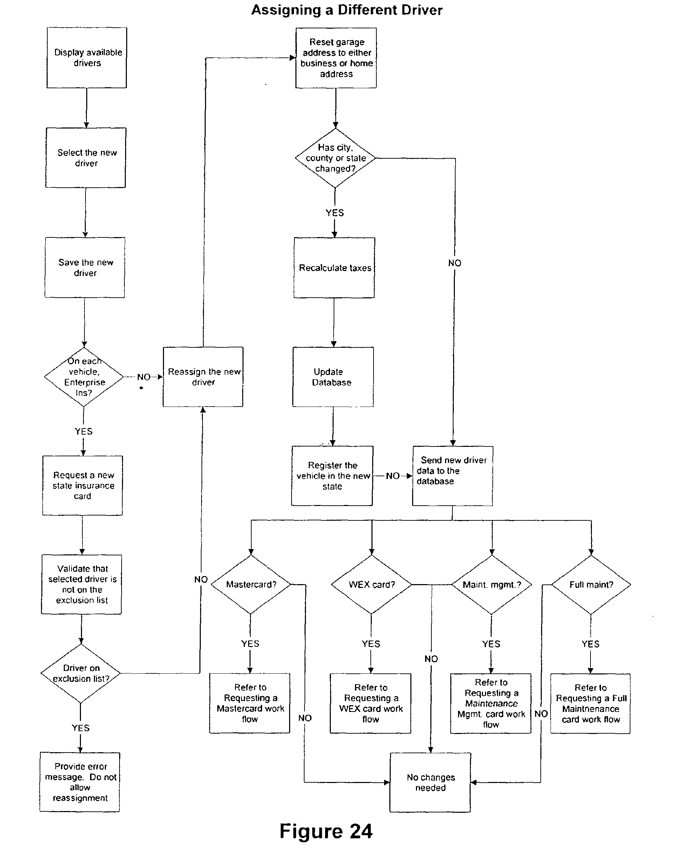

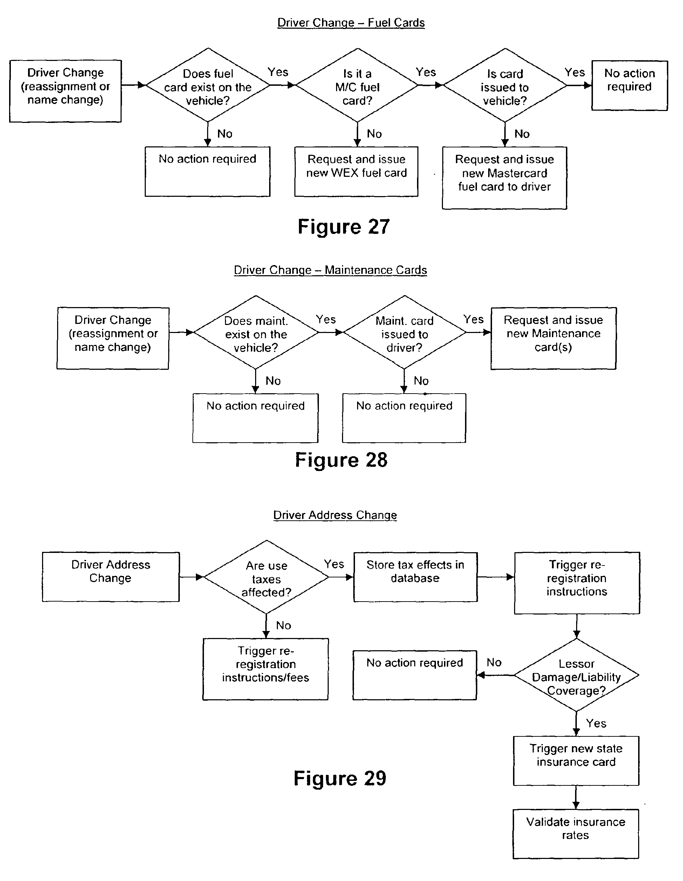

Figure 23 depicts a preferred flow for handling maintenance action related to changes to the driver, garage address, maintenance cost code, or cost code for a leased vehicle, with steps 2300, 2302 and 2304 corresponding to the actions performed via GUI 2110 of Figure 21(g). If a driver for a leased vehicle is being changed, the flow from step 2306 is followed. With driver changes, validations against physical damage and liability coverage, the garage address, maintenance products, and fuel cards are performed at steps 2308, 2310, 2312, and 2314. If the garage address for a leased vehicle is being changed, then the applicable LT&T conditions are validated and updated as necessary at steps 2318, 2320, 2322, and 2324. If the maintenance product for the leased vehicle is being changed, then at step 2326, validations against the updated maintenance product are performed, and the database 120 is updated as appropriate at step 2328. If necessary, a new maintenance card may need to be issued to the driver. If the cost code for the leased vehicle is being changed, then the database 120 is updated appropriately at step 2330. The cost code is an identifier provided by the customer to be included on invoices to the customer so that the customer can efficiently process the invoice. Figure 24 provides a more detailed view of the process for assigning different drivers to a leased vehicle. Figure 29 provides a view of the process for changing the driver's address for a leased vehicle, which is similar in nature to the process of changing the garage address. Often times the garage address will be the same as the driver address, but this need not be the case. The garage address identifies the address where the leased vehicle is located (typically overnight) while not in use. In some instances, the garage address may be a parking lot or parking garage maintained by the lessee's business organization rather than the driver's home address.

Figure 25 depicts a preferred flow for changing a maintenance product for a customer vehicle lease. Examples of maintenance product options include full maintenance, customer maintenance, and maintenance management. With full maintenance, the customer's monthly lease rate takes into account a set maintenance budget on the leased vehicle and the customer may service and maintain the leased vehicle as needed. With custom maintenance only selected service and maintenance is paid for by the lessee. With maintenance management, the lessor provides monthly statements and reports to the customer that itemize the service/maintenance performed on a leased vehicle and the customer makes payments to the lessor based on these statements. Through one or more GUIs, the user will select the new maintenance product for the lease vehicle(s) and assign the appropriate effective date. The updates to the maintenance product will then be stored in database 120 and communicated to the business accounting software if necessary. A request for a new maintenance card as described in Figure 28 may also be necessary.

Figures 27 and 28 provide additional details for the processes of requesting fuel cards and maintenance cards respectively for leased vehicles as they arise out of maintenance actions for leased vehicles.

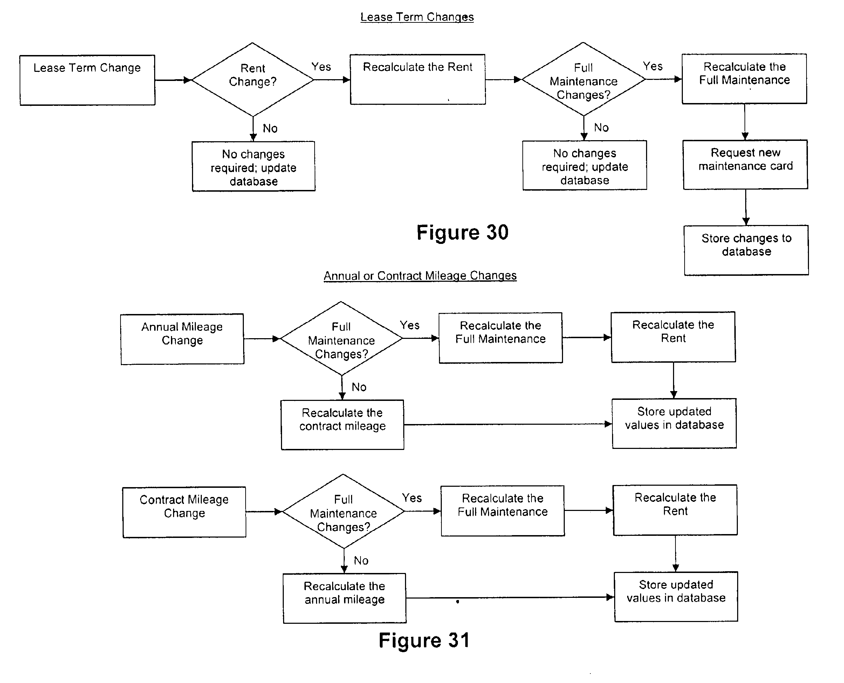

Figure 30 illustrates a preferred flow for implementing changes to the term of a lease. Through one or more GUIs, the user can either enter a later or earlier end date for one or more customer leases. If the term adjustment triggers changes in the monthly payment and/or maintenance charges under the lease, the appropriate changes are entered into database 120.

Figure 31 illustrates a preferred flow changing the mileage parameters of a lease. One flow relates to changes in the annual mileage under a lease, while the other flow relates to changes in the contract mileage under a lease. In both cases, where the adjustments trigger corresponding changes in the maintenance charges and/or monthly payment, these values are automatically recalculated, stored in database 120, and communicated to the business accounting software.

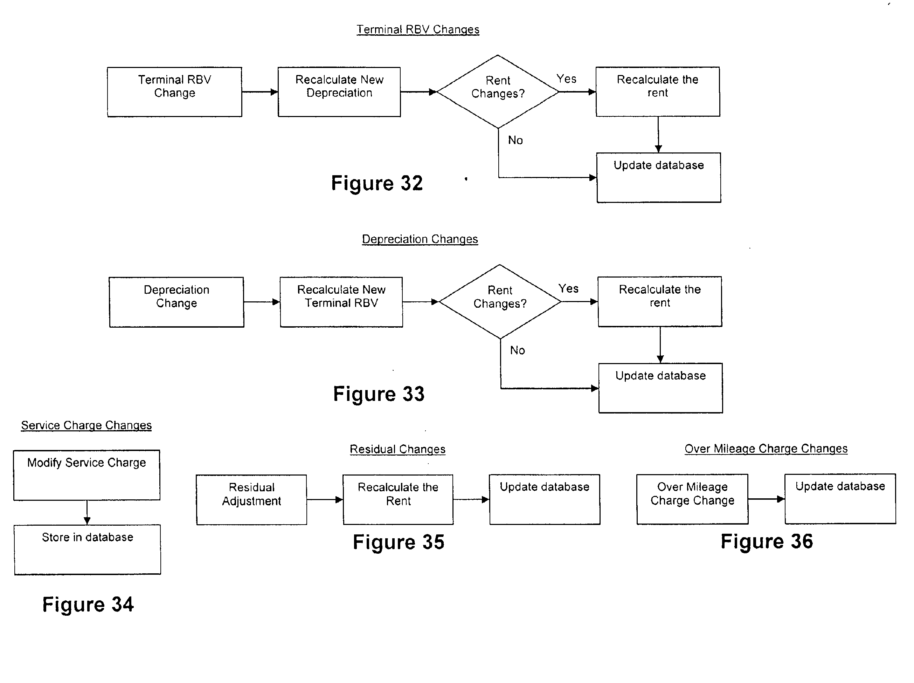

Figure 32 illustrates a preferred flow for adjusting the terminal RBV for a lease. Adjustment to the terminal RBV will trigger a recalculation of the depreciation, which in turn may trigger an automated change in the monthly payment under the lease, as shown in Figure 32. Any changes are stored in database 120 and communicated to the business accounting software.

Figure 33 illustrates a preferred flow for adjusting the depreciation applicable to a lease, which will in turn trigger a recalculation of the terminal RBV. Any changes to the monthly payment under the lease that are triggered are computed automatically, stored in database 120 and communicated to the business accounting software.

Figure 34 illustrates a preferred flow for adjusting the service charges for a lease. Service charges are an end of lease term transaction charge related to the lessor's paperwork, transport, sale, and disposal costs that arise upon the expiration of the lease. It may be the case that the expected service charge to be applicable to a lease needs to be modified because more difficulties were encountered than expected during disposal. Changes in service for the leased vehicle(s) are stored in database 120 and communicated to business accounting software if necessary.

Figure 35 illustrates a preferred flow for entering a residual adjustment for an activated customer vehicle lease. Such adjustments may be necessary for closed end leases needing a lease term extension. The adjustments to the residual may in turn trigger changes in the customer's monthly payment, which in turn are automatically calculated, stored in database 120, and communicated to business accounting software if necessary.

Figure 36 illustrates a preferred flow for entering a change in the overmileage charge applicable to a customer vehicle lease. Such changes may be necessary for closed end leases.

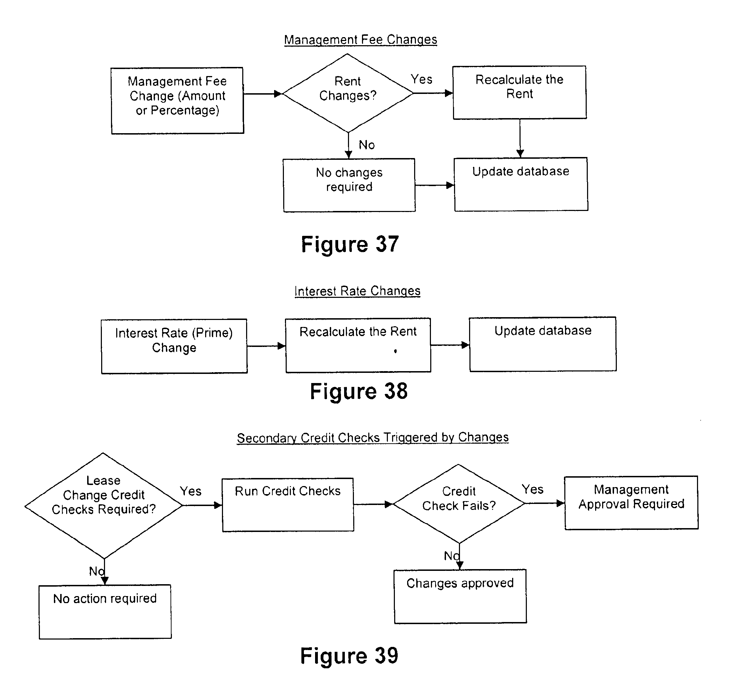

Figure 37 illustrates a preferred flow for entering management fee changes for an activated customer vehicle lease. This fee preferably represents a fee charged by the fleet management company for providing service to the customer throughout the lifecycle of the lease. In cases where the change in the management fee triggers a change in the customer's monthly payment, the new monthly payment is automatically calculated, stored in database 120, and communicated to business accounting software if necessary.

Figure 38 illustrates a preferred flow for entering changes in the interest rate applicable to a customer vehicle lease. Such changes may be necessary for variable rate leases that are affected by interest rate fluctuations, particularly fluctuations in the prime interest rate. After the user has entered the new interest rate, the system preferably automatically recalculates the monthly payment if necessary. Thereafter, the recalculated monthly payment is preferably stored by the system in database 120 and communicated to business accounting software.

Another validation procedure that may become necessary as a result of maintenance actions performed on activated customer vehicle leases is a secondary credit check to verify whether the fleet management company wants to implement maintenance actions that will result in more credit being extended to the customer. Examples of circumstances that may trigger a secondary credit check include a customer that seeks to expand its fleet, a customer that acquires another company with its own fleet needs, a yearly credit review process, or a customer whose payment history begins to show signs of financial difficulties. The actual credit check is preferably performed as described in commonly-owned pending patent application serial no. 11/090,400, filed March 25, 2005, entitled "Client-Server Architecture for Managing Customer Vehicle Leasing", the entire disclosure of which has been incorporated by reference herein.

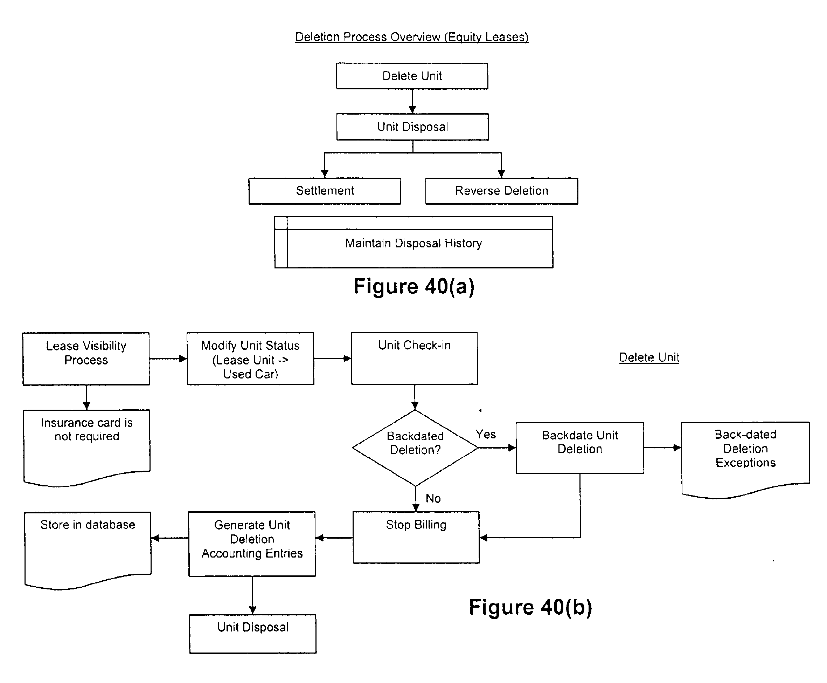

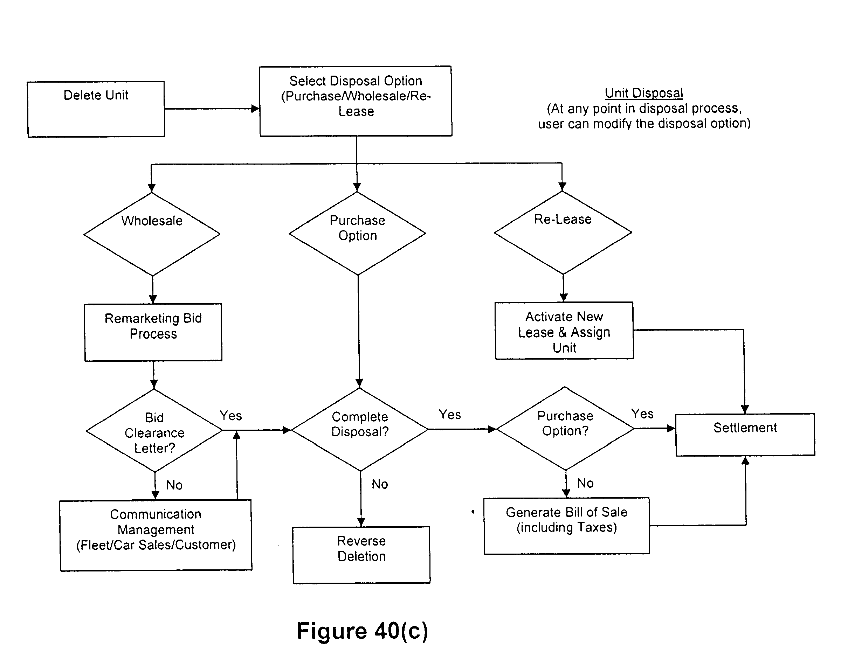

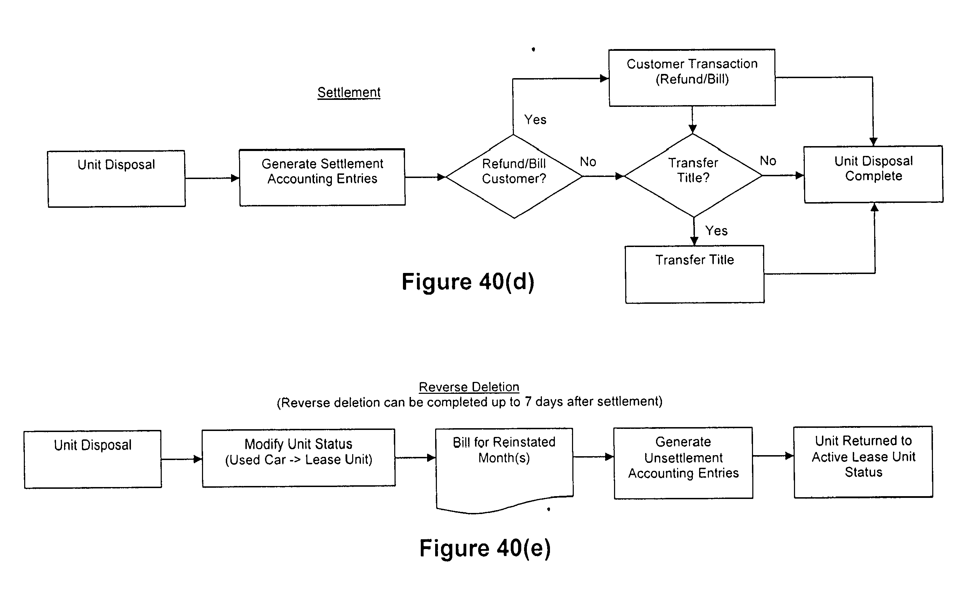

Figures 40(a)-(e) depict exemplary flowcharts for the delete leased vehicle stage through the terminate lease stage. Figure 40(a) depicts a high level view of the delete process, wherein the leased vehicle is deleted, or taken off the list of active vehicle leases. Deletion further stops monthly lease billings to the customer for that vehicle. Next, the vehicle is disposed, often through a sale by the lessor to a third party or, in some cases, the customer. Disposal involves the finding of a buyer who agrees upon a sale price for the vehicle. Upon disposal, either a settlement or a reverse deletion operation occurs. Figure 40(b) provides an exploded view of the "delete unit" operation. Figure 40(c) provides an exploded view of the "unit disposal" operation. Figure 40(d) provides an exploded view of the "settlement" operation. The settlement process preferably involves a calculation of any end of lease term fees that are to be billed to the customer. Figure 40(e) provides an exploded view of the "reverse deletion" operation. A reverse deletion relates to re-assigning the lease status of the vehicle back to the customer once again.

Another aspect feature of the preferred lease management system disclosed herein relates to an improved ability to identify the taxes and surcharges that are applicable to a customer vehicle lease. Taxes and surcharges for leased vehicles are often a complex patchwork of rules that vary by taxing jurisdiction. A variety of third party vendors provide data tables that identify taxes and surcharges for vehicle leases as they vary by taxing jurisdiction; for example, such tax reference data is available from vendors such as Vertex, Inc. of Berwyn, PA, Taxware, LP of Salem, MA, and RIA (a business unit of The Thomson Corporation of New York, NY. Such a table is preferably stored in database 120 or accessible to the lease management software executed by servers 102. Through access to such a table, the lease management software of the preferred embodiment can determine the applicable taxes and surcharges for a given customer vehicle lease on the basis of geographic identifiers for that least that tie the location (typically the "garage address" of the lease) to the appropriate taxing jurisdiction. A preferred geographic identifier for this process is the postal or zip code for the lease's garage address. In instances where a postal code spans multiple taxing jurisdictions, then the municipality of the lease's garage address can be used. It is worth noting however, that other geographic identifiers can be used, such as municipality alone, street address, etc.

The determination of the applicable taxes and surcharges can be performed automatically for maintenance actions when the pertinent geographic identifiers for the lease are already known by the system. An example of a maintenance action where automatic recalculation of taxes and surcharges may occur is a "change garage address" maintenance action, as previously described.

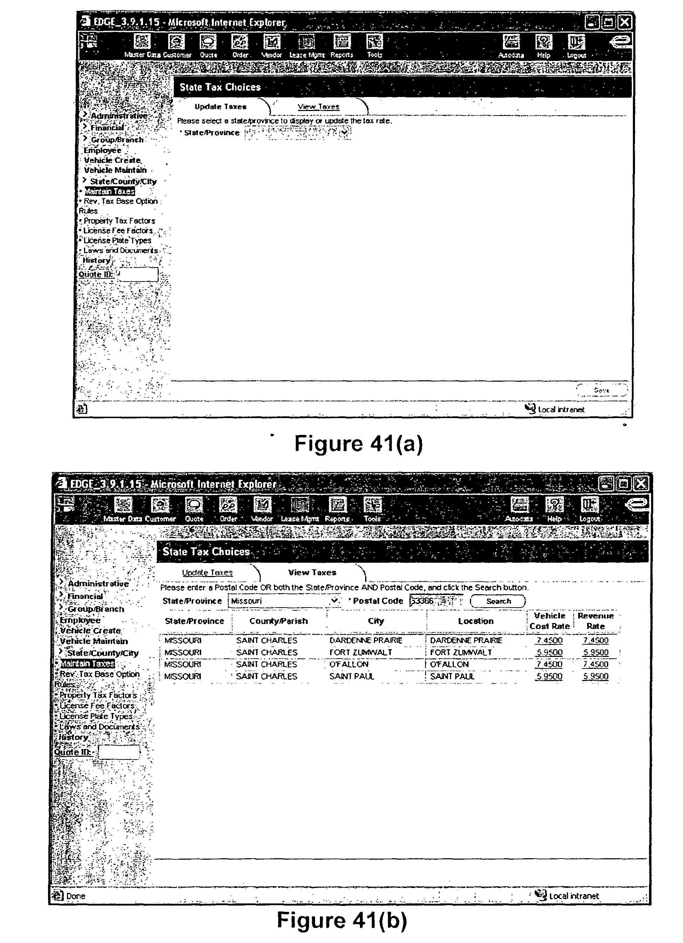

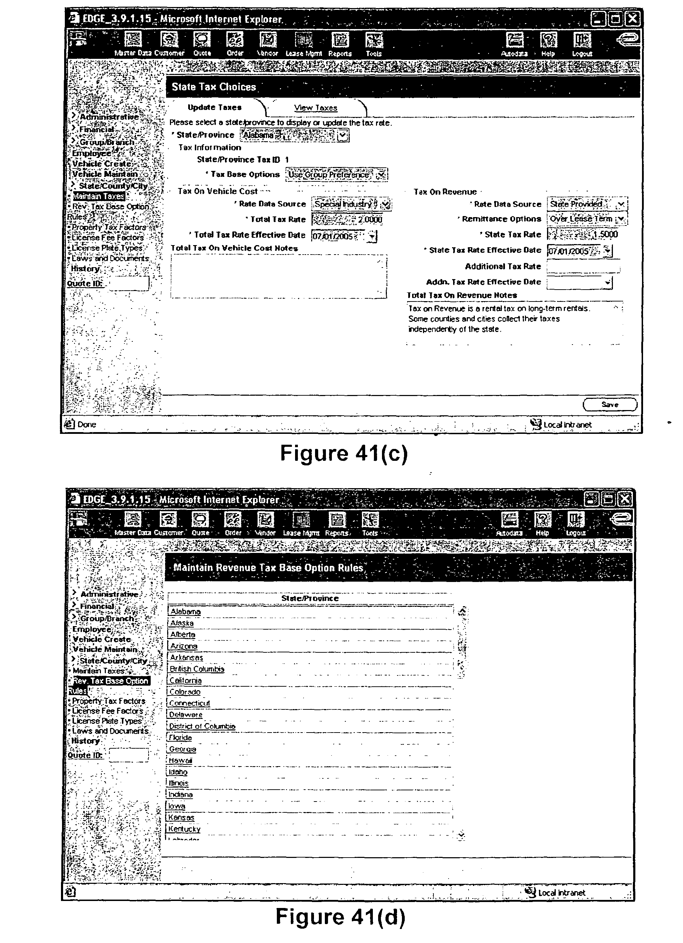

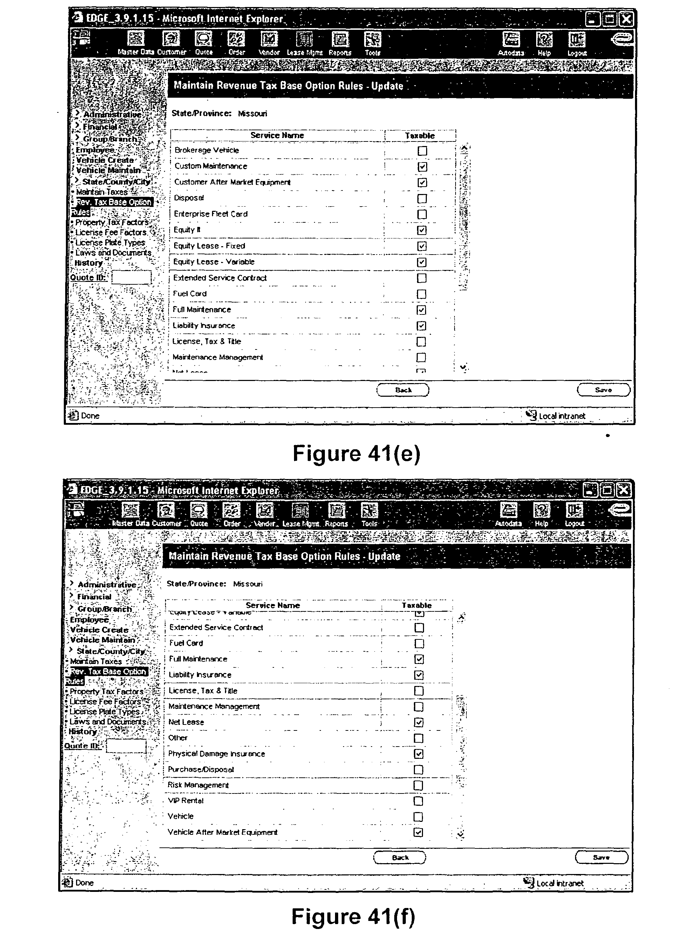

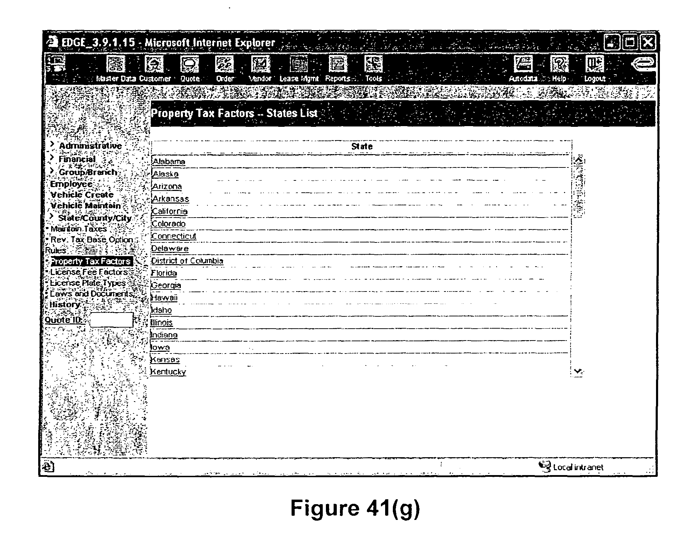

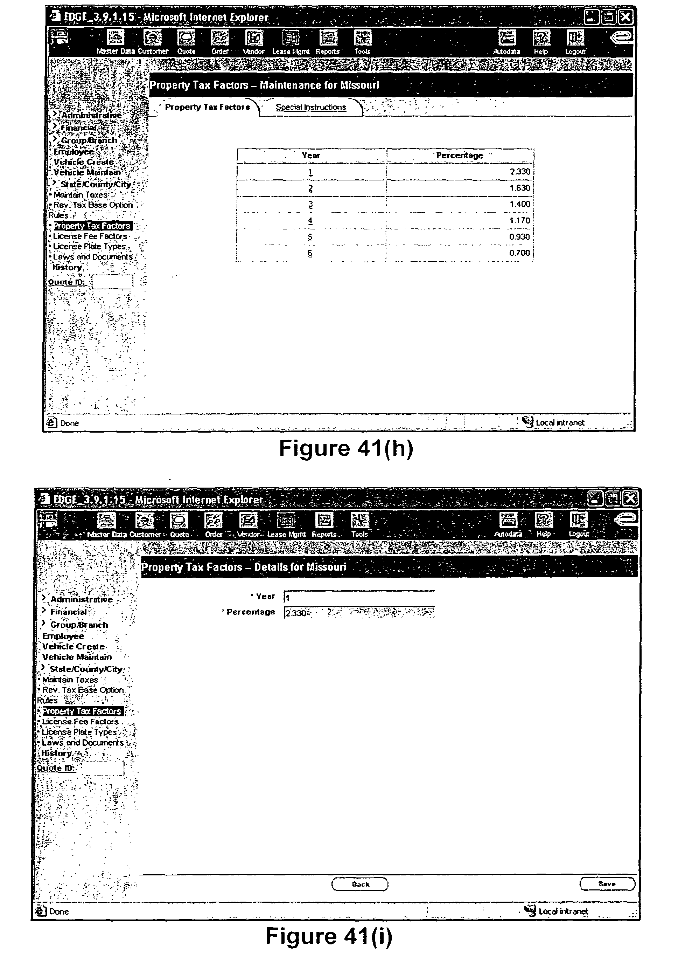

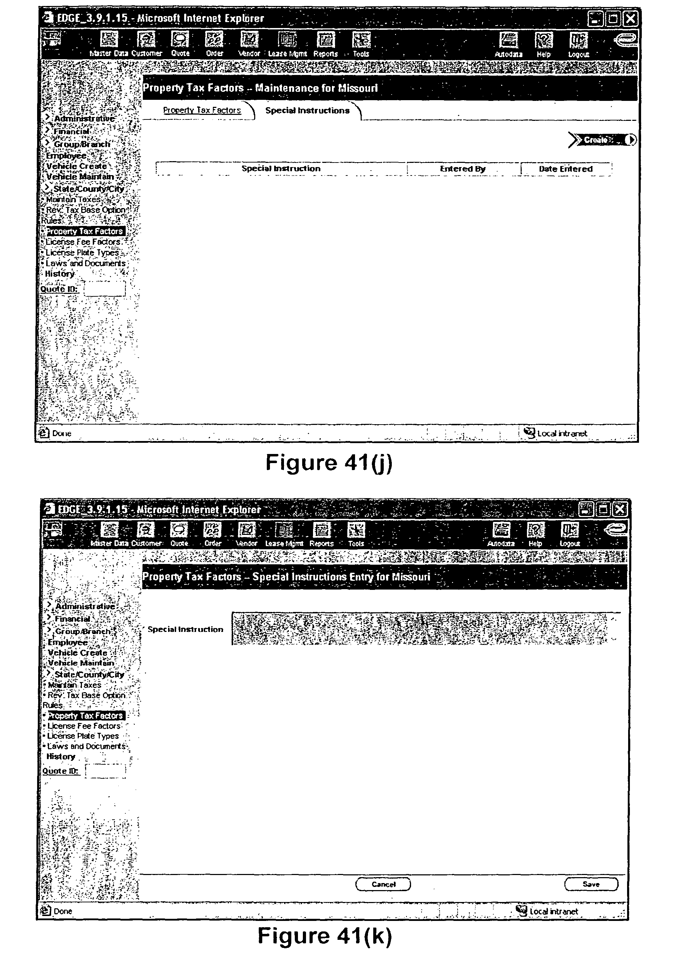

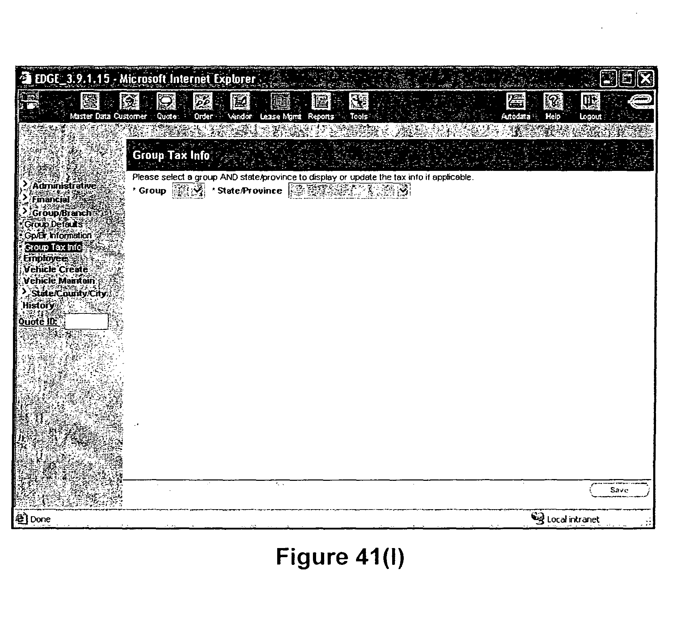

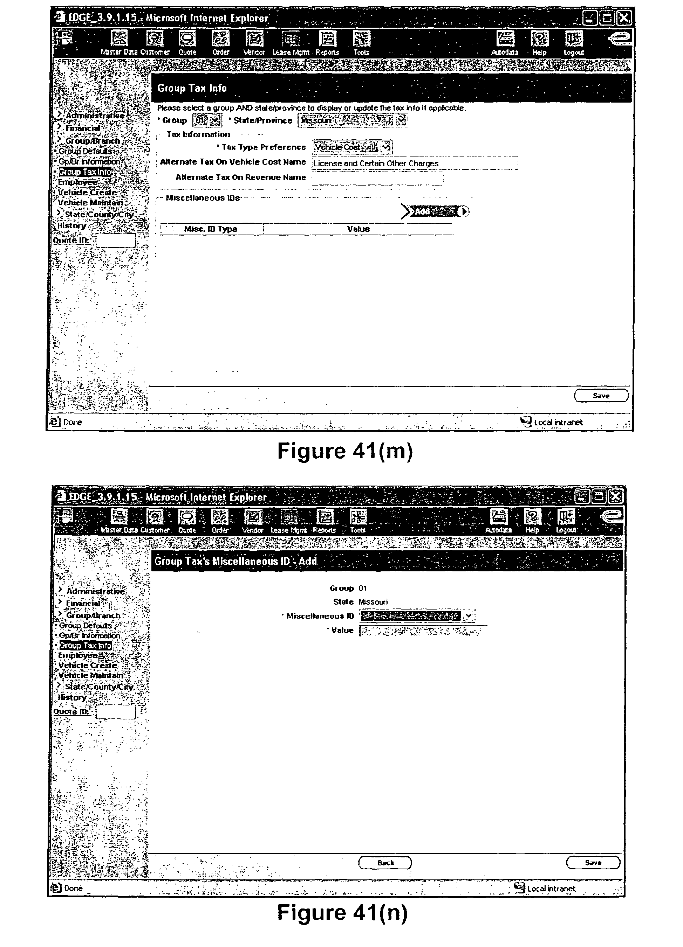

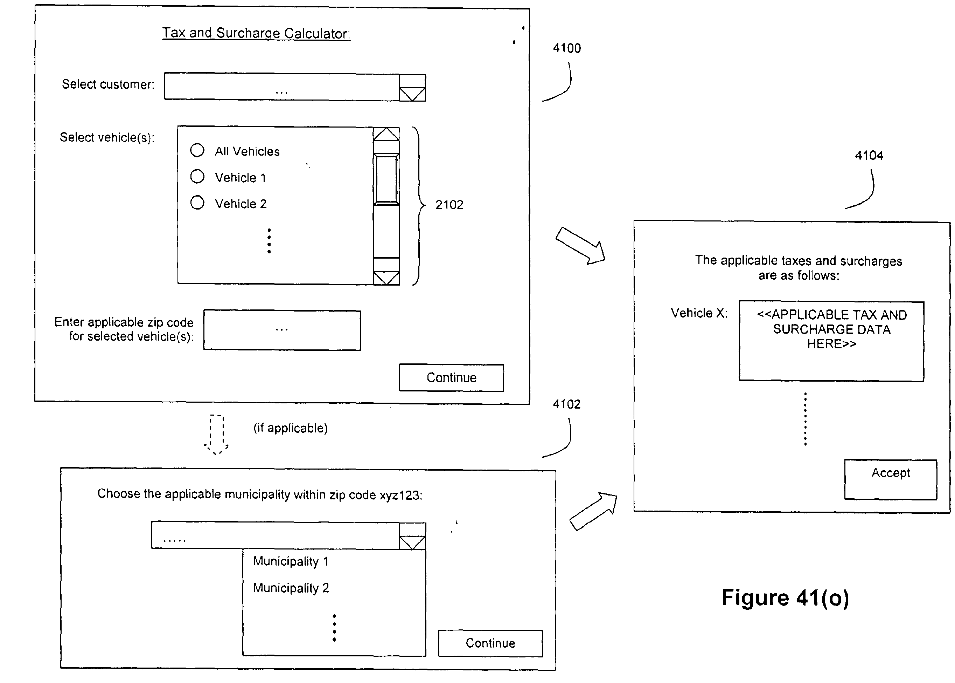

Alternately, a user can determine the applicable taxes and surcharges for one or more vehicle leases via the GUIs shown in Figures 41(a)-(n) which allow the user to view and update tax information by geographic location. Through the GUI of Figure 41(a), the user can define the state/province for which tax information is desired. Through the GUI of Figure 41(b), the user can specify the postal code within the chosen state/province for which a tax view is desired. A table in the GUI of Figure 41(b) preferably lists the taxing jurisdictions within the user-specified postal code and lists the jurisdiction's relevant tax rates. Through the GUI of Figure 41(c), the user can update the tax information for a user-selected state/province.

. Through the GUI of Figure 41(d), the user can select the state/province for which the revenue tax base option rules will be maintained. As part of this process, the GUI of Figures 41(e) and (f) lists services available from the lessor that may be subject to taxation. By selecting appropriate boxes in the table, the user can control whether those services will be treated as taxable by the system.

Through the GUI of Figure 41(g), the user can select the state/province for which property tax factors can be defined. As part of this process, the GUIs of Figures 41(h) and (i) allow the user to select the applicable tax percentages for different vehicle ages. Through the GUI of Figures 41(j) and (k), the user can specify any special instructions that will appear for the property tax when that tax is displayed to the user by the system.

Through the GUI of Figure 41(1), the user can define the fleet group and state/province for which tax information can be viewed and maintained. As part of this process, the user can select particular taxes via the GUI of Figure 41(m) and also add miscellaneous tax identifiers (such as a sales tax license number) via the GUI of Figure 41(n).

Another alternative for user determination of applicable taxes and surcharges is shown via the GUIs of Figure 41(o). Through GUI 4100 the user can specify the customer and vehicle lease(s) (via section 2102 as described in connection with Figure 21). GUI 4100 preferably also provides a field through which the user can enter a geographic identifier such as a postal code for the selected vehicle lease(s). Upon user selection of the "continue" button, the lease management software preferably accesses the tax/surcharge data table to look up the applicable taxes and surcharges for a vehicle lease defined by that geographic identifier. In cases where an additional geographic identifier is needed to determine the appropriate taxes and surcharges, a second GUI 4102 can be presented to the user through which the user can enter such a second geographic identifier (such as municipality). After the lease management software had identified the applicable taxes and surcharges for the selected vehicle lease(s), this information is preferably presented to the user via GUI 4104.

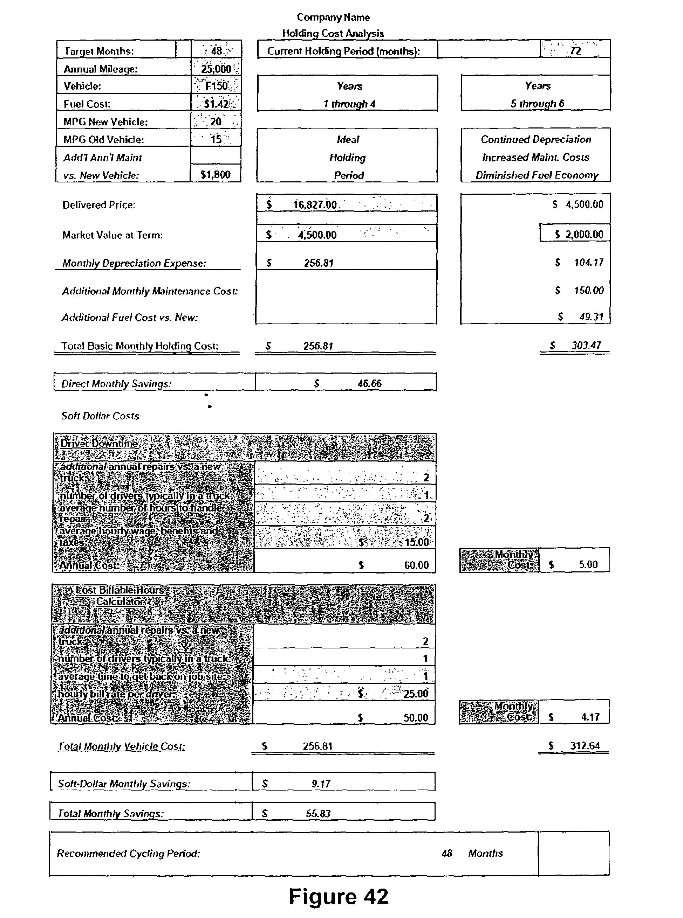

Another aspect of the preferred lease management system disclosed herein relates to an Internet-based customer interface to the lease management system that allows customers to identify expected total holding costs for a vehicle lease. As shown in Figure 1, through a customer computer 132 with access to Internet 150, a customer can access such an interface available on servers 102. Figure 42 depicts an exemplary GUI for the display of the total holding costs for a prospective vehicle lease. The GUI depicted in Figure 42 may serve as a report that compares the expected costs that would be incurred by a customer for vehicle leases of two different terms (e.g., a 4 year lease term versus a 6 year lease term). In this report, the delivered price represents the initial value of the vehicle as it is initially delivered to the customer. The market value at term represents the expected vehicle value at the end of a specified lease term. The monthly depreciation is in turn calculated simply as the difference between delivered price and the market value at term divided by the total number of months in the lease term. The additional monthly maintenance cost shown for the longer duration lease term represents an expected additional monthly maintenance that could be expected for the vehicle during the last 2 years of a 6 year lease term. This value can be a user-entered estimate. Also, the additional fuel cost vs. new item in the report represents an estimate of the increased fuel costs that would be incurred during the final two months of a 6 year lease due to the decreased fuel efficiency that a vehicle would be expected to experience as the vehicle ages. This value can also be a user-entered estimate. The specified "soft dollar" values shown in the report represent customer-specified estimates that identify potential other costs that are related to problems that a vehicle may encounter as it ages. All together, these values help the customer to assess what the expected costs related to a lease will be and to assess what length of lease term is desirable.

This Internet-based customer interface may also preferably be used by the customer to access a cycling analysis tool that will identify for the customer a recommended deletion time for a vehicle lease. The operation of such a cycling analysis tool is preferably as described in commonly-owned co-pending U.S. patent application serial number 11/243,723, entitled "Method and System for User Management of a Fleet of Vehicles Including Long Term Fleet Planning", filed October 5, 2005, the entire disclosure of which is incorporated herein by reference.

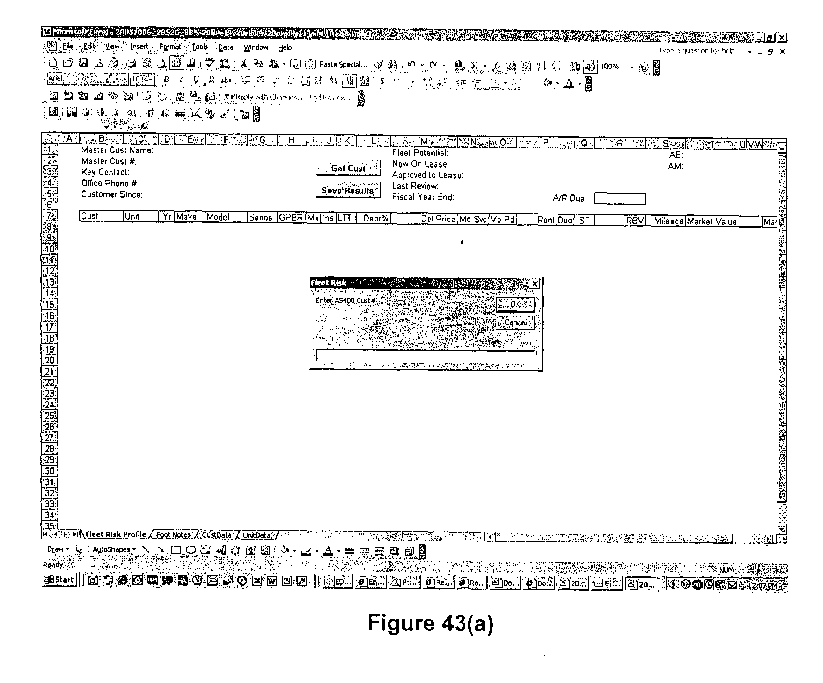

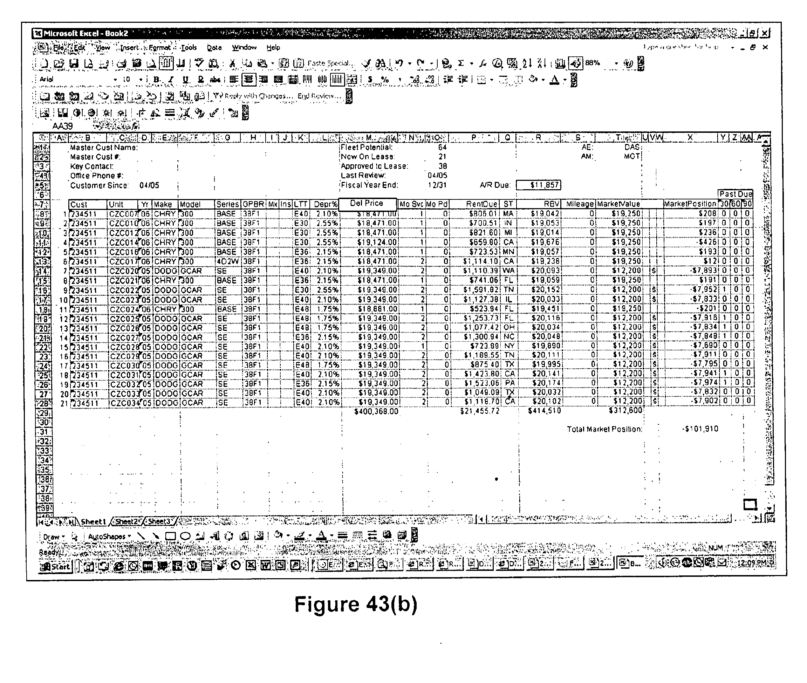

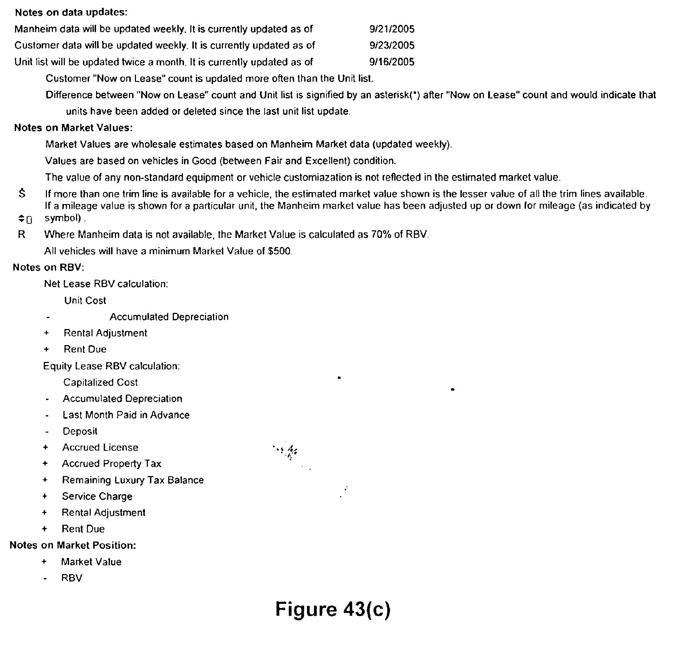

Another aspect of the preferred lease management system disclosed herein relates to an ability of the lease management system to generate a fleet risk report that would feed a credit review process. Figures 43(a)-(c) illustrate this process. Through the GUI of Figure 43(a), the user can identify the customer for which the fleet risk report will be created. Next, using the rules defined in Figure 43(c), the fleet risk report of Figure 43(b) is created by the system. This report preferably details the unit-by-unit and total risk for a customer's fleet, as shown in the market position column and the total market position sum of the table. The fleet risk report data table preferably provides other details about the customer's leased vehicles, as shown. Based on this report, a fleet manager can determine whether he/she is comfortable with the risk identified by the report in view of the customer's credit history. The inventors envision that this tool could also be used to forecast the fleet management company's risk for a customer's fleet as of a user-specified future date by projecting each vehicle's value as of the user-specified future date. Vehicle value projections can be performed using readily available third party data sources that project values for different vehicle types. For example, vendors such as Mannheim, Automotive Lease Guide, and others provide such data.

Further features of the invention will now be described in the following clauses:
1. A system for management of a plurality of vehicle leases, the system comprising:
   at least one user computer;
   a memory storing a database, the database being configured to store vehicle lease data for each of a plurality of vehicle leases; and
   a server in communication with the user computer and the memory, the server being configured to execute a lease management software program, the lease management software program being configured to provide lease management functionality for each of said vehicle leases throughout a vehicle lease lifecycle via a plurality of interrelated graphical user interfaces (GUIs), the lease management functionality including a plurality of user selectable maintenance actions for an activated one of said customer vehicle leases, and wherein the lease management software program is further configured to update the stored vehicle lease data in the database in response to a user selection of at least one of said plurality of selectable maintenance actions.
2. The system of clause 1 wherein the lease management software program is further configured to validate a maintenance action against a plurality of predetermined business rules and update the stored vehicle lease data in accordance with the maintenance action in response to a positive validation.
3. The system of clause 2 wherein at least a plurality of the vehicle leases comprise customer vehicle leases, wherein the database is further configured to store a plurality of customer profiles, at least a plurality of the customer profiles defining at least a plurality of the predetermined business rules against which maintenance actions are validated, and wherein the lease management software program is further configured to access the customer profiles to identify the predetermined business rules against which maintenance actions are validated.
4. The system of clause 3 wherein the business rules defined by the customer profiles comprise at least one rule that defines how variances between an expected cost and an actual cost applicable to customer vehicle leases are handled.
5. The system of clause 1 wherein the plurality of maintenance actions comprises at least a change in lease term for an activated vehicle lease.
6. The System of clause 1 wherein the plurality of maintenance actions comprises at least a change in a driver for an activated vehicle lease.
7. The System Of clause 1 wherein the plurality of maintenance actions comprises at least a change in a garage address for an activated vehicle lease.
8. The system of clause 7 wherein the database is further configured to store tax and surcharge data applicable to vehicle leases, wherein the stored tax and surcharge data varies by a plurality of taxing jurisdictions, wherein the stored tax and surcharge data is referenced by a plurality of geographical identifiers, and wherein the lease management software program is further configured to, for a new garage address that triggers a change in the taxes and surcharges that are applicable to an activated vehicle lease, access the database using the new garage address to determine all taxes that are applicable to a vehicle lease.
9. The System of clause 1 wherein the plurality of maintenance actions comprises at least a change in a physical damage and liability program enrollment for an activated vehicle lease.
10. The system of clause 1 wherein the plurality of maintenance actions comprises at least a change in a maintenance product enrollment for an activated vehicle lease.
11. The system of clause 1 wherein the plurality of maintenance actions comprises at least a change in depreciation for an activated vehicle lease.
12. The system of clause 1 wherein the plurality of maintenance actions comprises at least a change in terminal reduced book value (RBV) for an activated vehicle lease.
13. The system of clause 1 wherein the plurality of maintenance actions comprises at least a change in interest rate for an activated vehicle lease.
14. The System Of clause 1 wherein the lease management software program is further configured to provide a GUI for display on the user computer that is configured to allow the user to perform maintenance actions on a plurality of user-specified activated vehicle leases simultaneously.
15. The system of clause 14 wherein at least a plurality of the vehicle leases comprise customer vehicle leases, wherein the GUI that is configured to allow simultaneous maintenance actions is further configured to (1) receive input from the user indicative of a selection of a customer, (2) display a list of selectable activated customer vehicle leases for the selected customer, and (3) allow the user to select at least a plurality of the listed activated customer vehicle leases to thereby define the plurality of activated customer vehicle leases for which maintenance actions will be performed simultaneously.
16. The system of clause 1 wherein the lease management software program is further configured to, for maintenance actions that trigger a change in a monthly payment for an activated vehicle lease, automatically recalculate the monthly payment and store the recalculated monthly payment in the database.
17. The system of clause 1 wherein the lease management software program is further configured to, for maintenance actions that trigger a change in a maintenance charge for an activated vehicle lease, automatically recalculate the maintenance charge and store the recalculated maintenance charge in the database.
18. The System of clause 1 wherein the lease management functionality further includes user interaction to define a vehicle deletion process for vehicles whose lease has expired.
19. The system of clause 1 wherein the lease management functionality further includes a credit review process for a plurality of maintenance actions.
20. A system for management of a plurality of vehicle leases, the system comprising:
   a user computer;
   a memory storing a database, the database configured to store vehicle lease data and tax data applicable to vehicle leases, wherein the stored tax data varies by a plurality of taxing jurisdictions, wherein the stored tax data is referenced by a plurality of geographical identifiers;
   a server in communication with the user computer and the memory, the server having lease management software resident thereon, the lease management software being configured to execute a lease management software program, the lease management software program being configured to provide lease management functionality to a user of the user computer via a plurality of graphical user interfaces (GUIs), the lease management functionality including access to the database to determine all taxes that are applicable to a vehicle lease in response to user input through a GUI of a geographic identifier for that vehicle lease.
21. The system of clause 20 wherein the database is further configured to store surcharge data applicable to customer vehicle leases, wherein the stored surcharge data varies by a plurality of taxing jurisdictions, wherein the stored surcharge data is referenced by a plurality of geographical identifiers, and wherein the lease management software program is further configured to access the database to determine all surcharges that are applicable to a customer vehicle lease in response to the geographic identifier user input.
22. The system of clause 21 wherein the geographic identifier comprises a postal code.
23. The system of clause 21 wherein the geographic identifier comprises a municipality.
24. An apparatus for management of a plurality of vehicle leases, the system comprising:
   a computer comprising (1) a display, (2) an input device, (3) a memory storing a database, the database being configured to store vehicle lease data for each of a plurality of vehicle leases, and (4) a processor in communication with the display, input device and memory, the processor being configured to execute a lease management software program, the lease management software program being configured to provide lease management functionality for each of said vehicle leases throughout a vehicle lease lifecycle via a plurality of interrelated graphical user interfaces (GUIs) for presentation to a user on the display, the lease management functionality including a plurality of user selectable maintenance actions for an activated one of said customer vehicle leases, and wherein the lease management software program is further configured to update the stored vehicle lease data in the database in response to a user selection through the input device of at least one of said plurality of selectable maintenance actions.
25. A method for interfacing a business accounting software program with a separate software program for managing a plurality of vehicles leased by a customer, the method comprising:
   providing, via the separate software program, a graphical user interface (GUI) for display on a user computer that lists data describing a plurality of cost items that have been purchased in connection with at least one customer vehicle lease;
   receiving an input to the separate software program from a user through the displayed graphical user interface that is indicative of a command to pay a vendor for at least one of the listed cost items; and
   responsive to the received input, automatically uploading vendor payment instructions for the at least one listed cost item from the separate software program to a separate business accounting software program.
26. The method of clause 25 wherein at least one of the cost items comprises a vehicle purchase.
27. The method of clause 25 wherein at least one of the cost items comprises an after market equipment (AME) purchase for a leased vehicle.
28. The method of clause 25 wherein at least one of the cost items comprises an expense related to at least one of the group consisting of a licensing cost, a tax, and a title cost for a leased vehicle.
29. The method of clause 25 wherein the GUI is configured to display a customer price for each cost item and an expected cost for each cost item.
30. The method of clause 29 wherein the GUI is further configured to display an invoiced cost for each cost item.
31. The method of clause 25 wherein the GUI is further configured to receive input from the user indicative of a command from the user to create a manual voucher for at least one of the listed cost items.
32. A system for integrating a business accounting software program with a separate software program for managing a plurality of vehicles leased by a customer, the system comprising:
   a user computer; and
   a server in communication with the user computer via a computer network, the server being configured to (1) provide a graphical user interface (GUI) for display on the user computer that lists data describing a plurality of cost items that have been purchased in connection with a customer vehicle lease, (2) receive an input from a user that is indicative of a command to pay a vendor for at least one of the listed cost items, and (3) responsive to the received input, automatically upload vendor payment instructions for the at least one listed cost item to a separate business accounting software program.
33. The system of clause 32 wherein at least one of the cost items comprises a vehicle purchase.
34. The system of clause 32 wherein at least one of the cost items comprises an after market equipment (AME) purchase for a leased vehicle.
35. The system of clause 32 wherein at least one of the cost items comprises an expense related to at least one of the group consisting of a licensing cost, a tax, and a title cost for a leased vehicle.
36. A method comprising:
   providing a graphical user interface (GUI) for display on a computer through which a user can request a report that lists each cost item that has been purchased for a customer leased vehicle, wherein the listed cost item has an invoiced cost that is different than an expected cost; and
   responsive to user input via the page, generating the report for display to the user.
37. The method of clause 36 wherein the GUI is configured to allow the user to request a report that lists each cost item that has been purchased for a customer leased vehicle, wherein the listed cost item has an invoiced cost that is different than an expected cost by more than a predetermined variance.
38. The method of clause 37 wherein the cost item comprises a vehicle purchase.
39. The method of clause 38 wherein the cost item comprises an after market equipment (AME) purchase for a leased vehicle.
40. The method of clause 37 wherein the cost item comprises an expense related to at least one of the group consisting of a licensing cost, a tax, and a title cost for a leased vehicle.
41. A system for identifying a total estimated holding cost for a potential vehicle lease, the system comprising:
   a user computer;
   a memory storing a database, the database configured to store vehicle lease data; and
   a server in communication with the user computer over the Internet, the server also being in communication with the memory, the server being configured to execute a software program, the software program being configured to interface a user of the user computer with the database via a plurality of graphical user interfaces (GUIs) for display on the user computer, at least one of the GUIs being configured to display an estimated total holding cost for a potential vehicle lease in response to user input through a GUI of a plurality of lease parameters that define the potential vehicle lease.
42. A system for integrating a business accounting software program with a separate software program for managing a plurality of vehicles leased by a customer, the system comprising:
   a user computer; and
   a server in communication with the user computer via a computer network, the server being configured to (1) provide a graphical user interface (GUI) for display on the user computer through which a user can schedule direct debit withdrawals from a plurality of customer financial accounts for payments due under a plurality of customer vehicle leases, (2) access a business accounting software program, resident on either the server or a computing device accessible to the server, to obtain data necessary for implementing the direct debit withdrawals from the customer financial accounts, and (3) responsive to user scheduling input through the GUI and the direct debit data from the business accounting software program, performs the direct debit withdrawals.
   While the present invention has been described above in relation to its preferred embodiment, various modifications may be made thereto that still fall within the invention's scope. Such modifications to the invention will be recognizable upon review of the teachings herein. As such, the full scope of the present invention is to be defined solely by the appended claims and their legal equivalents.

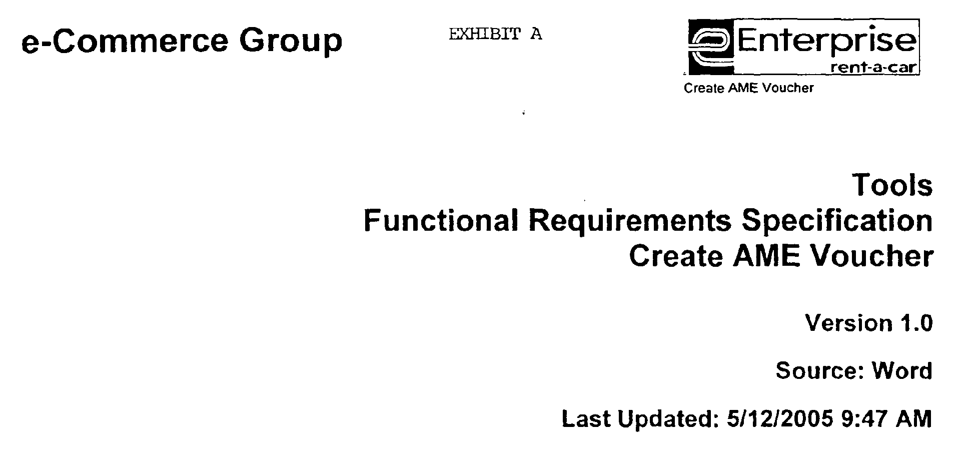

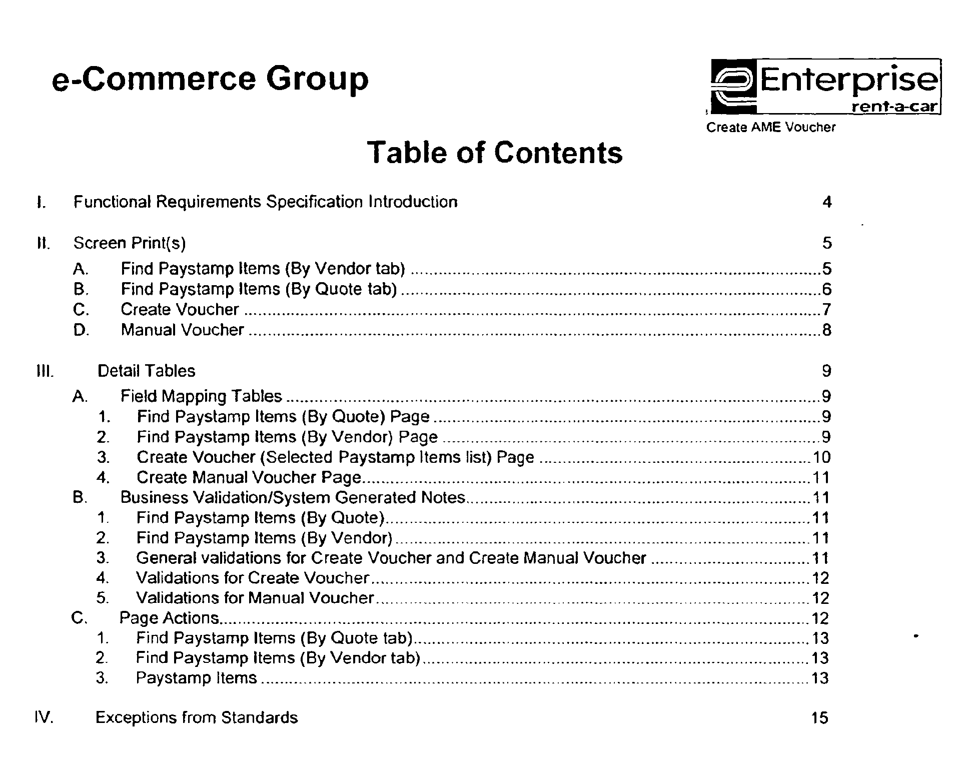

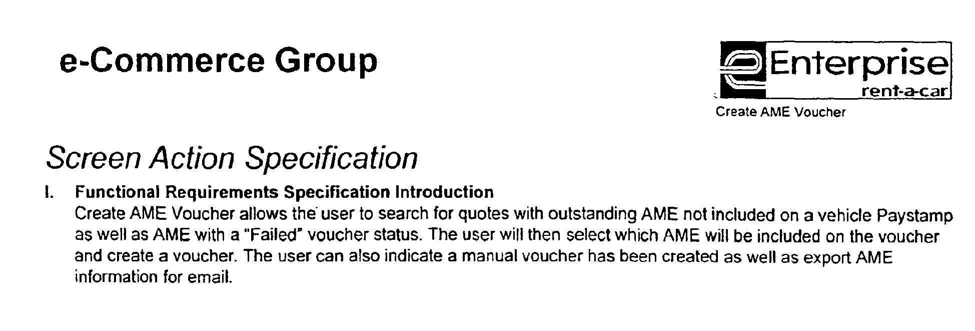

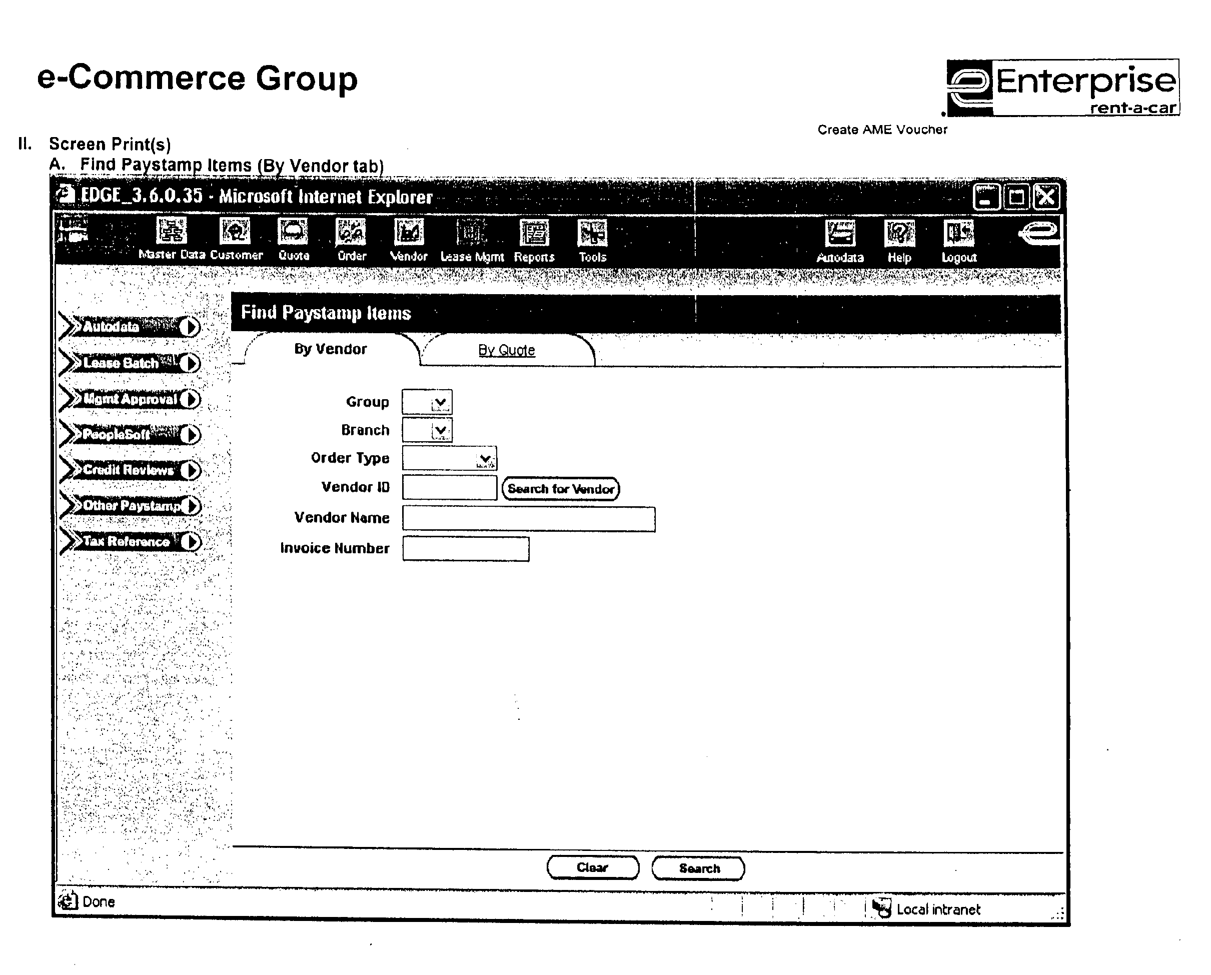

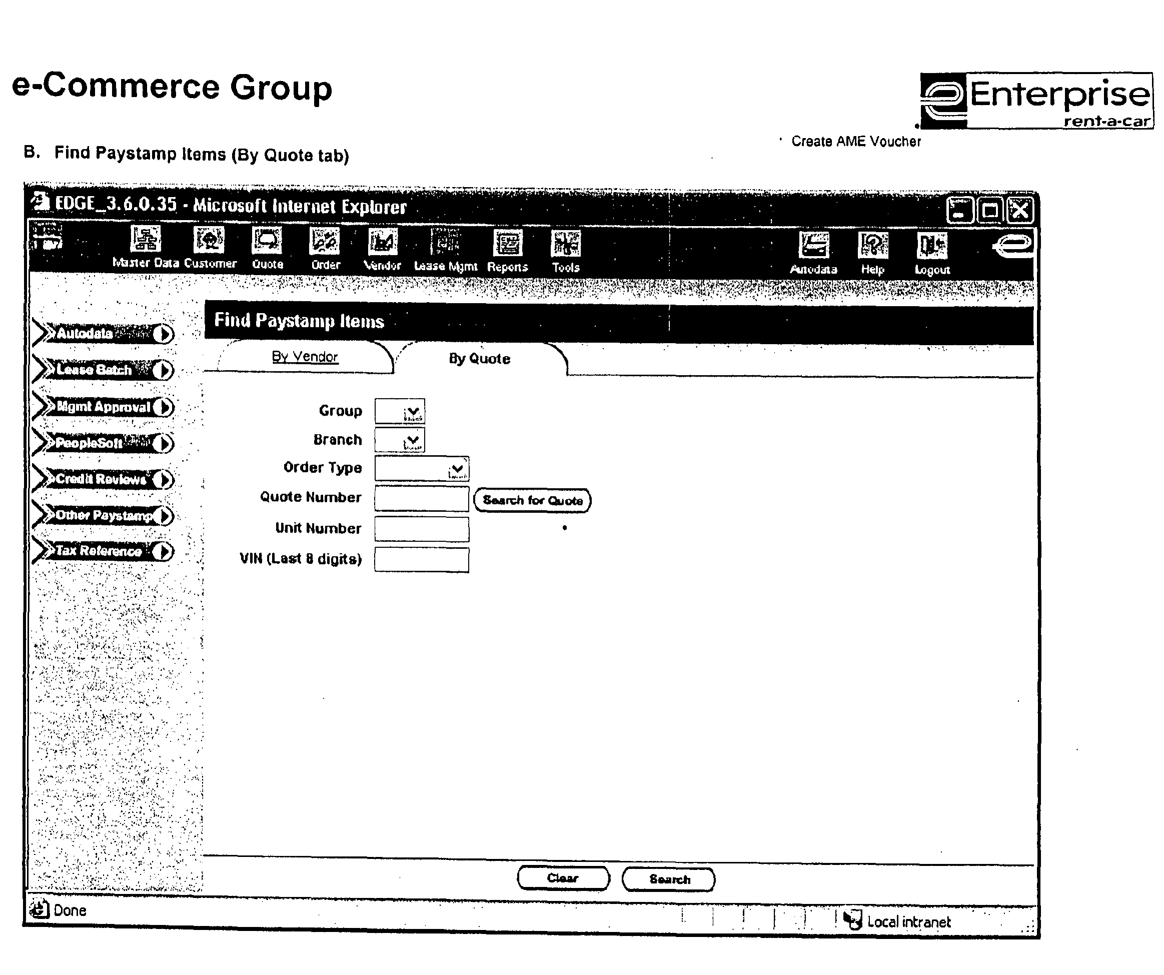

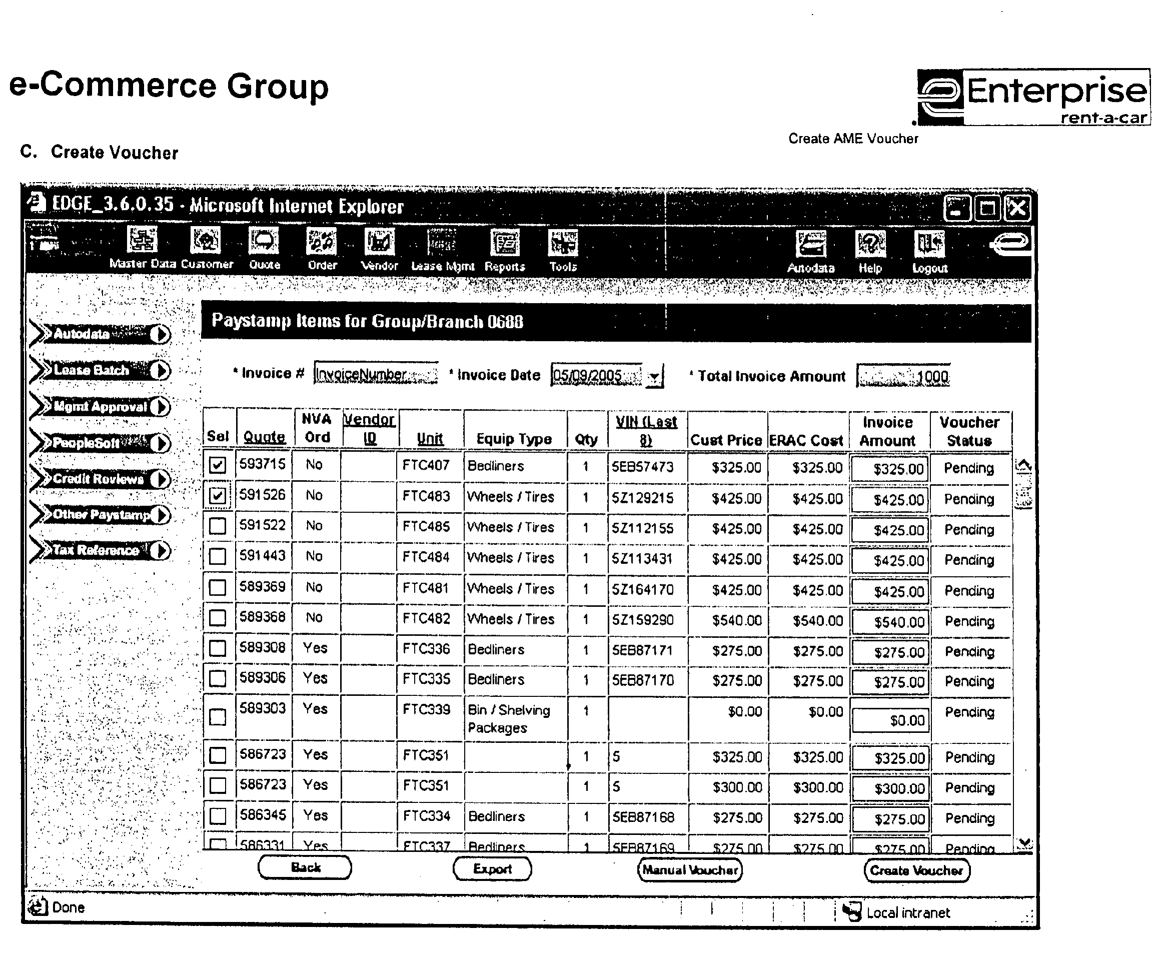

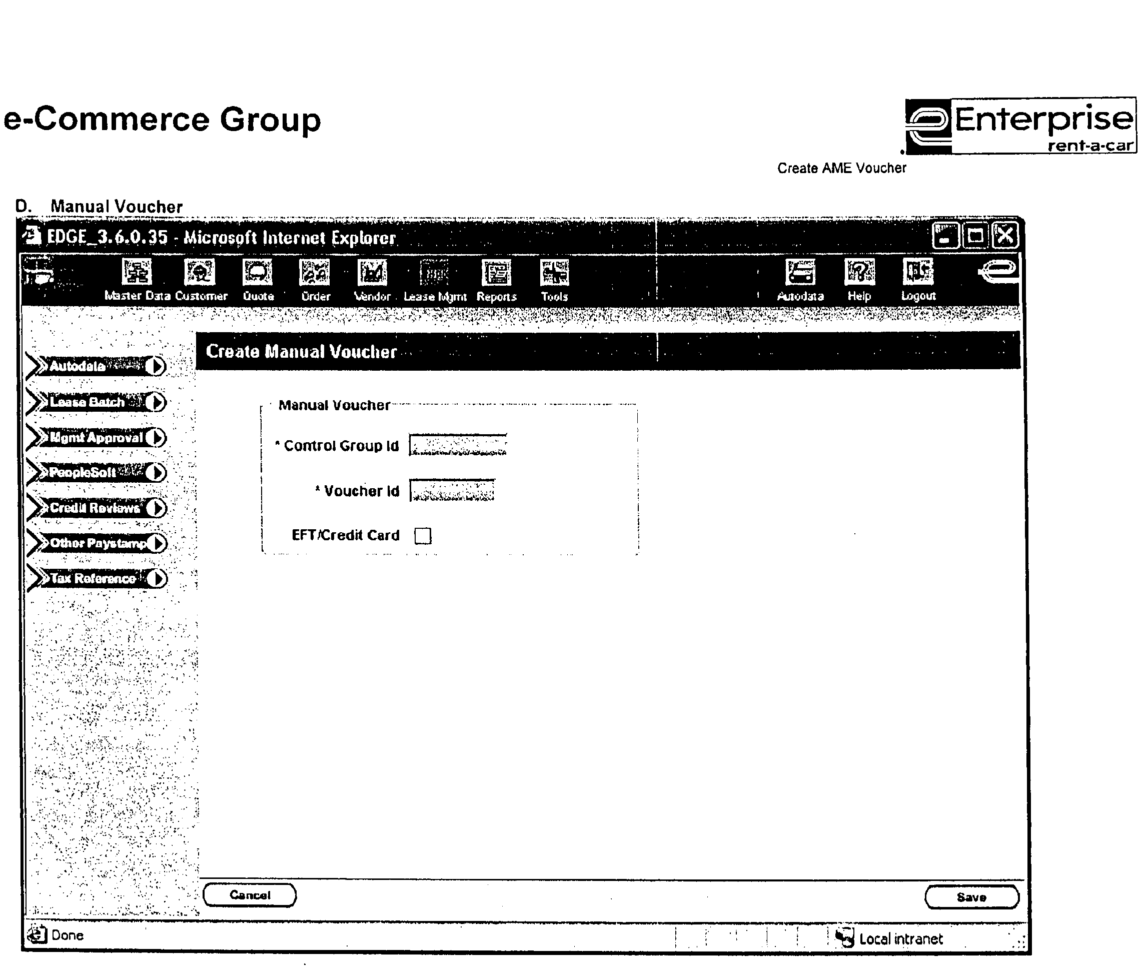

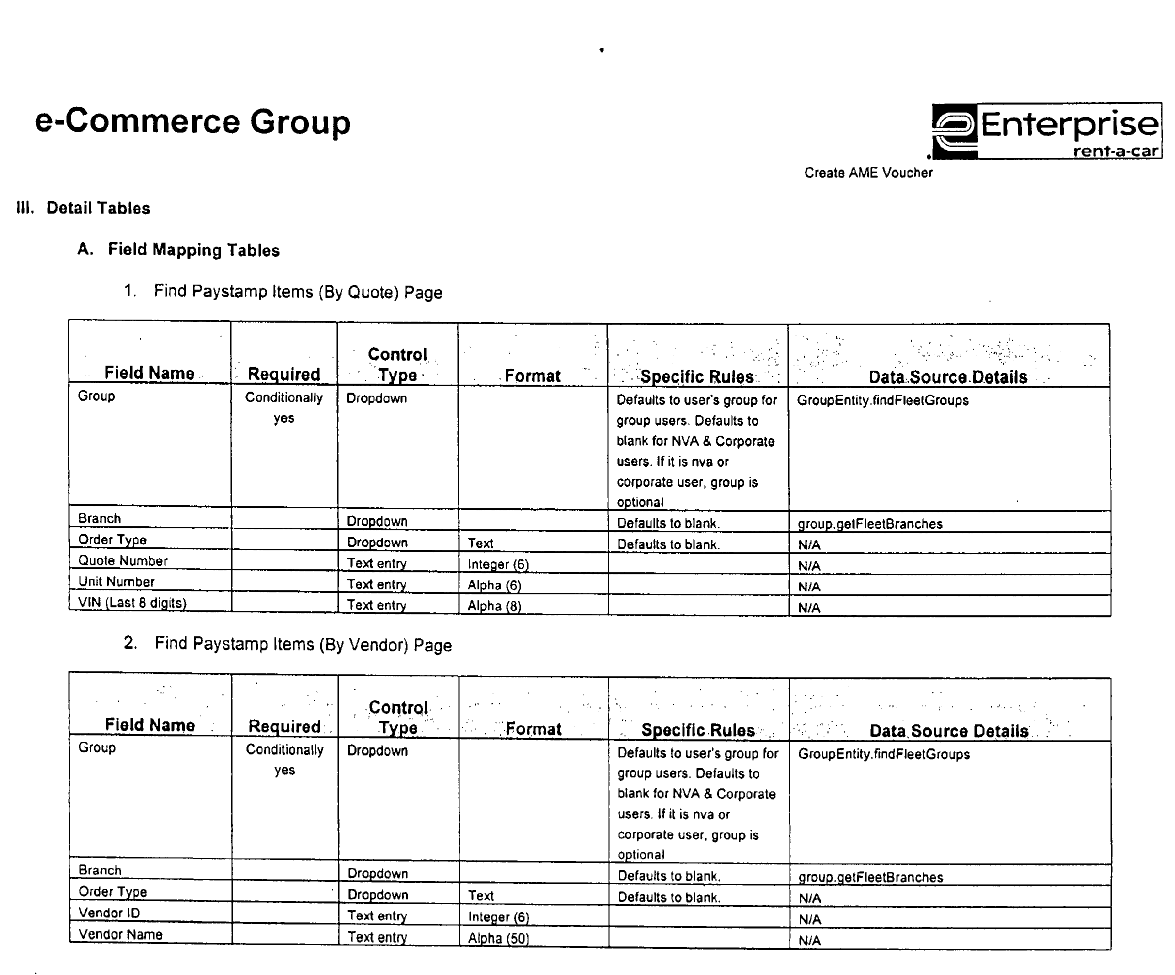

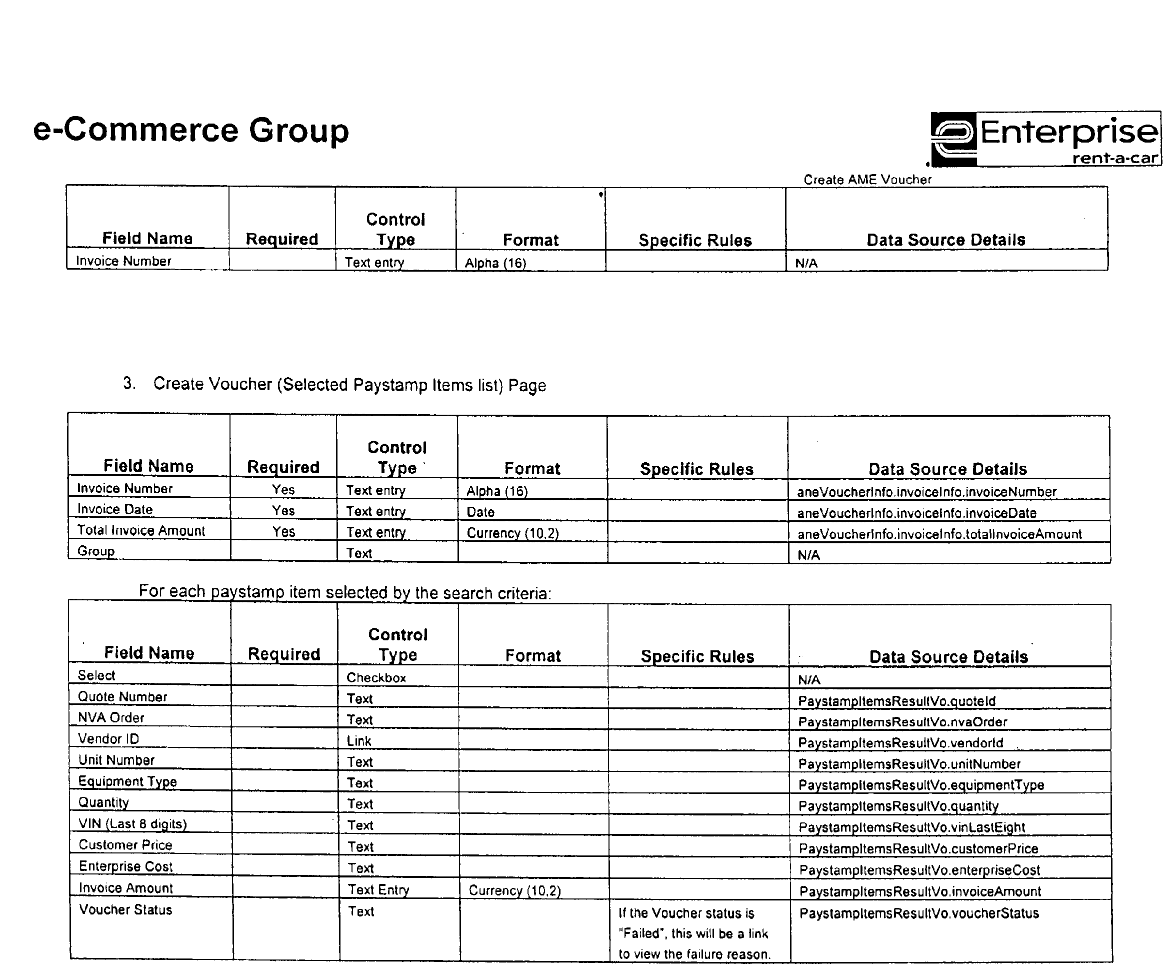

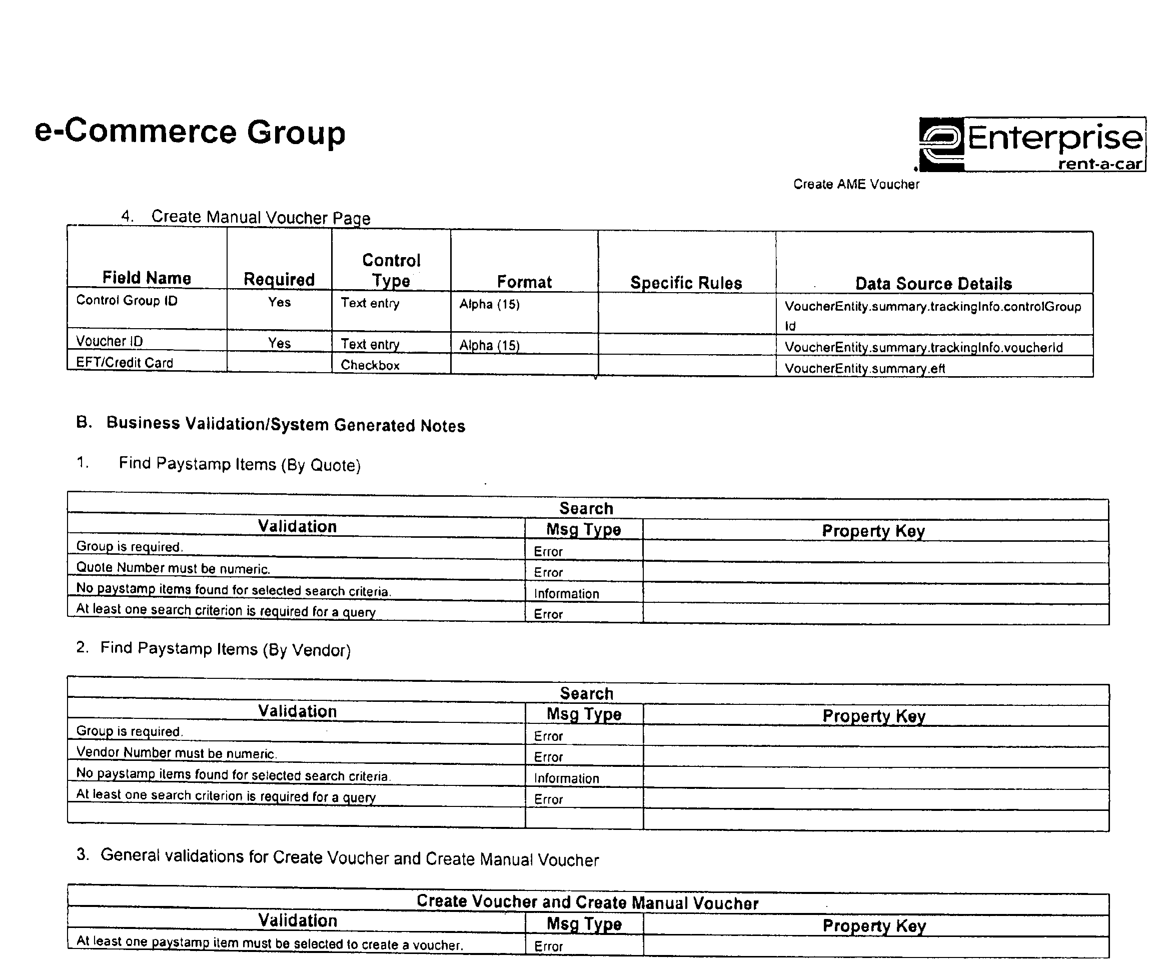

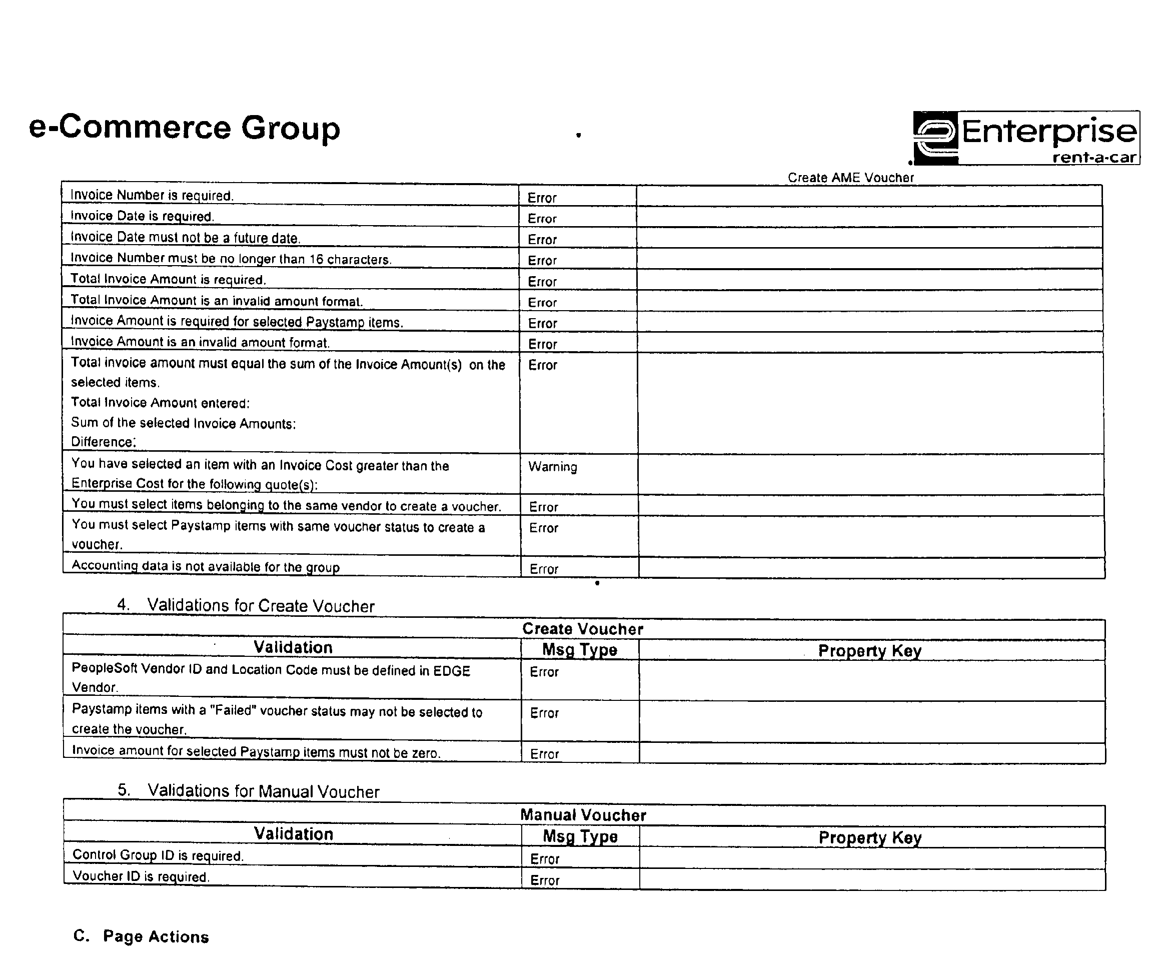

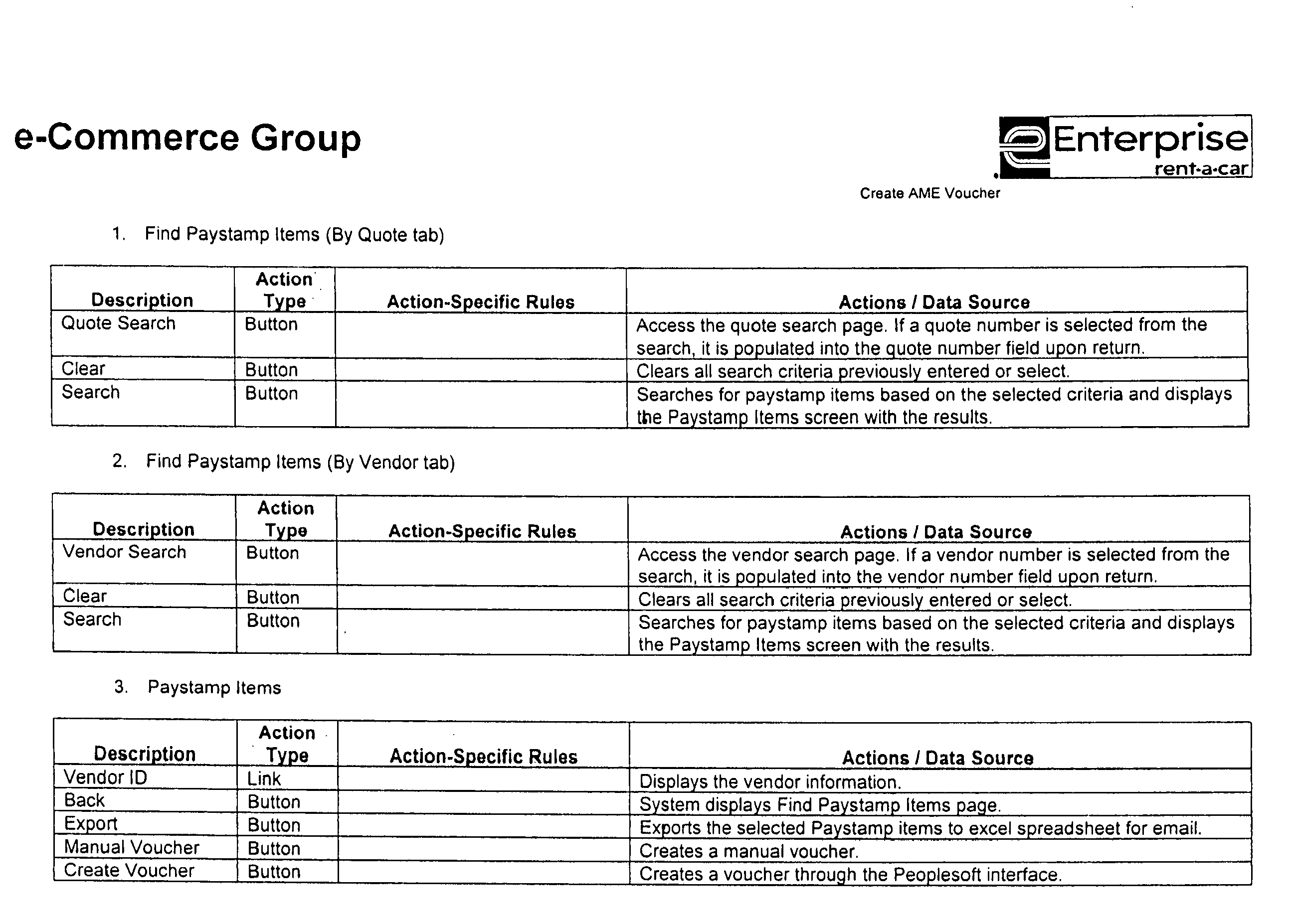

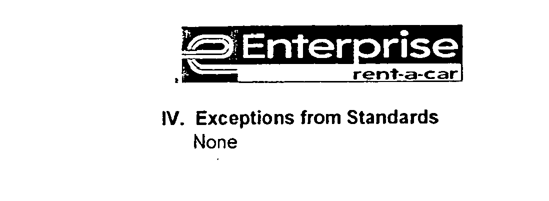

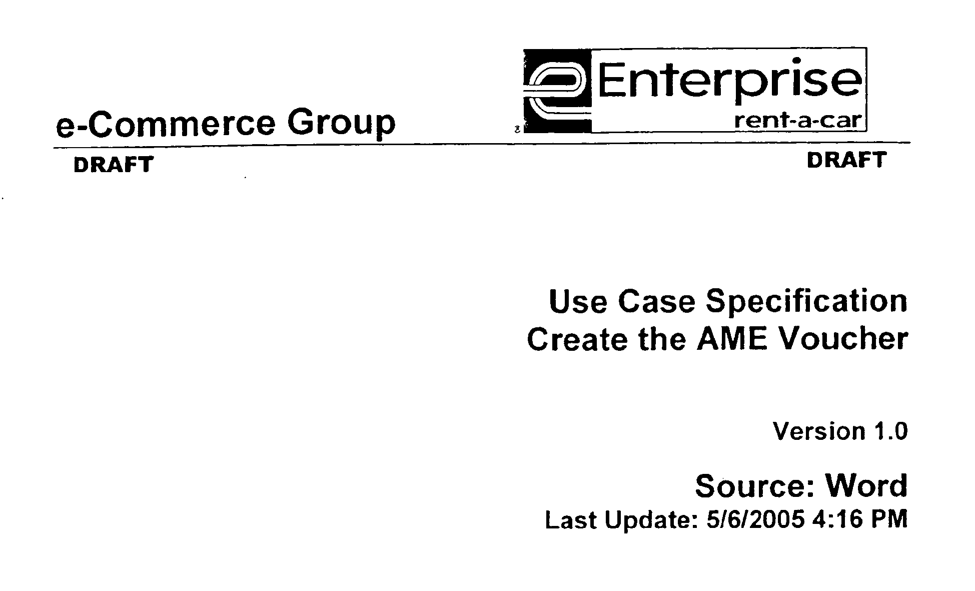

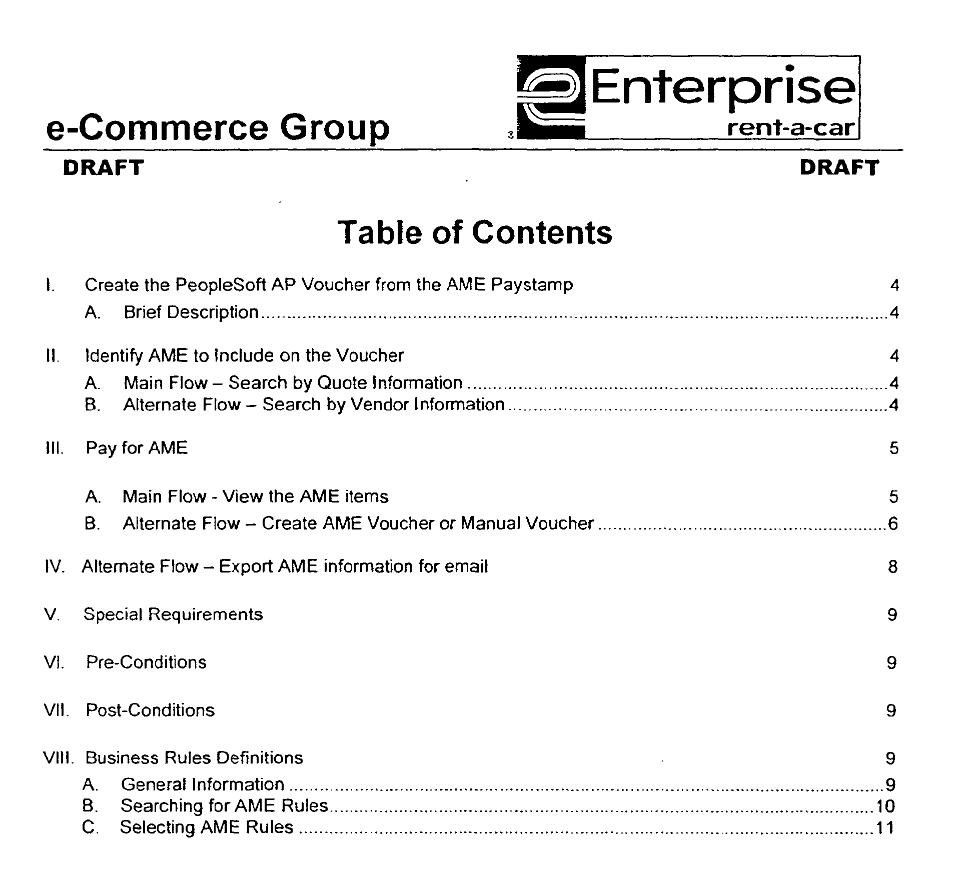

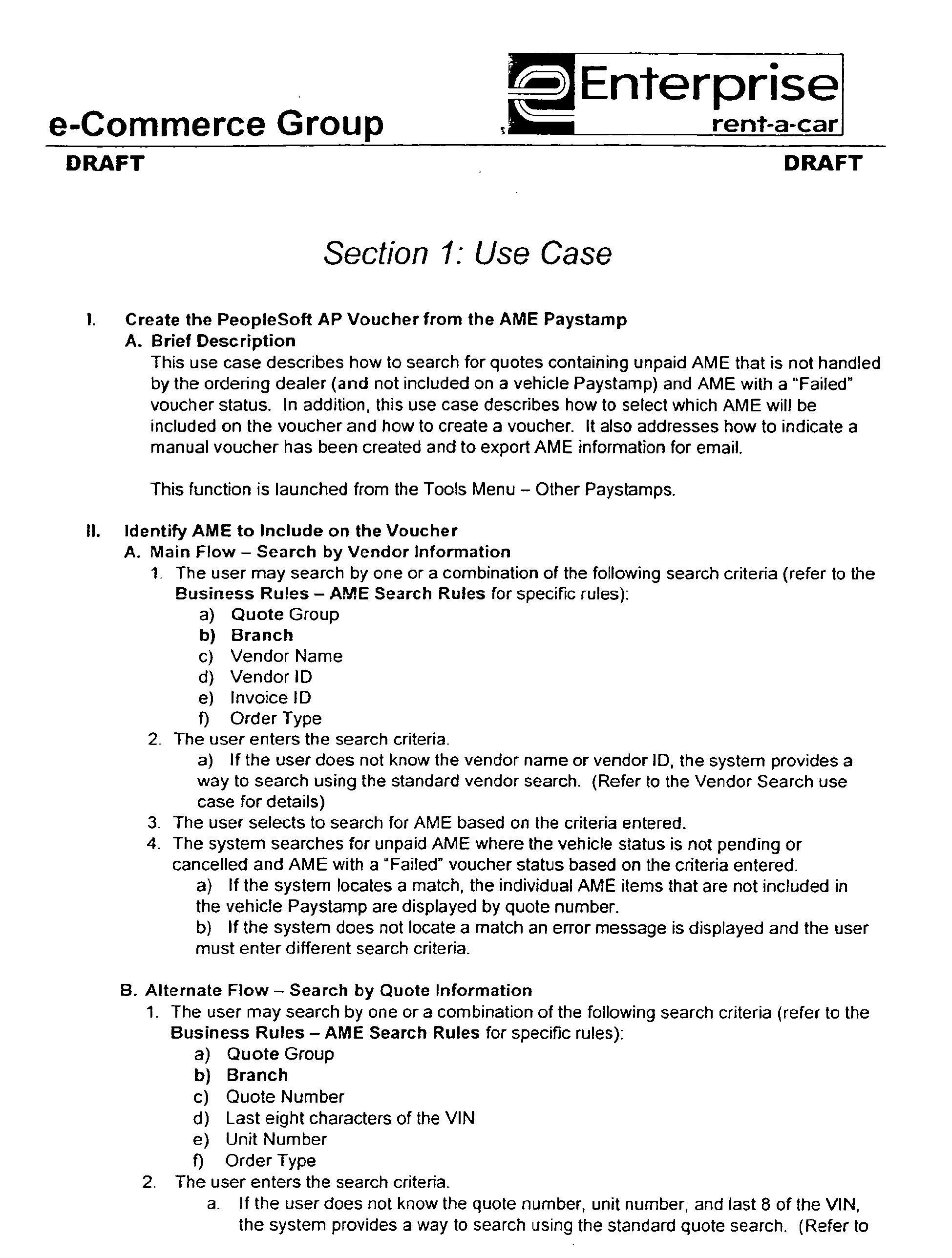

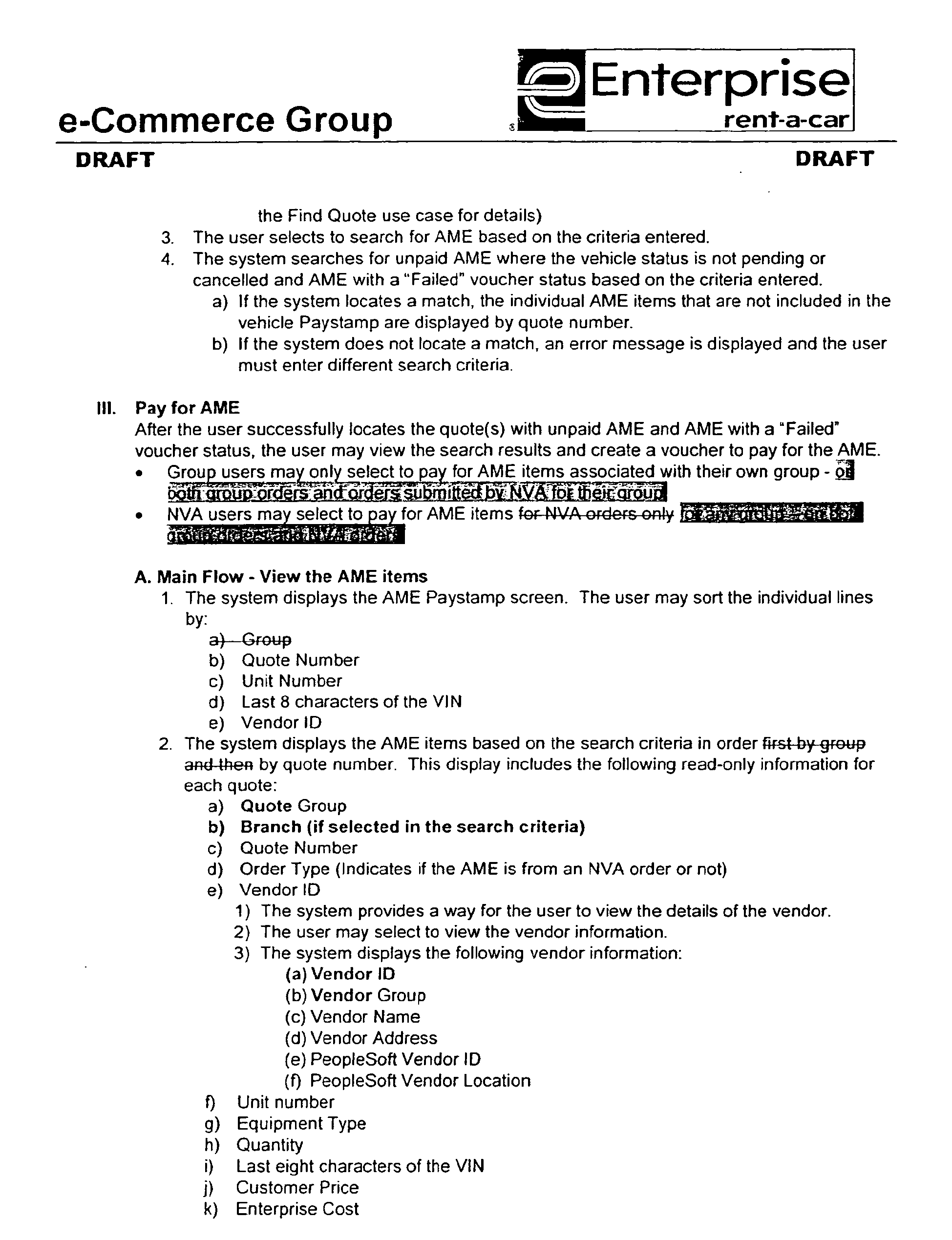

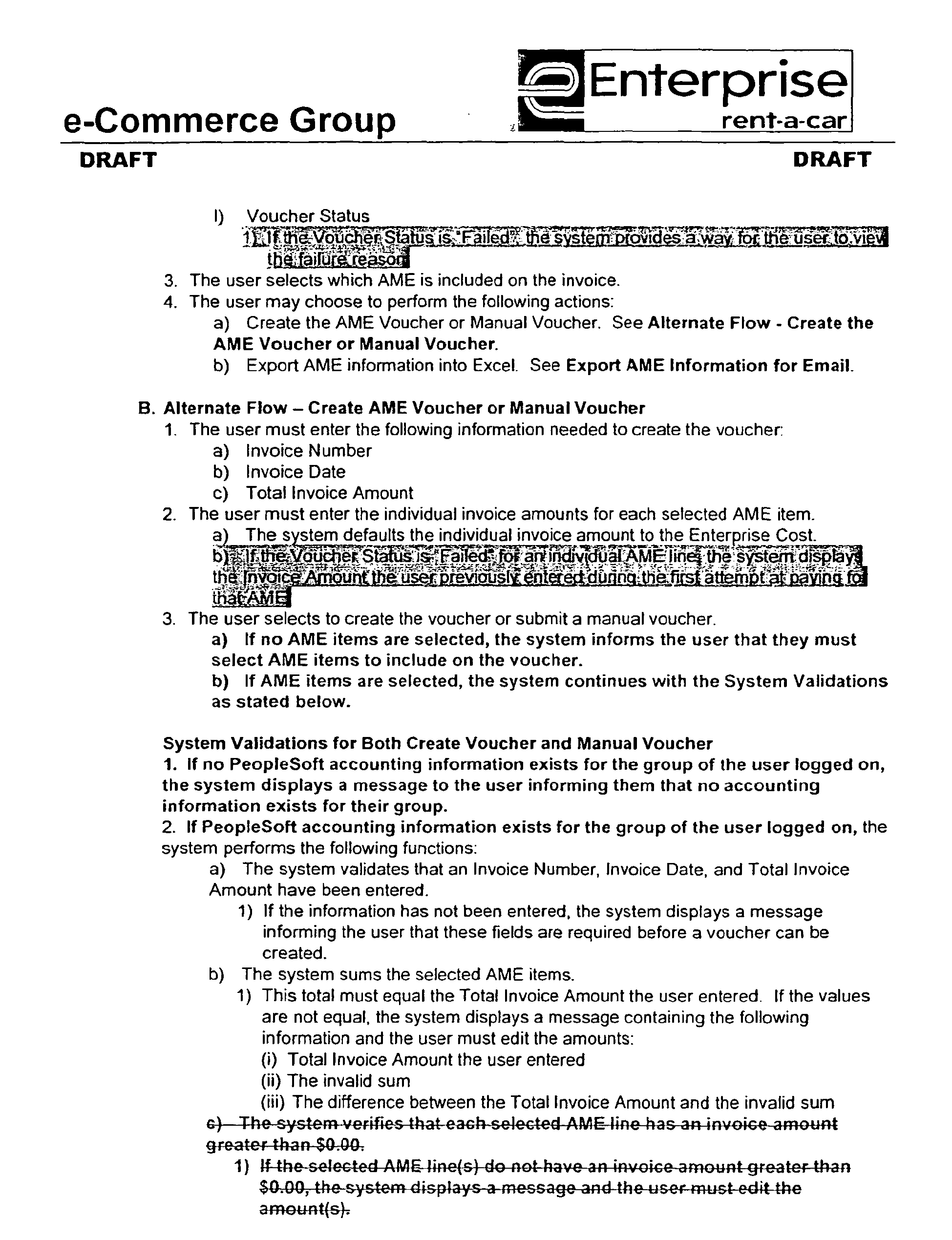

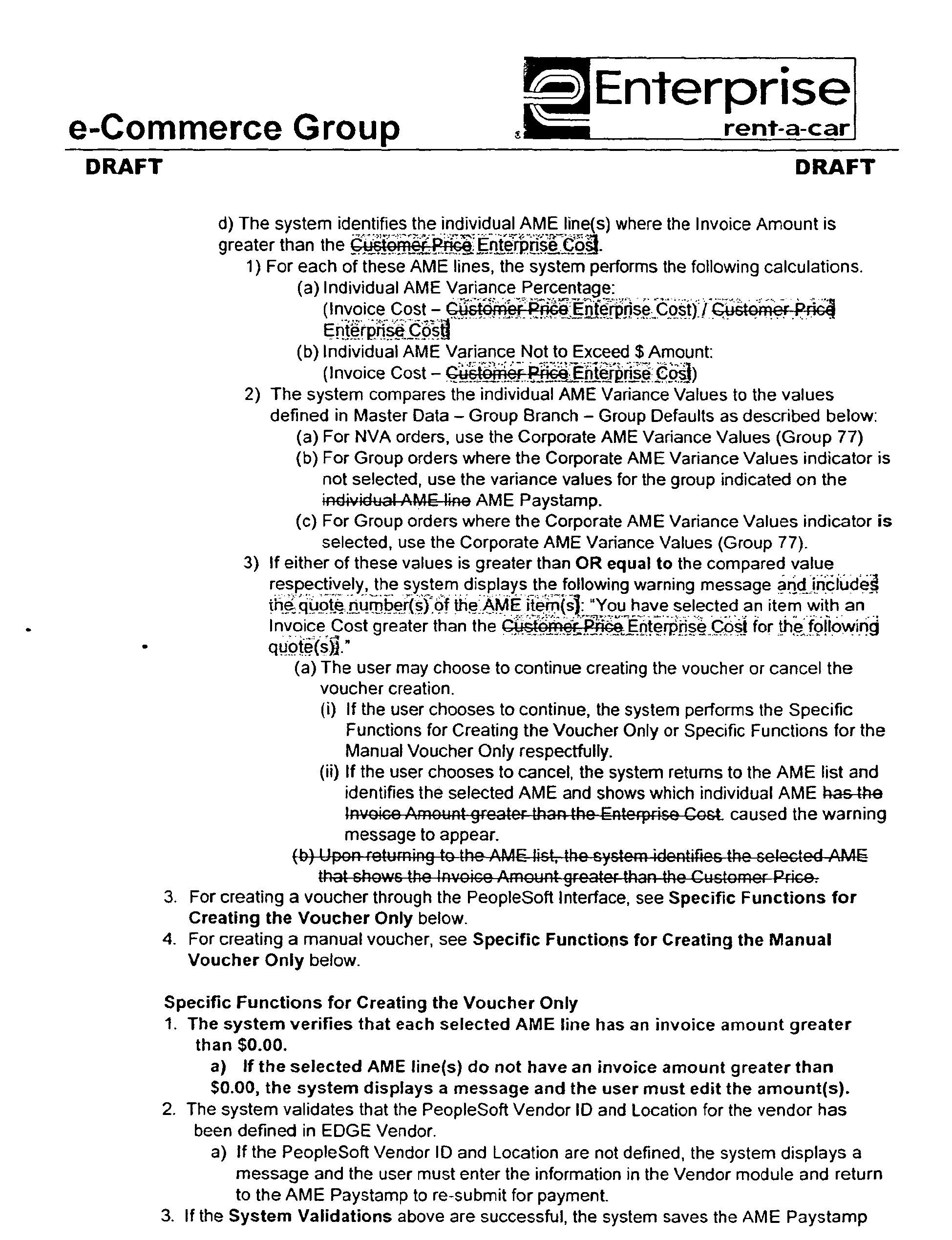

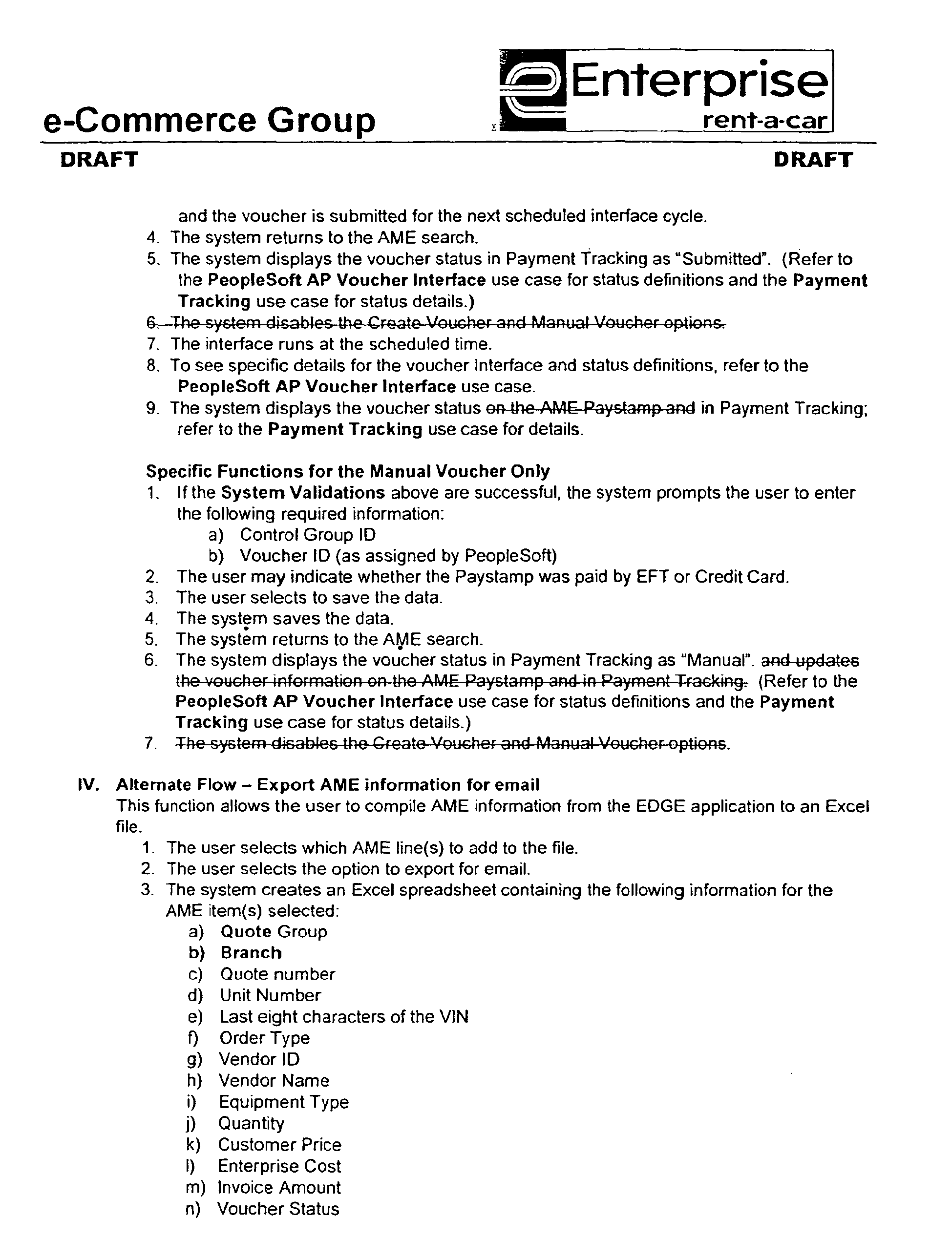

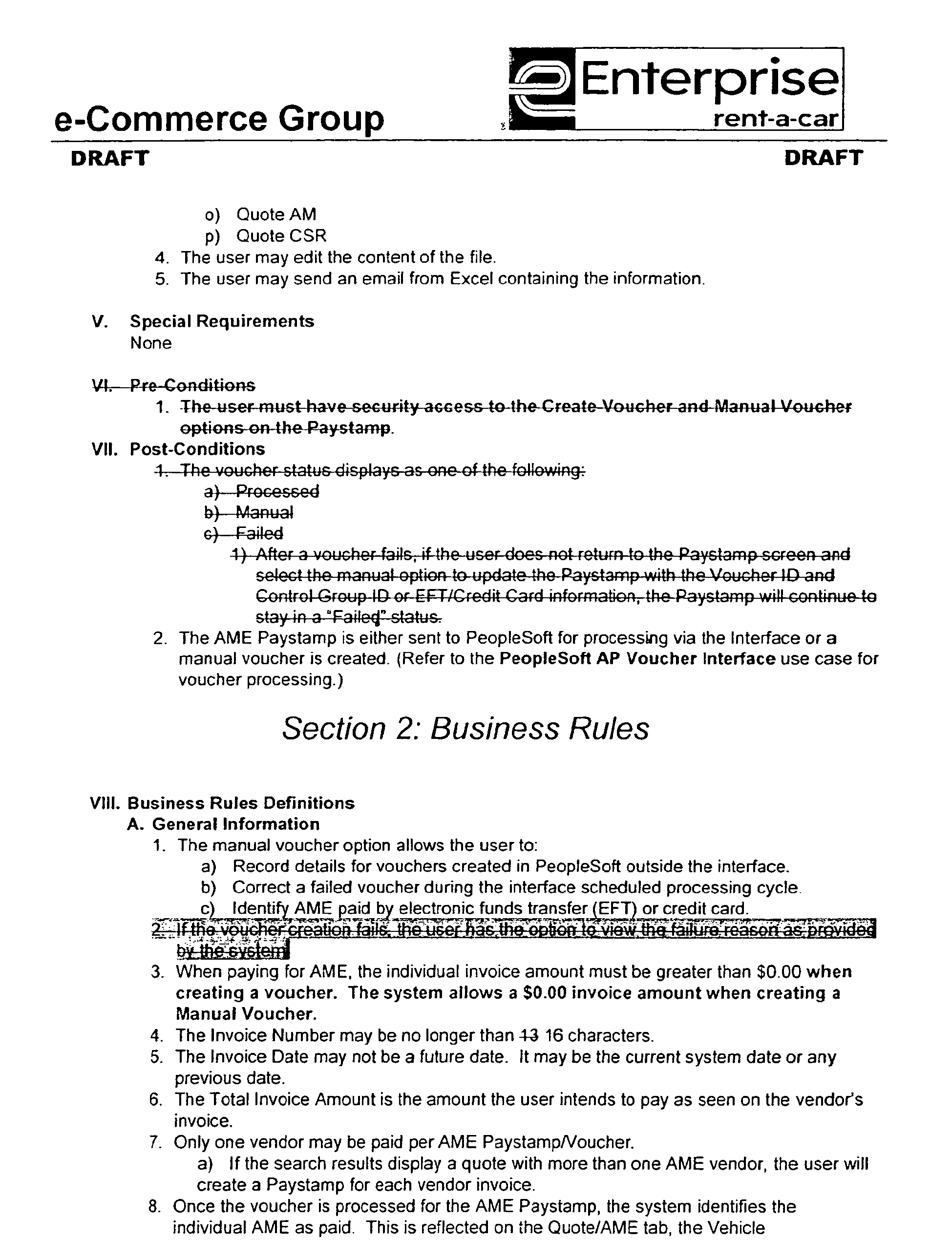

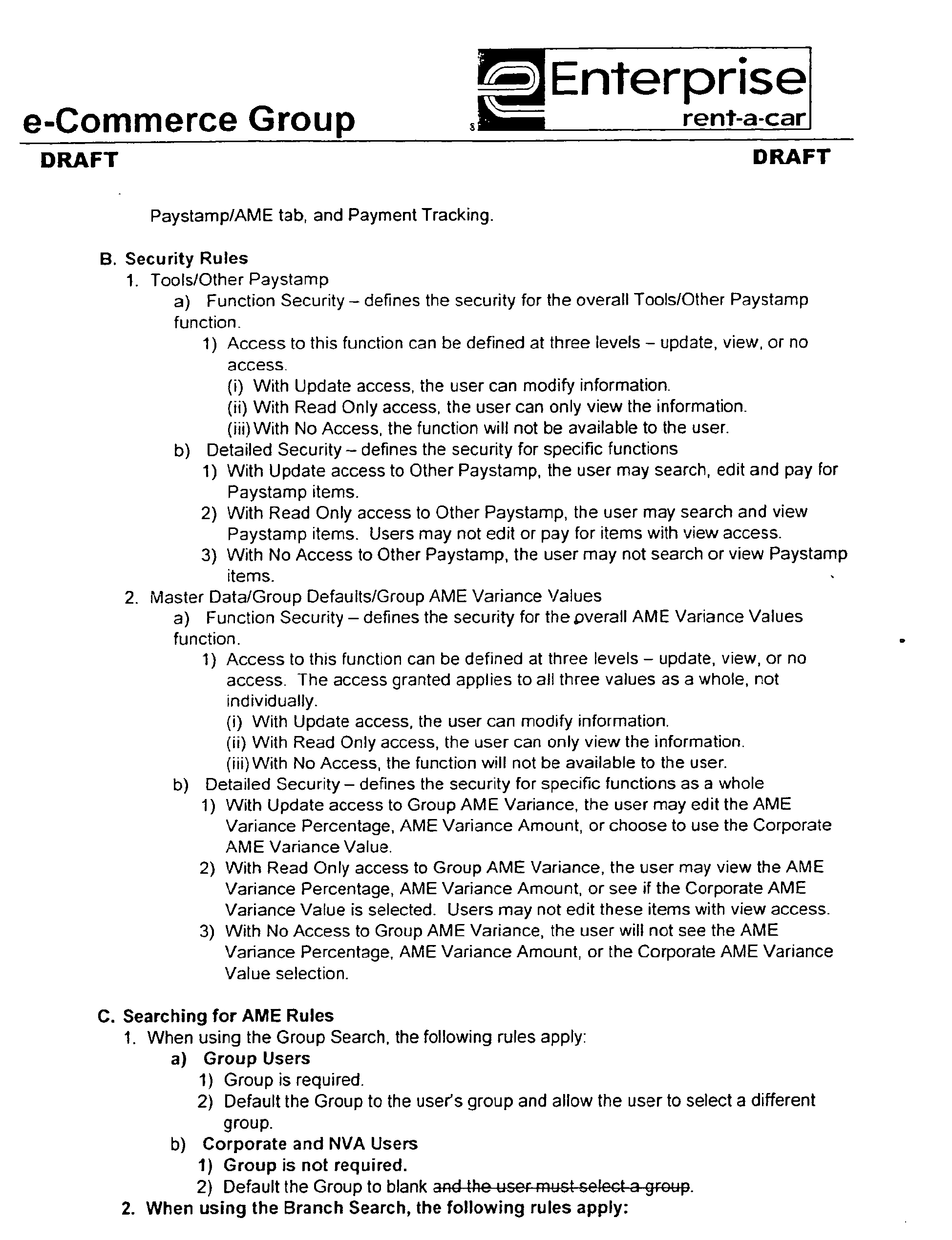

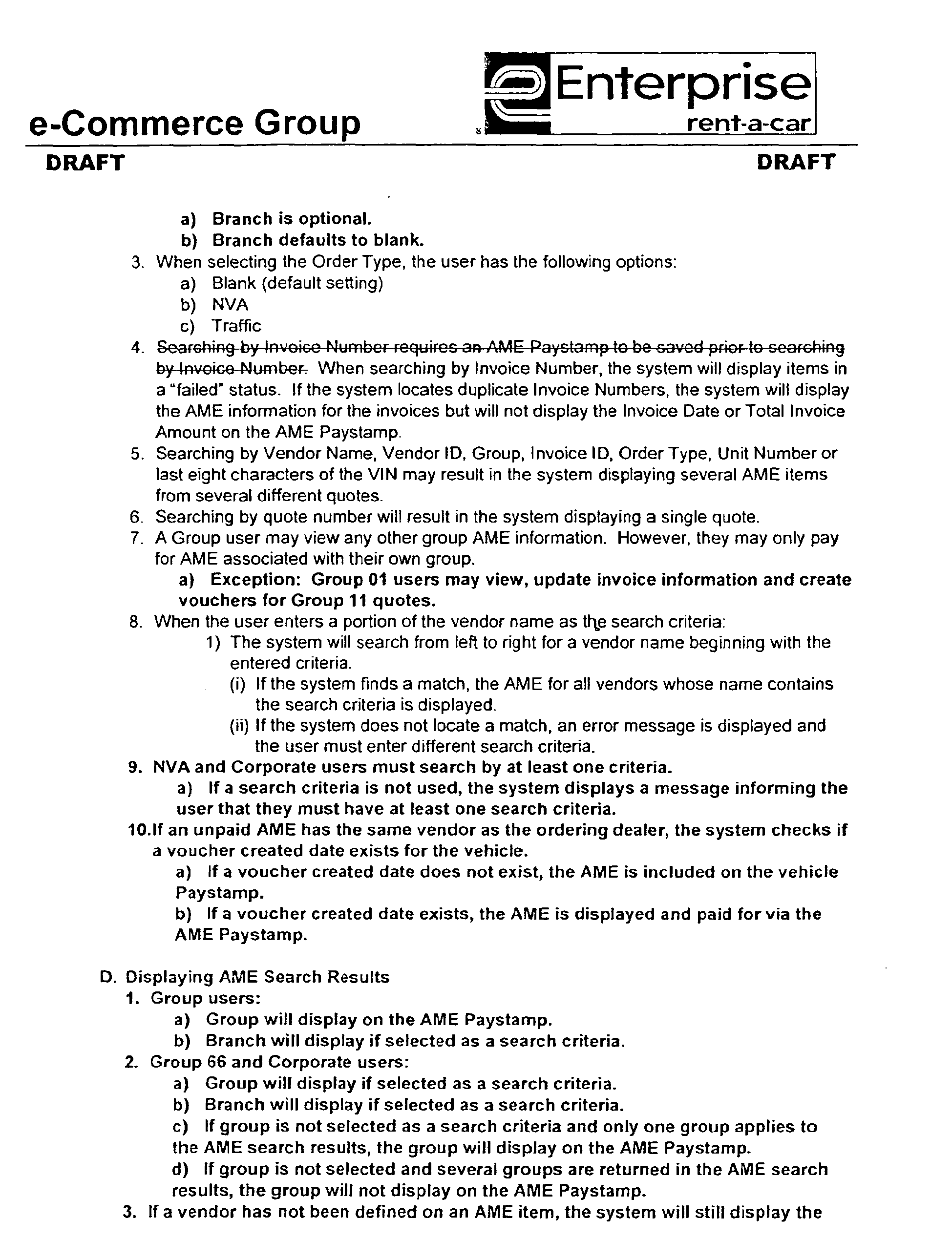

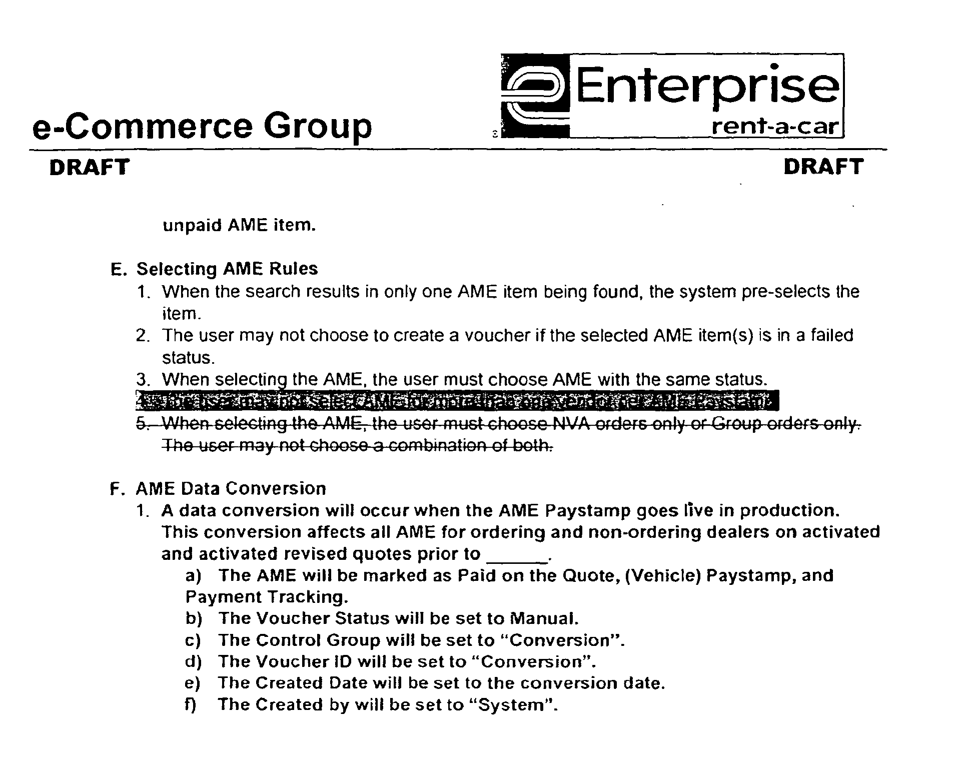

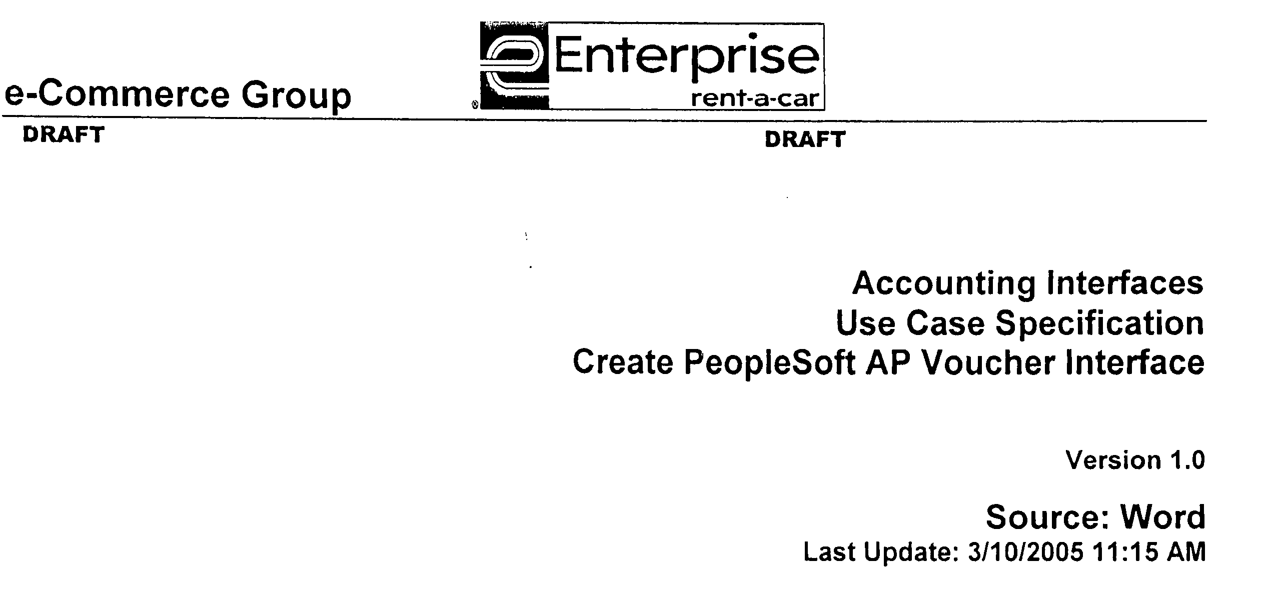

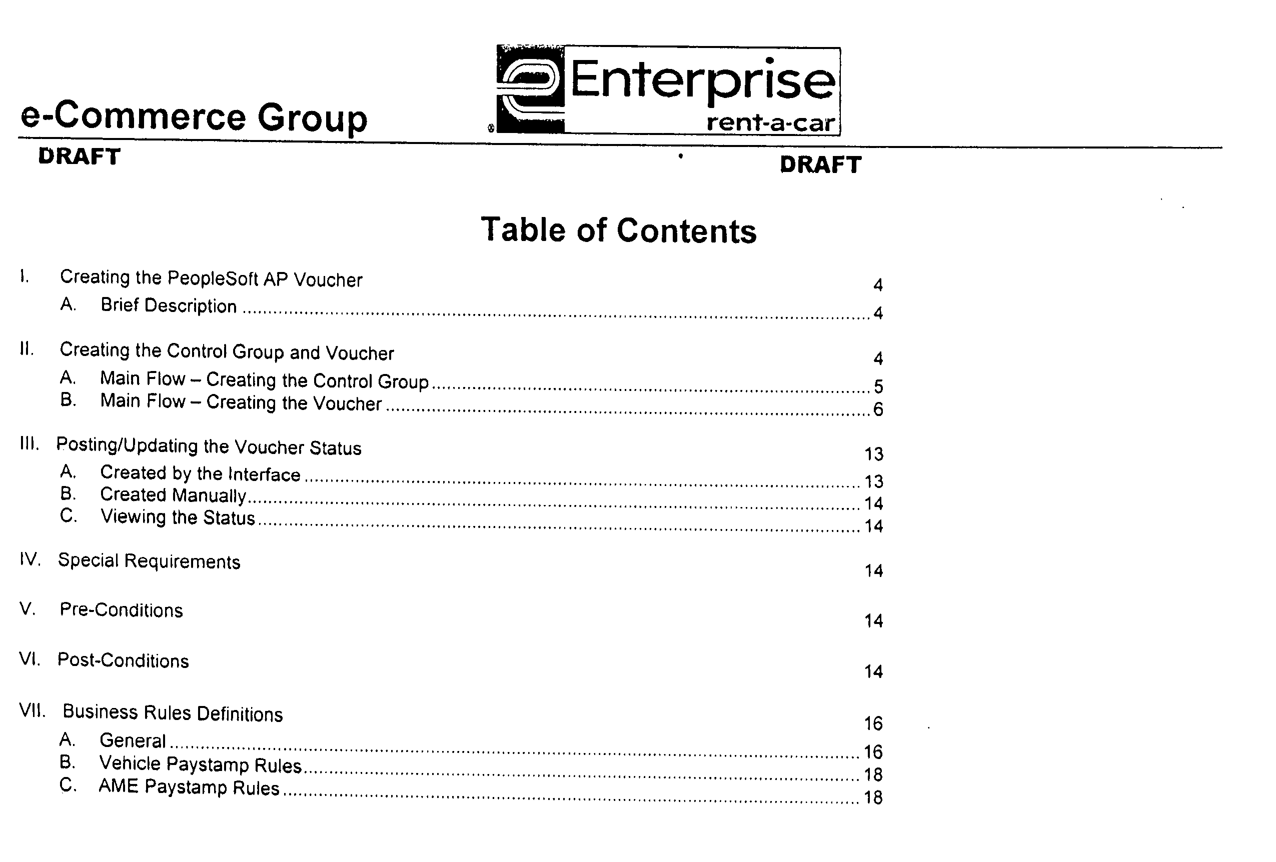

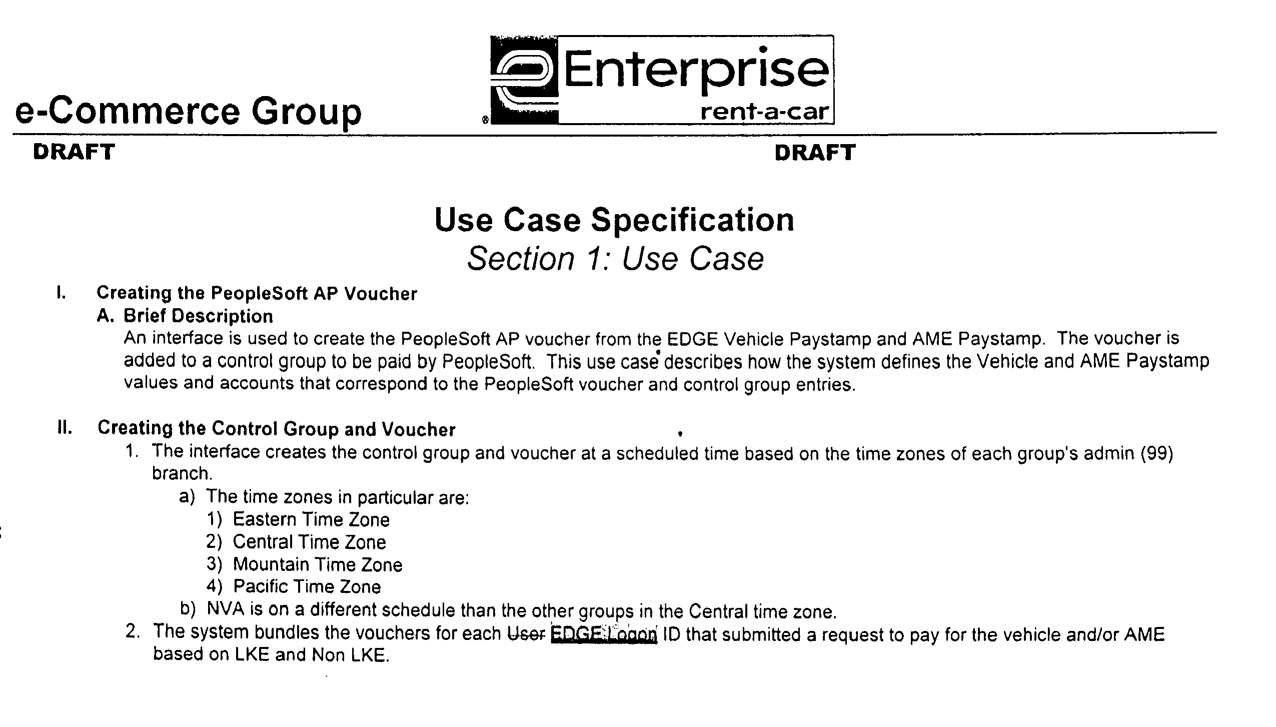

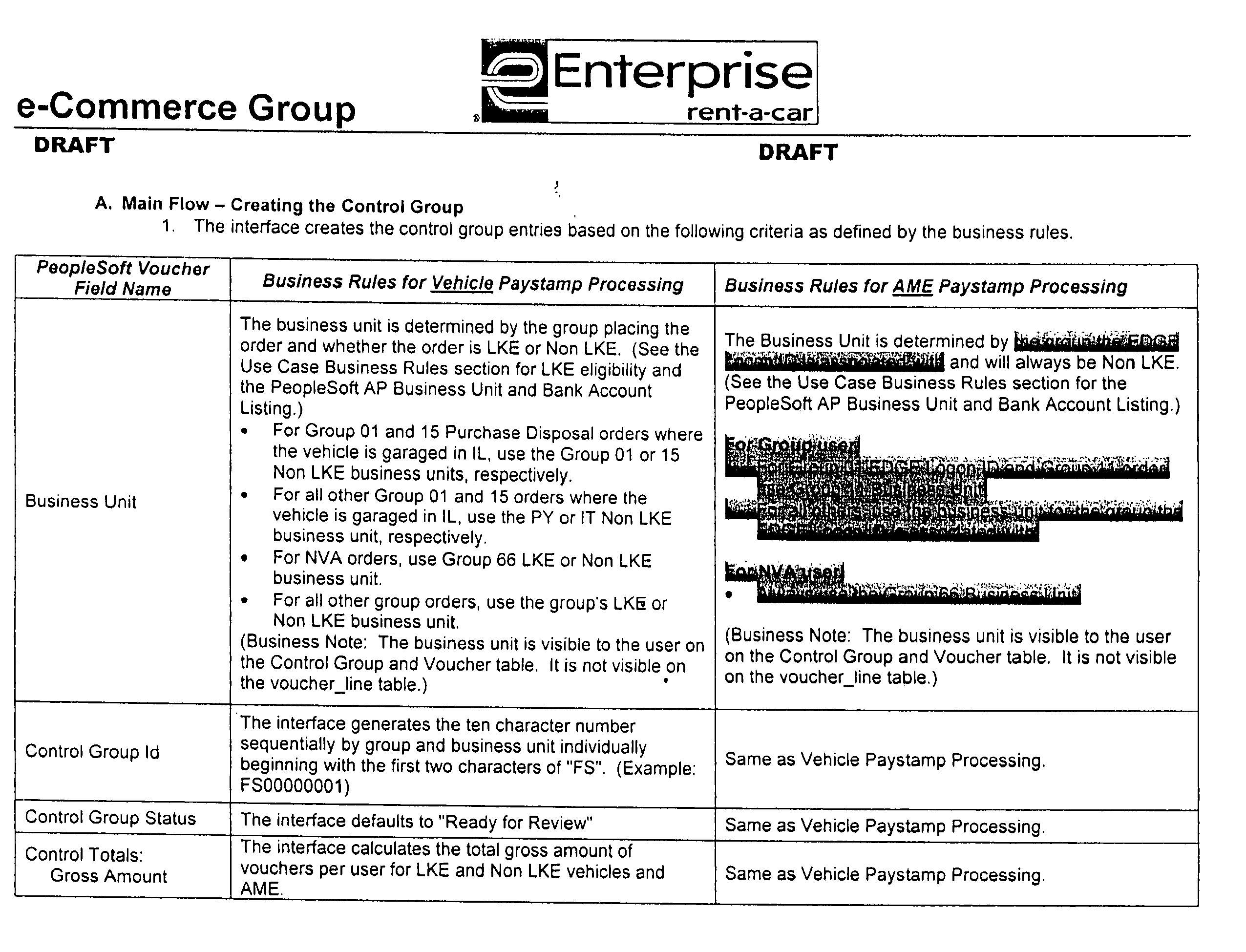

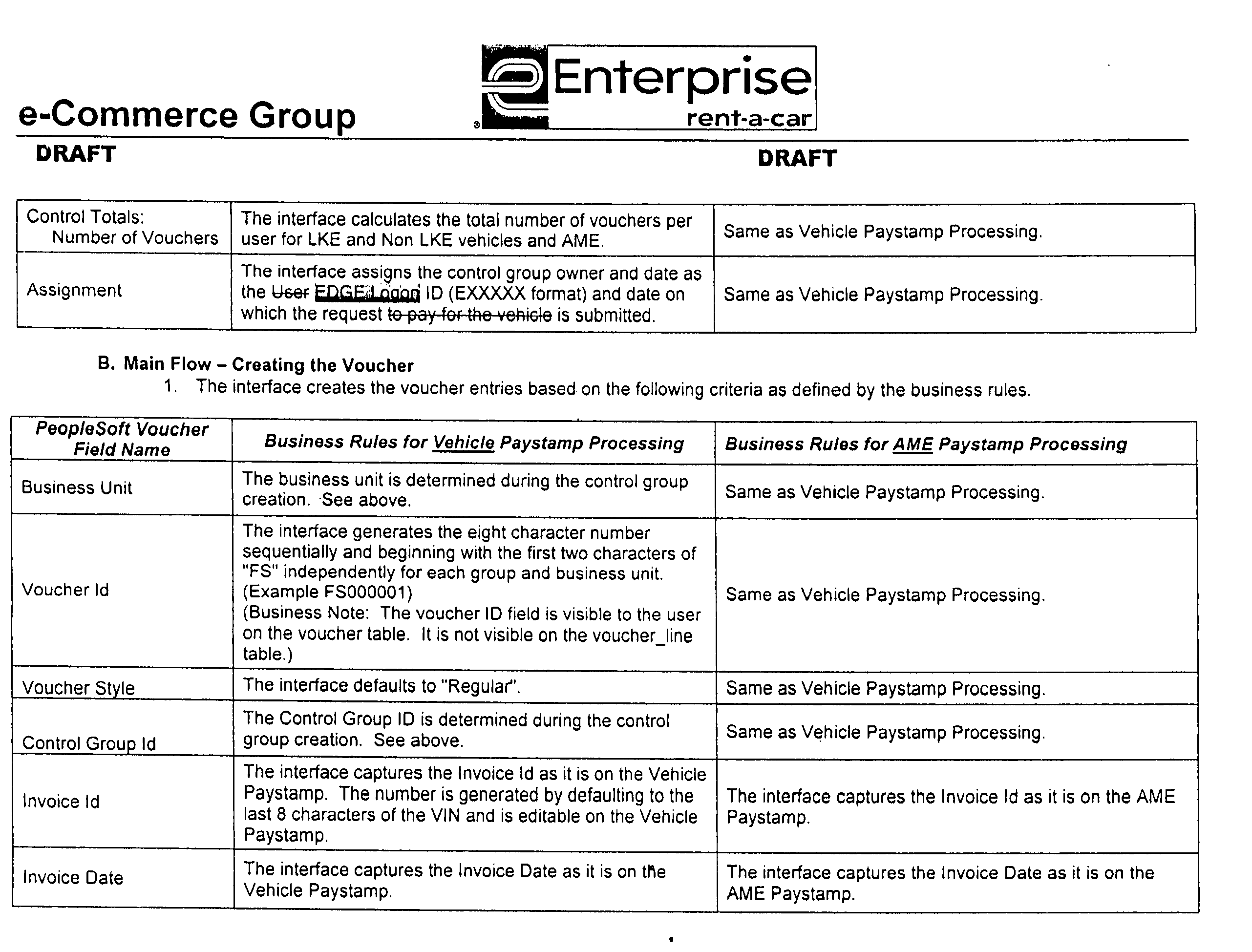

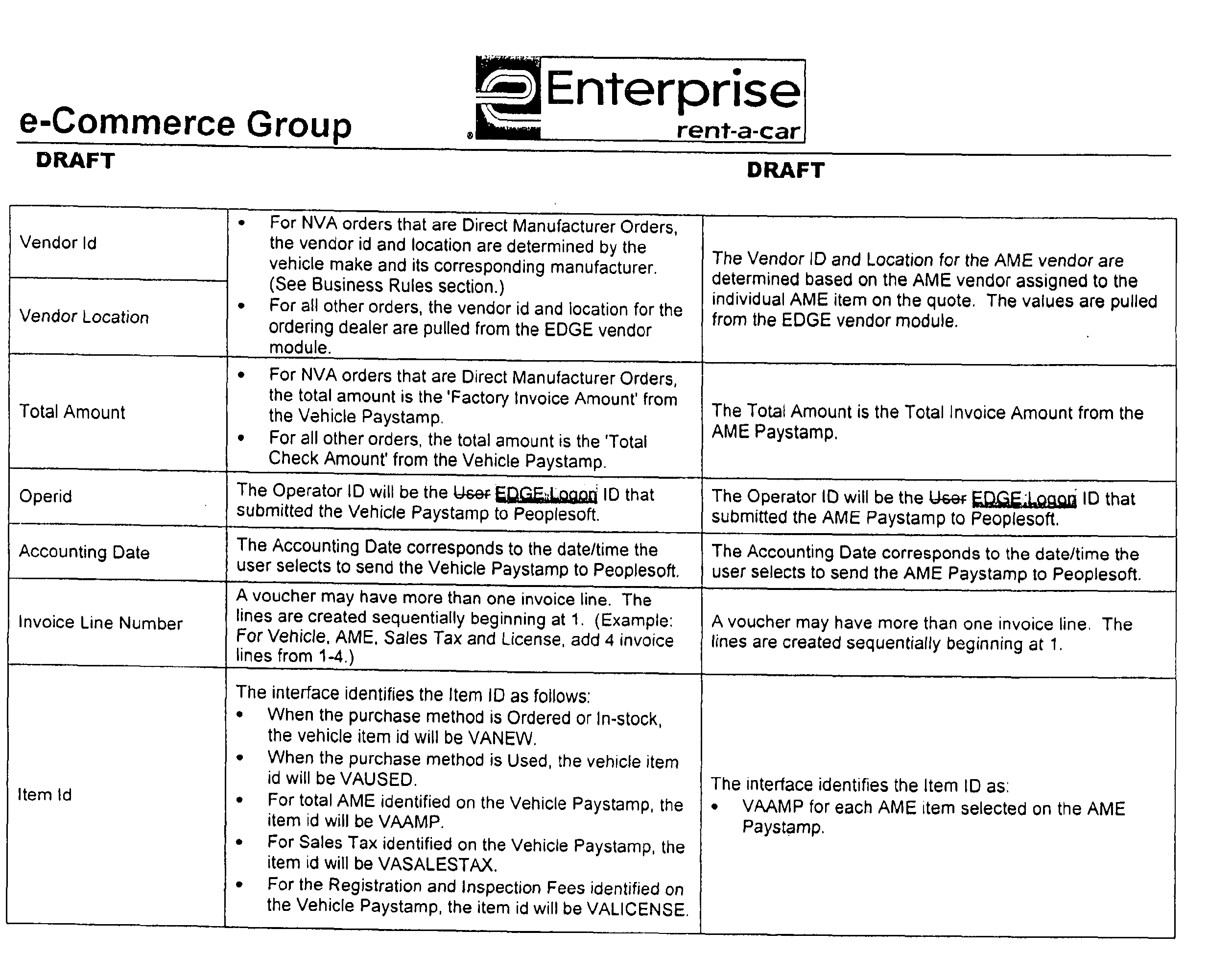

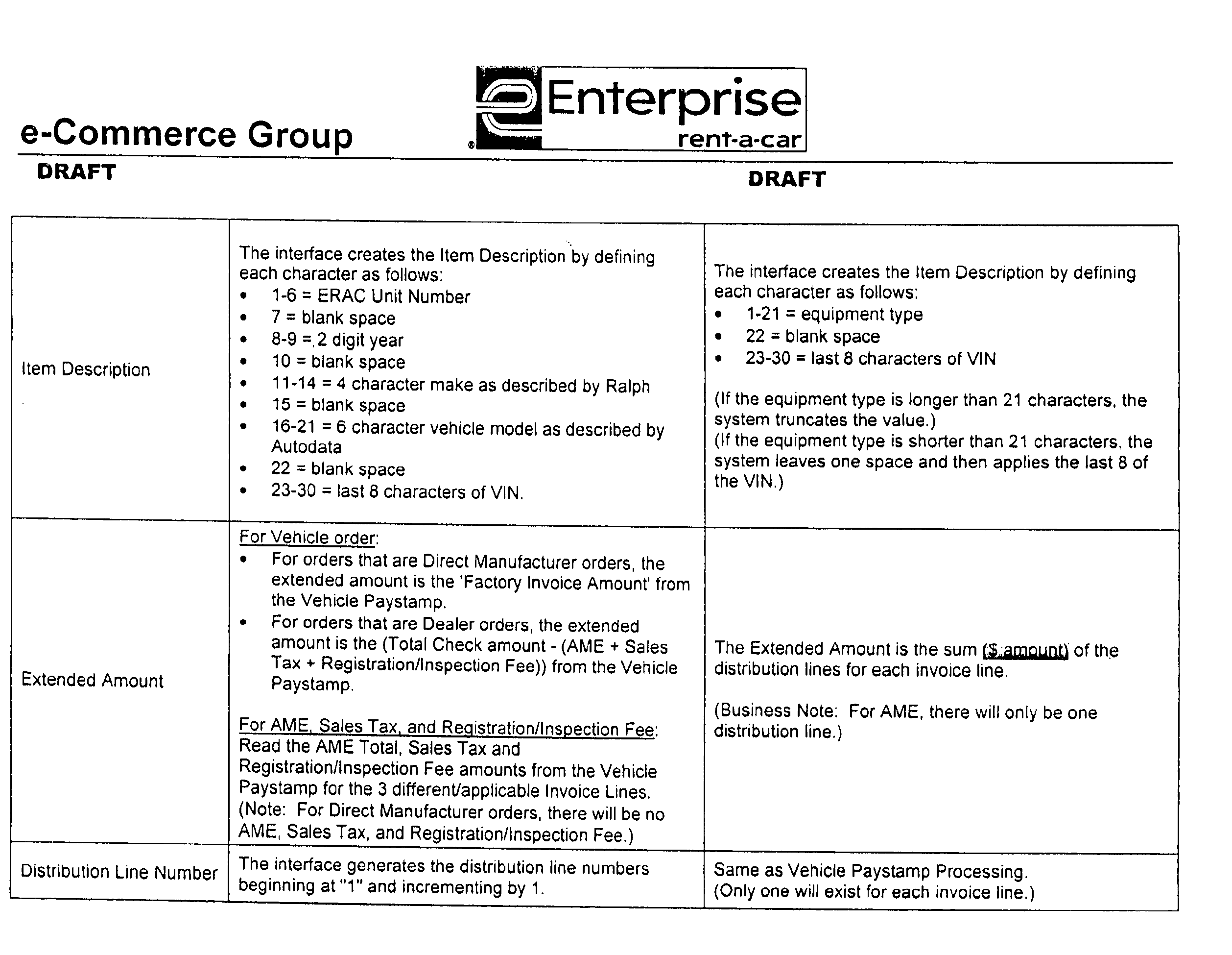

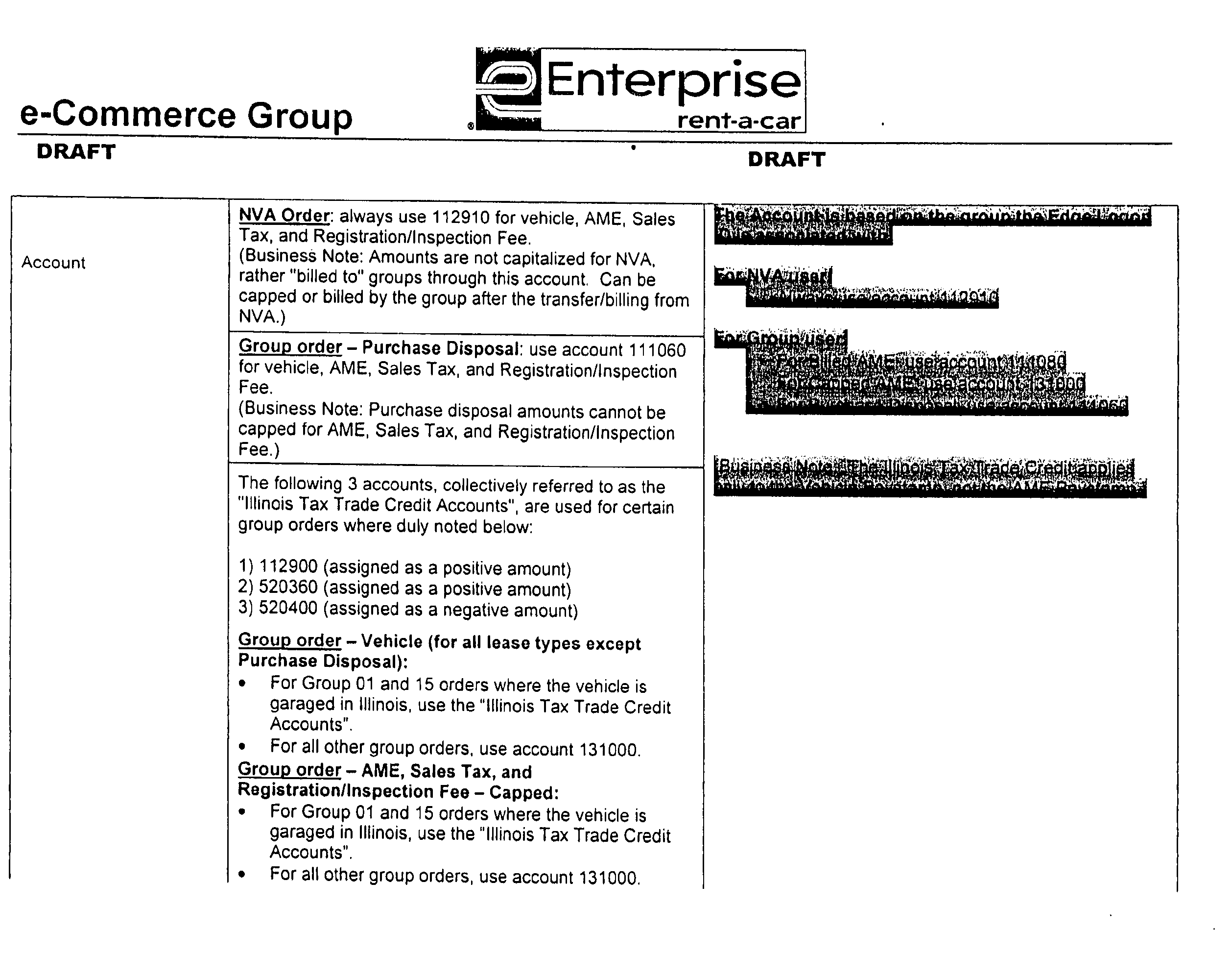

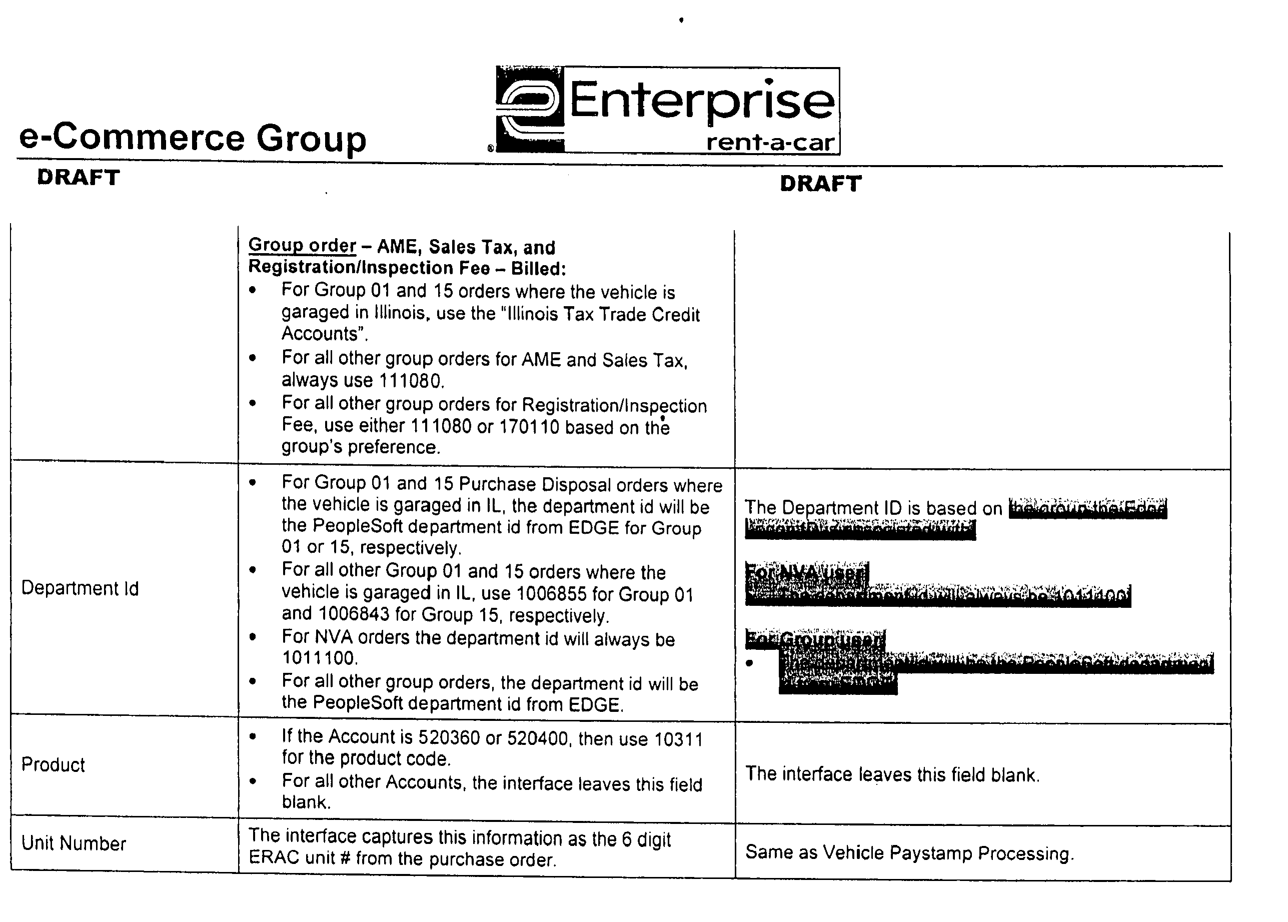

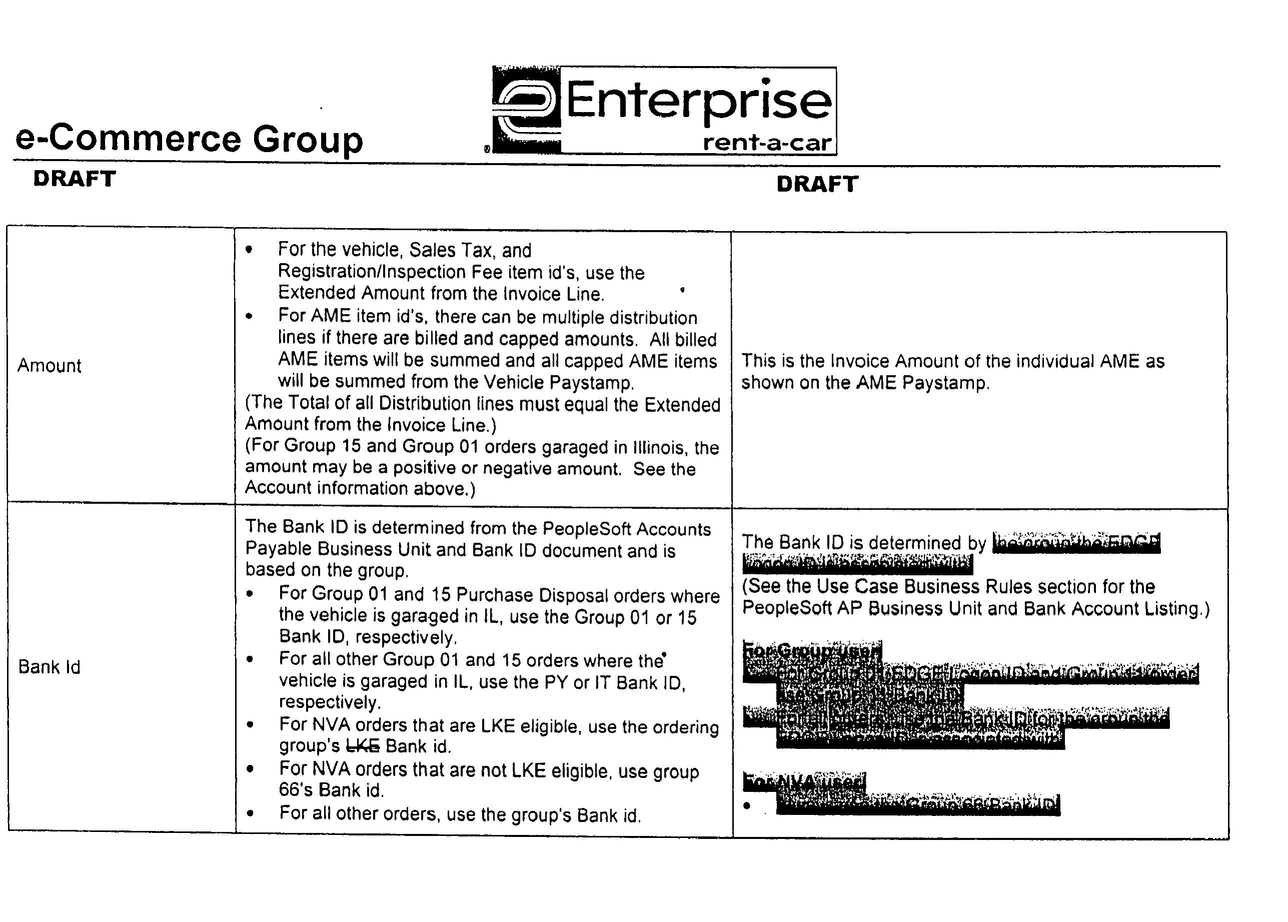

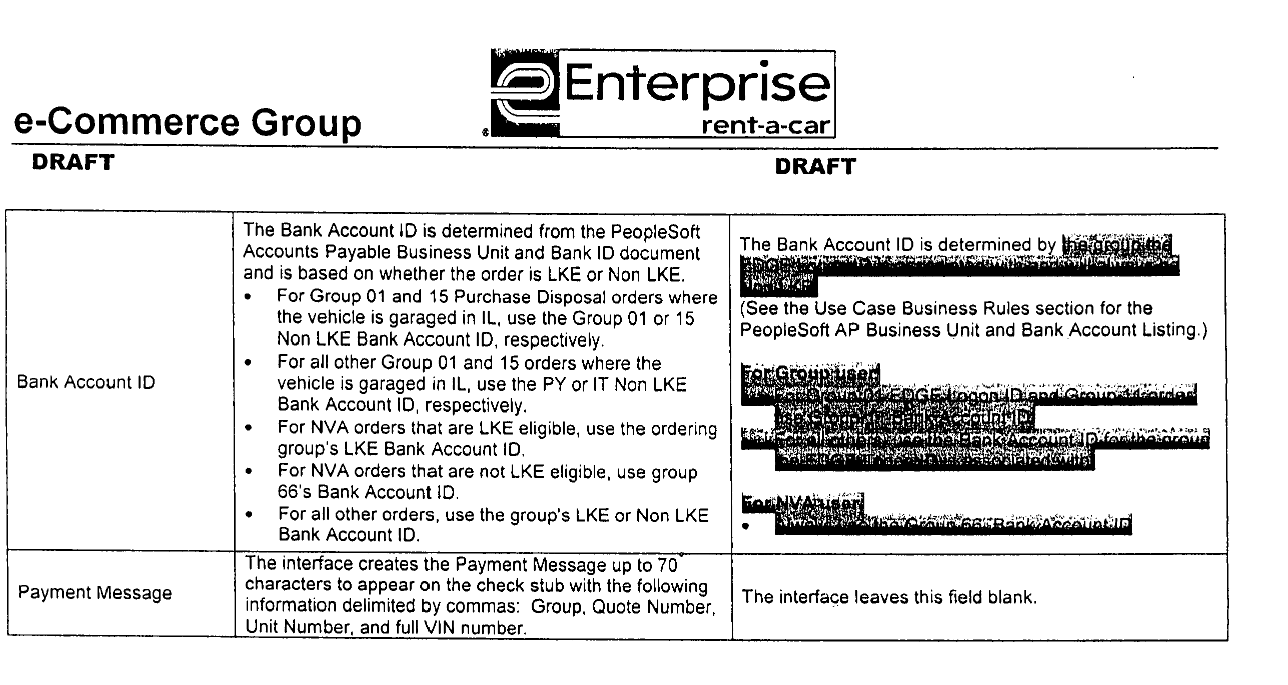

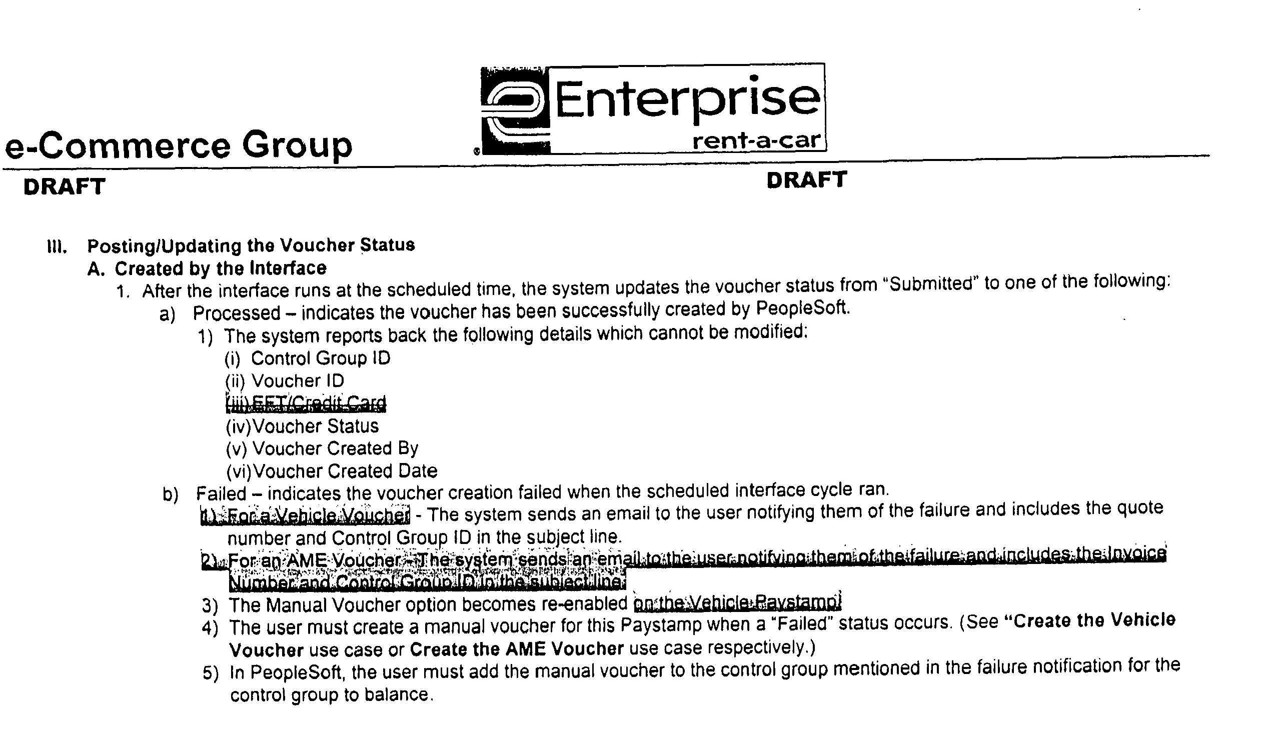

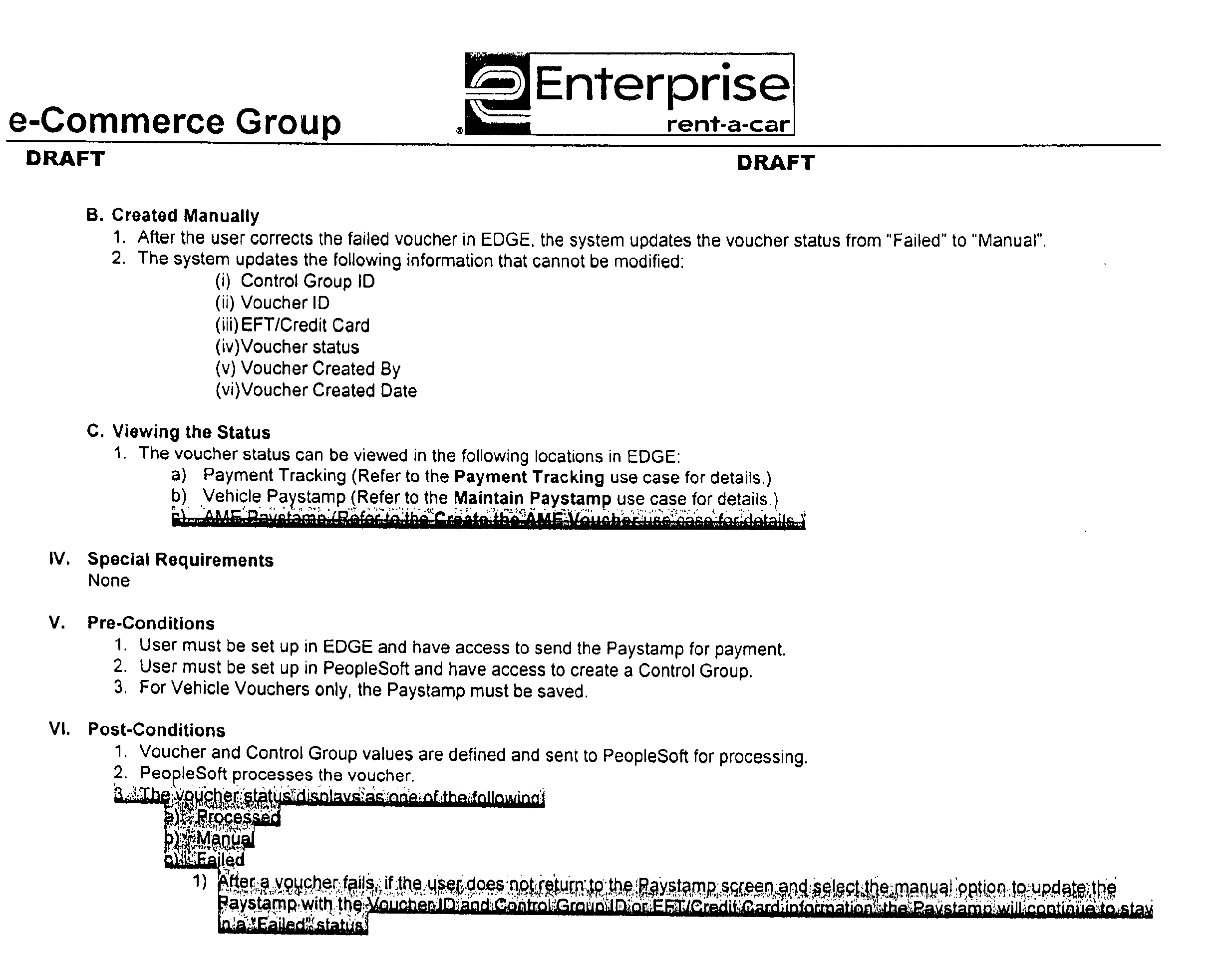

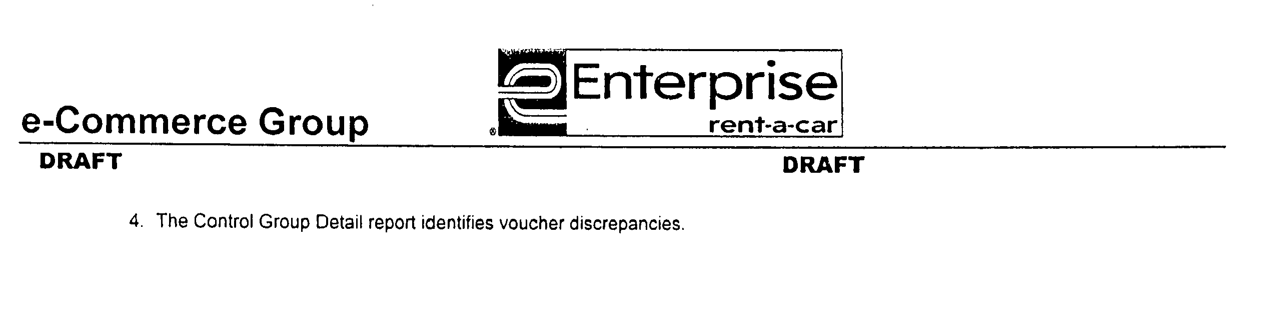

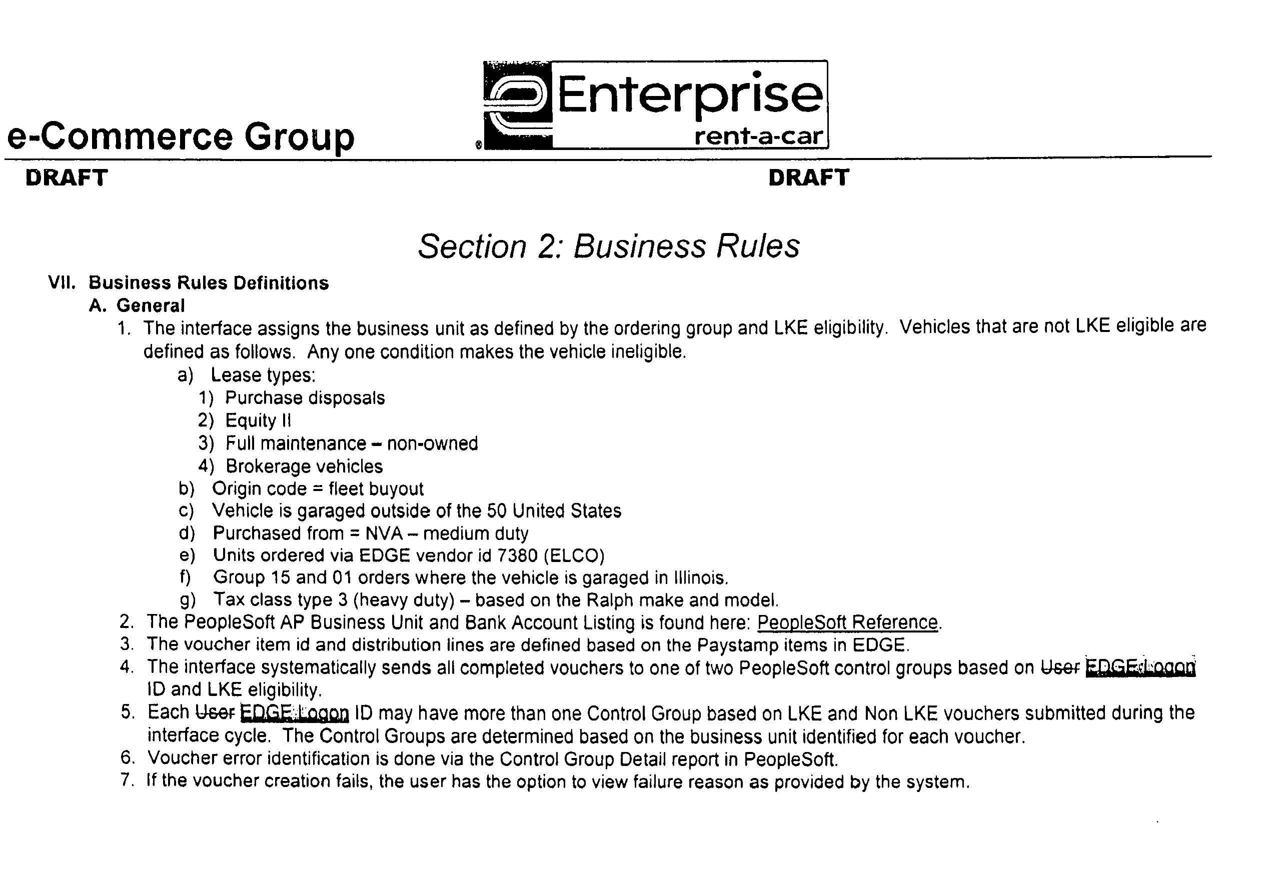

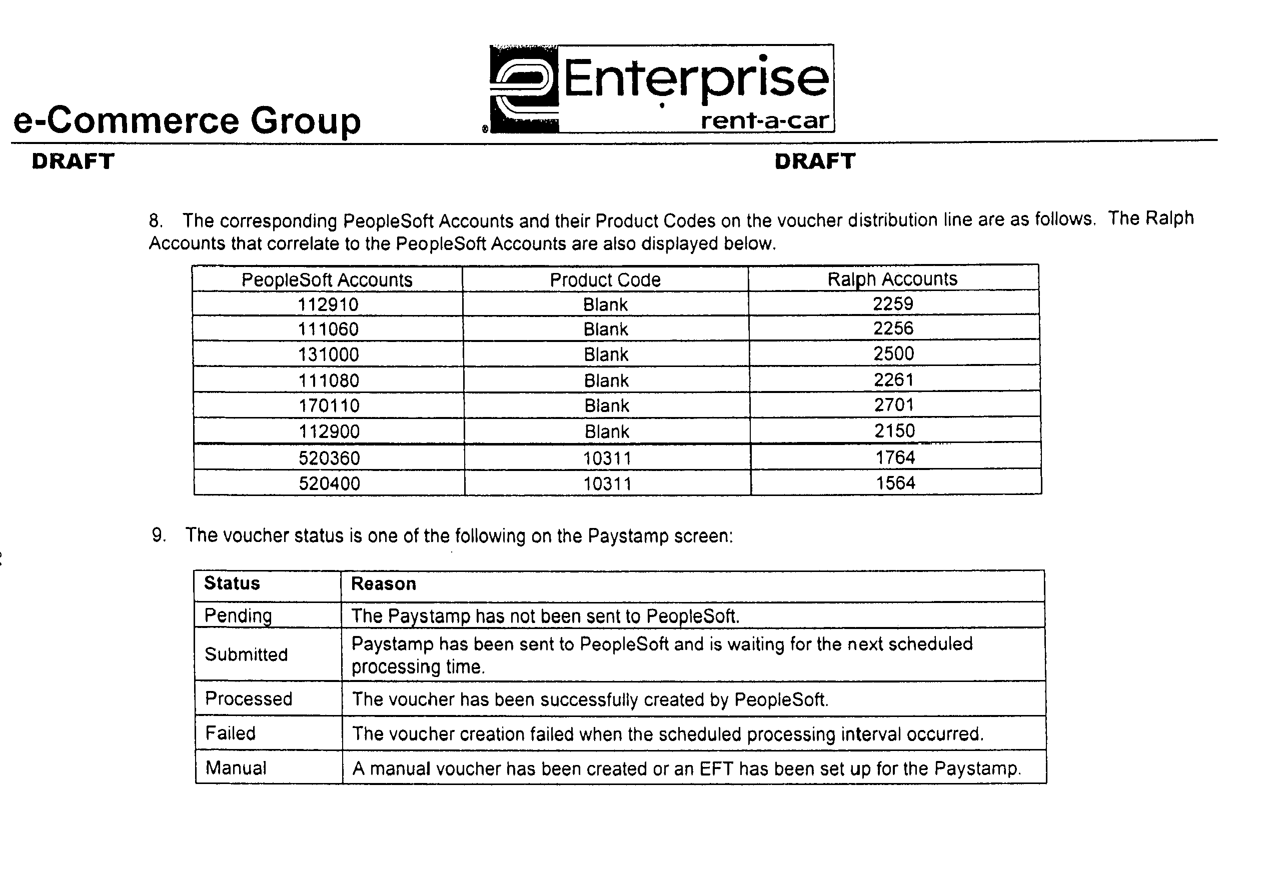

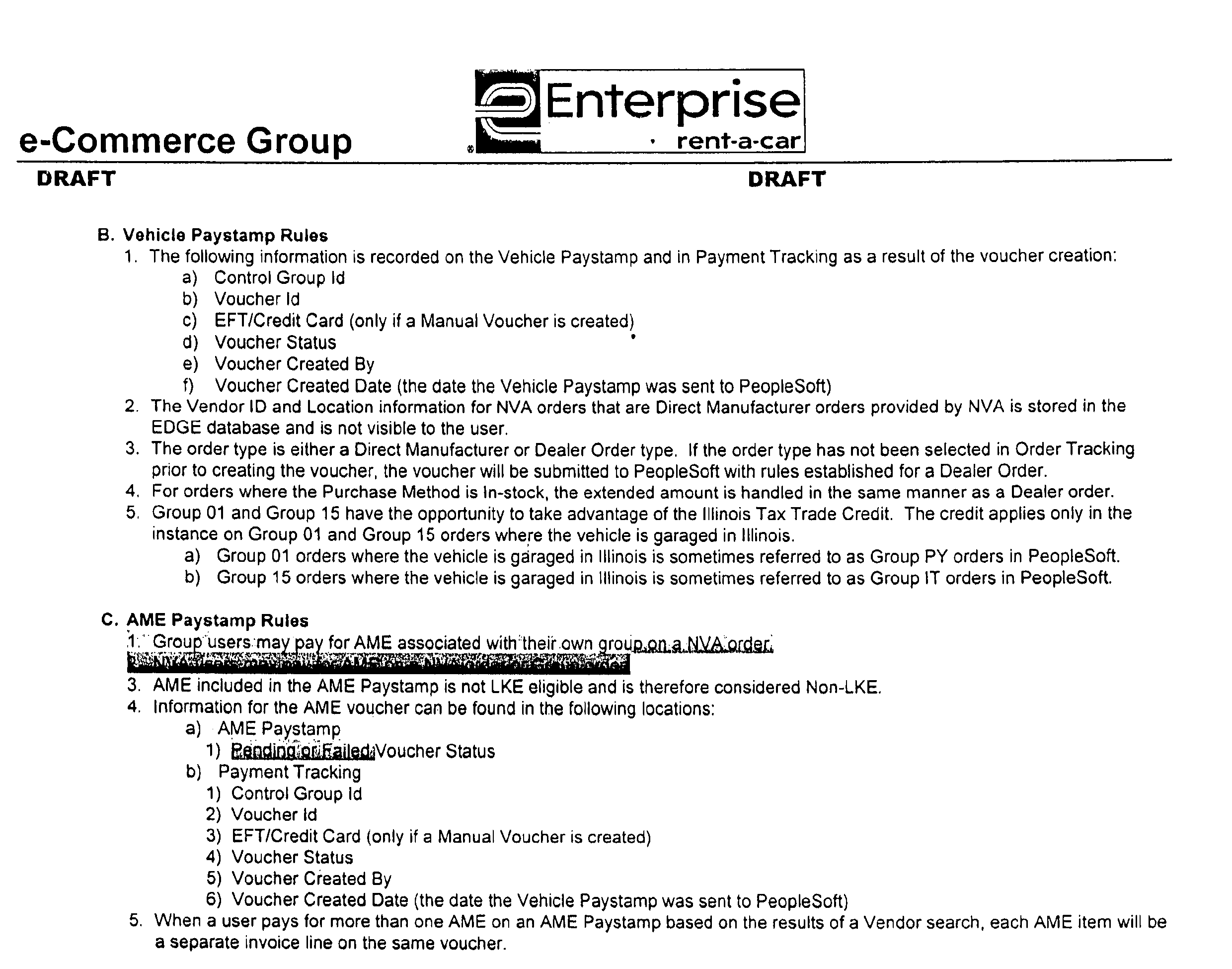

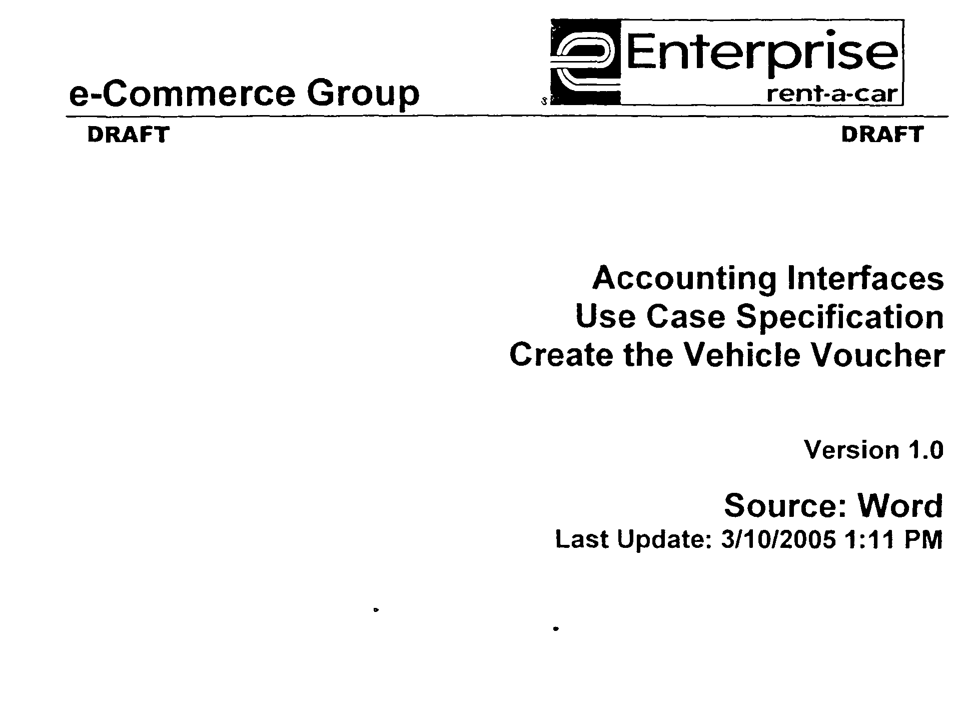

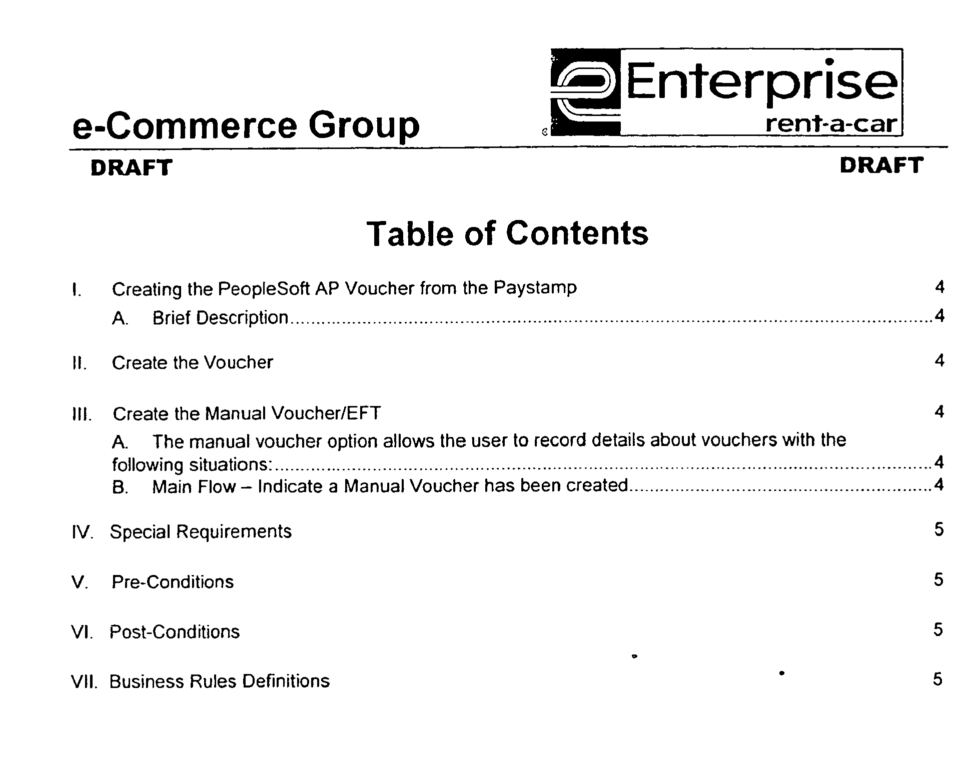

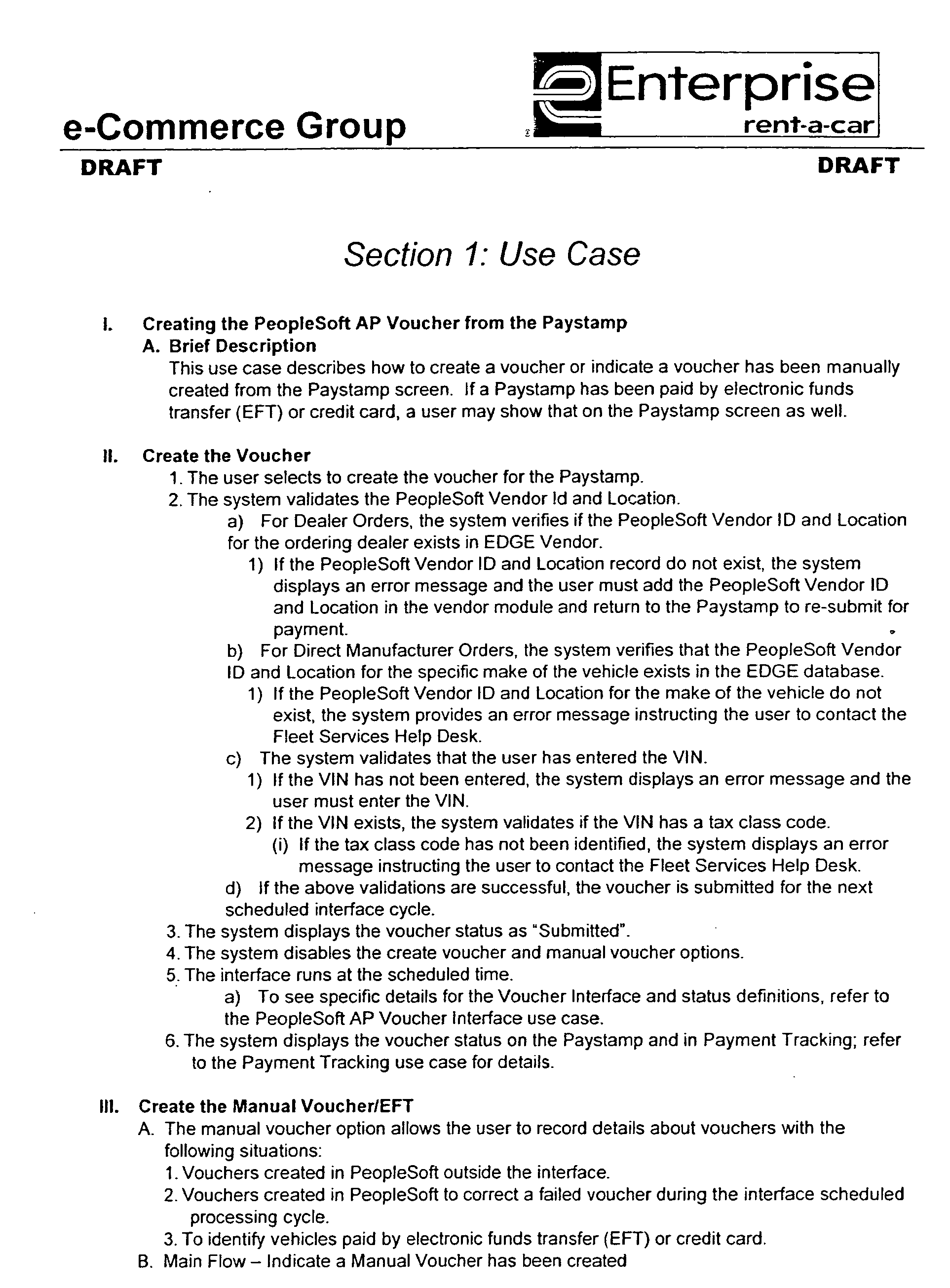

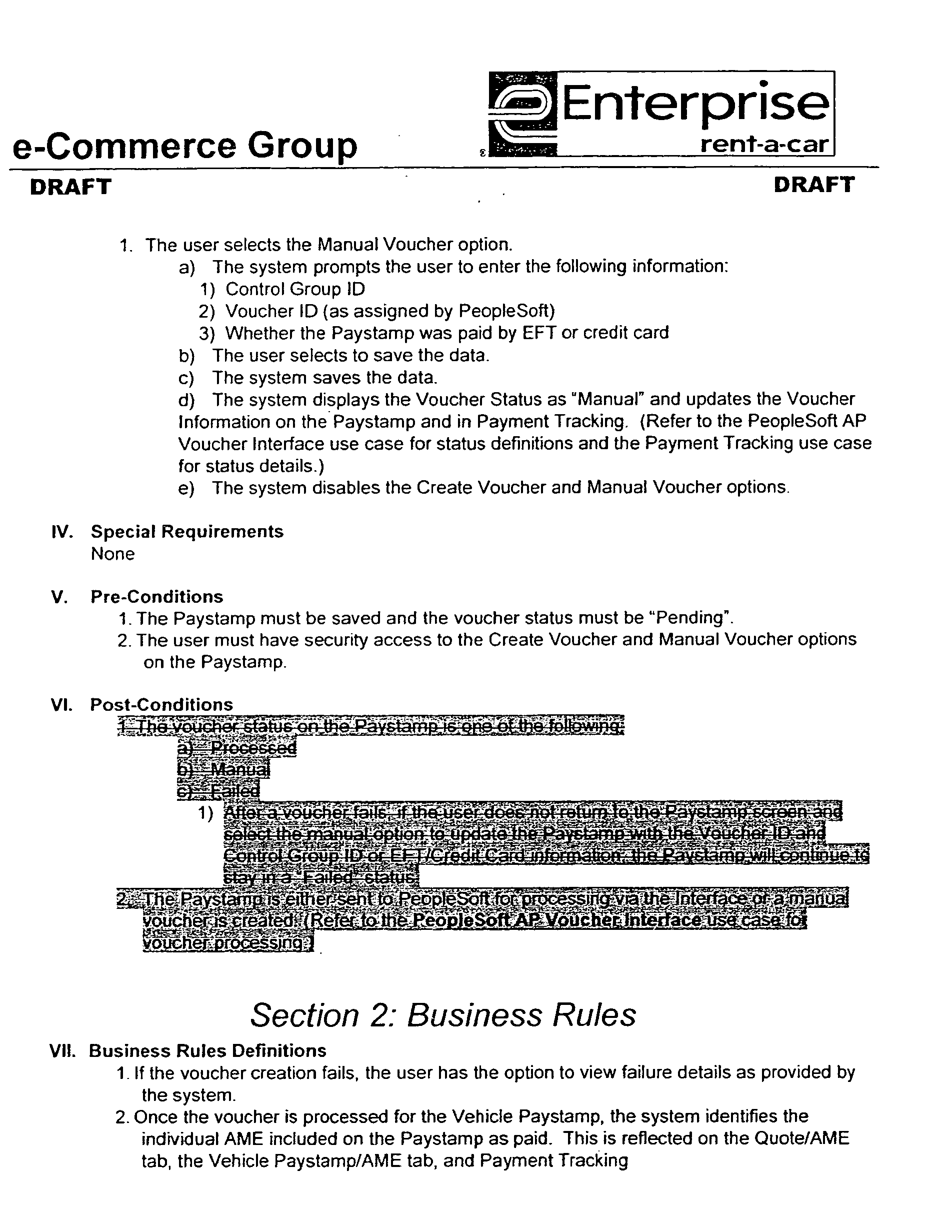

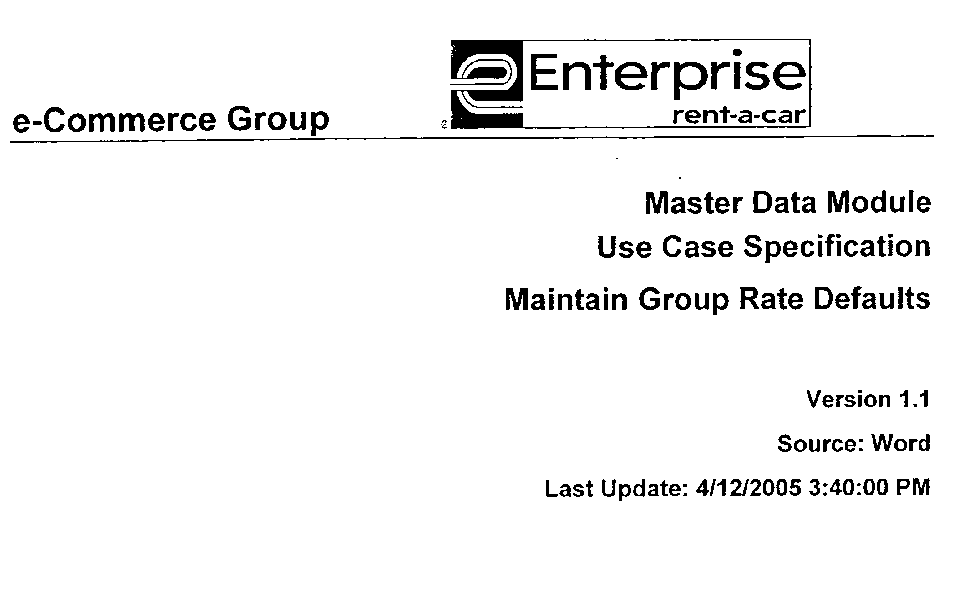

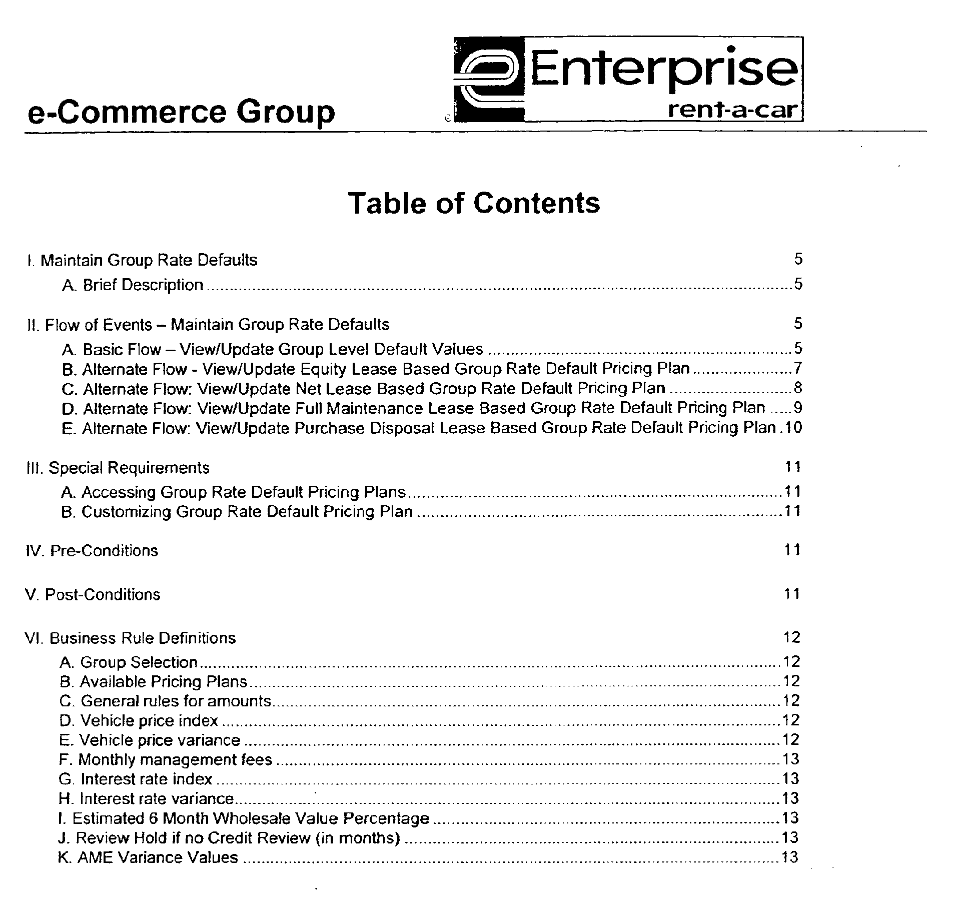

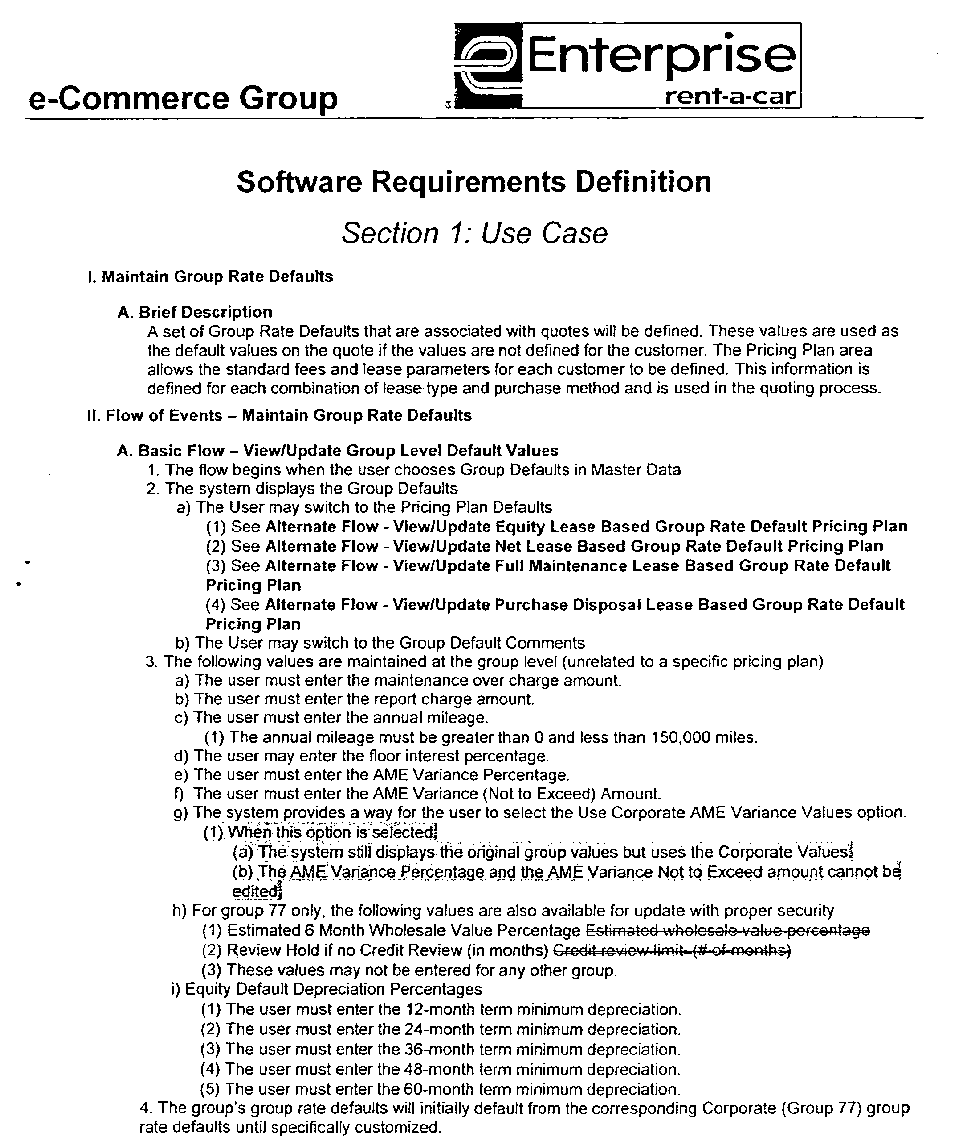

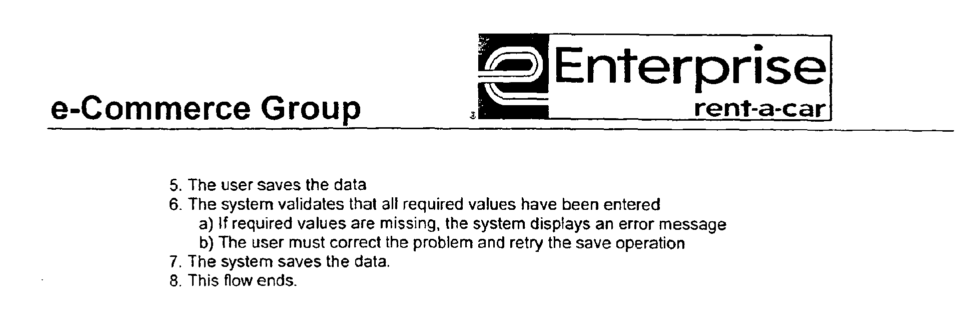

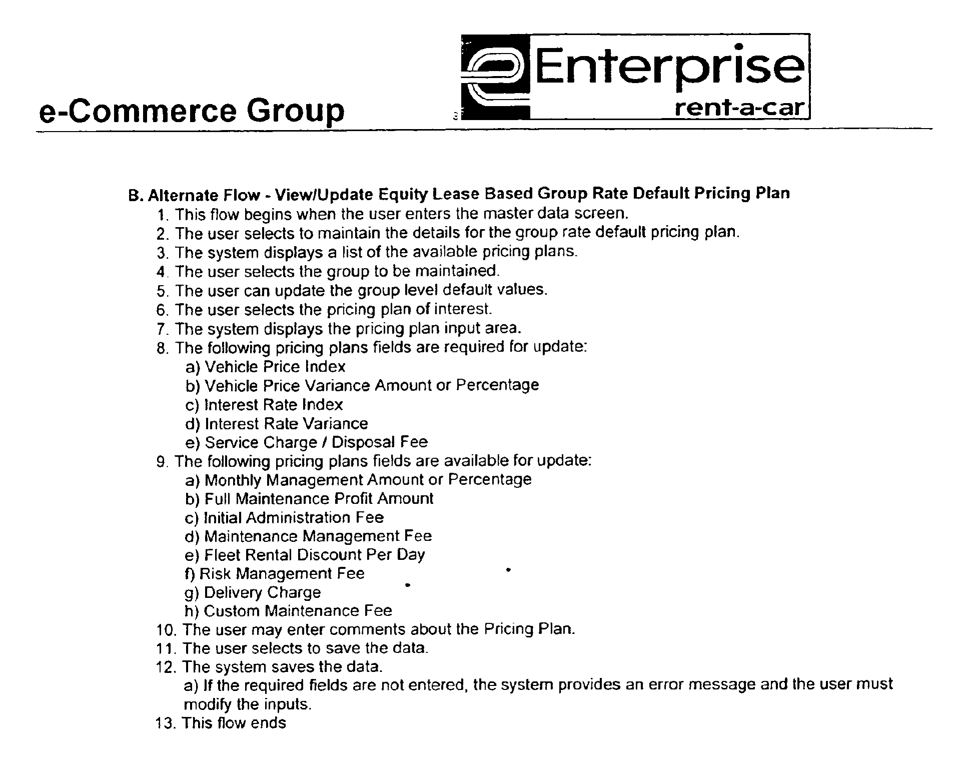

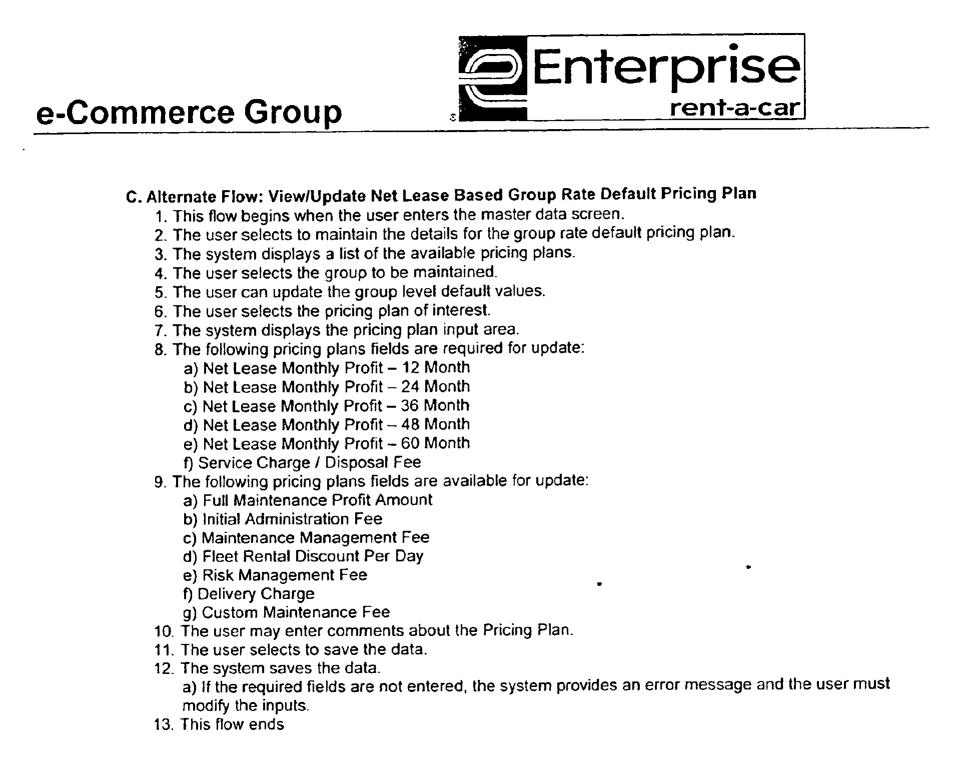

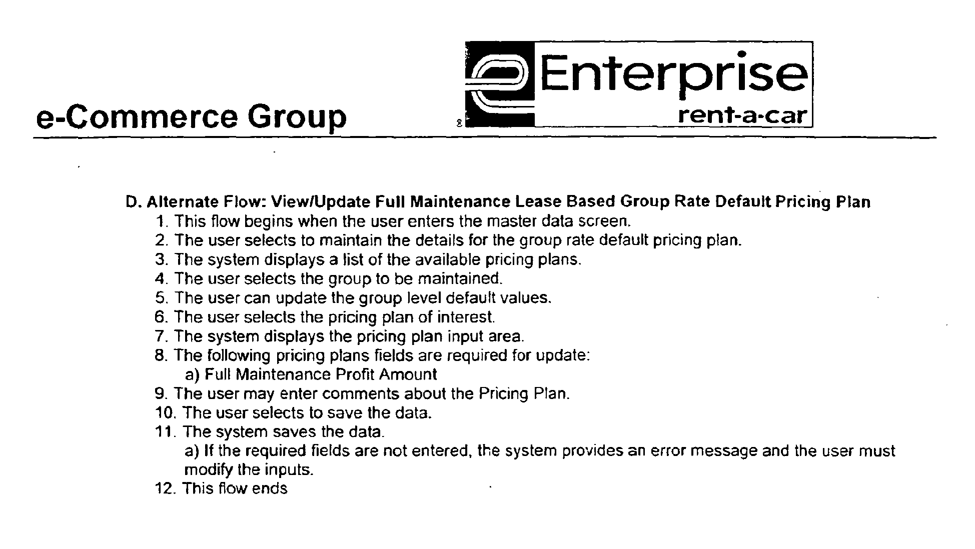

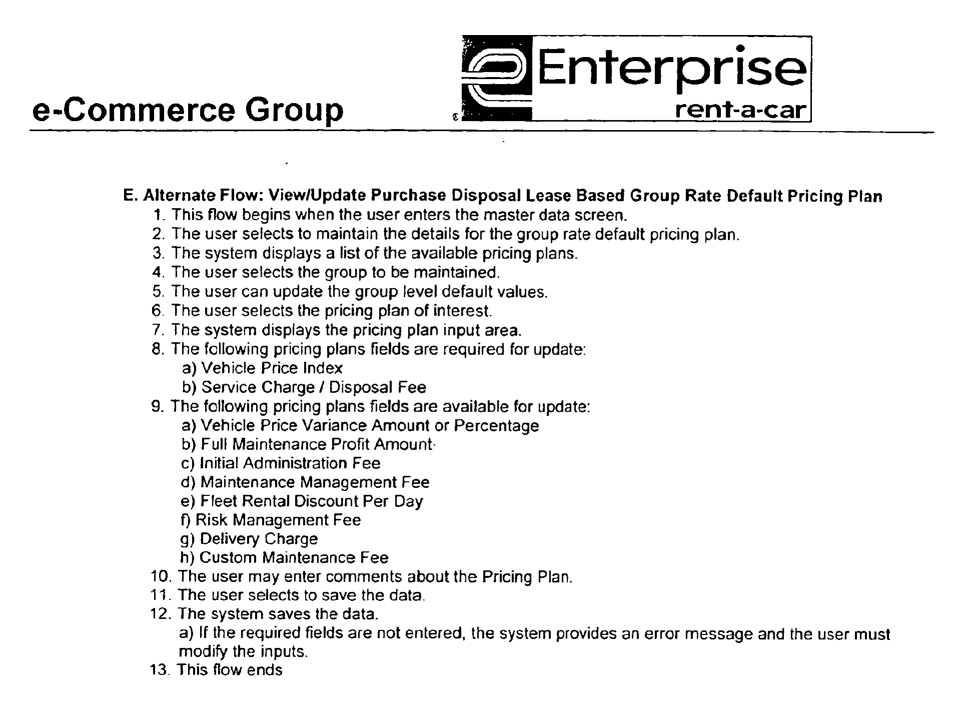

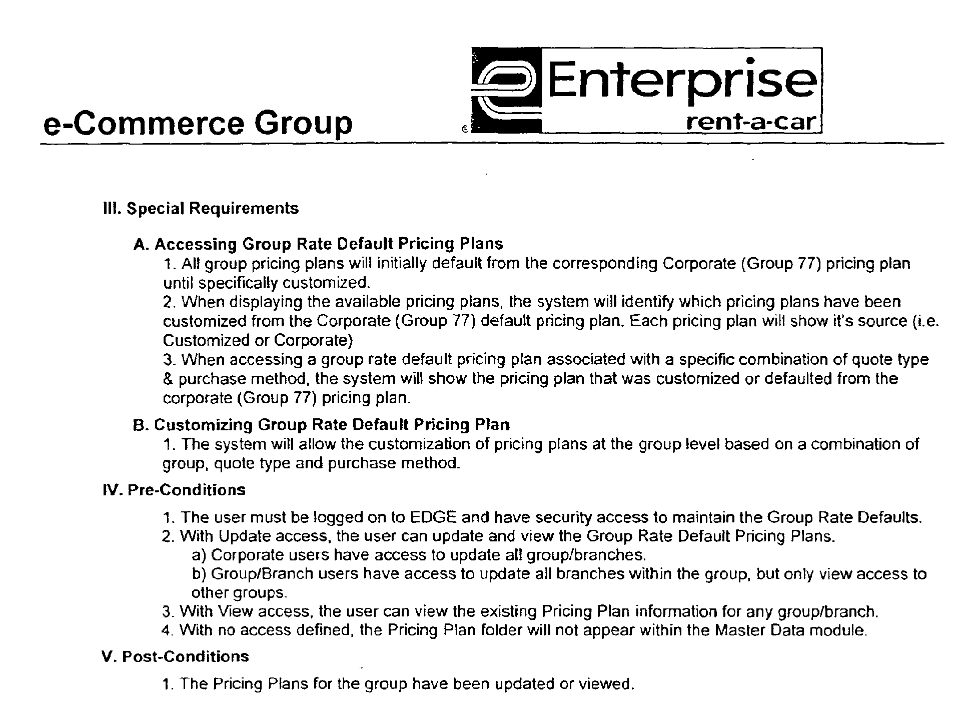

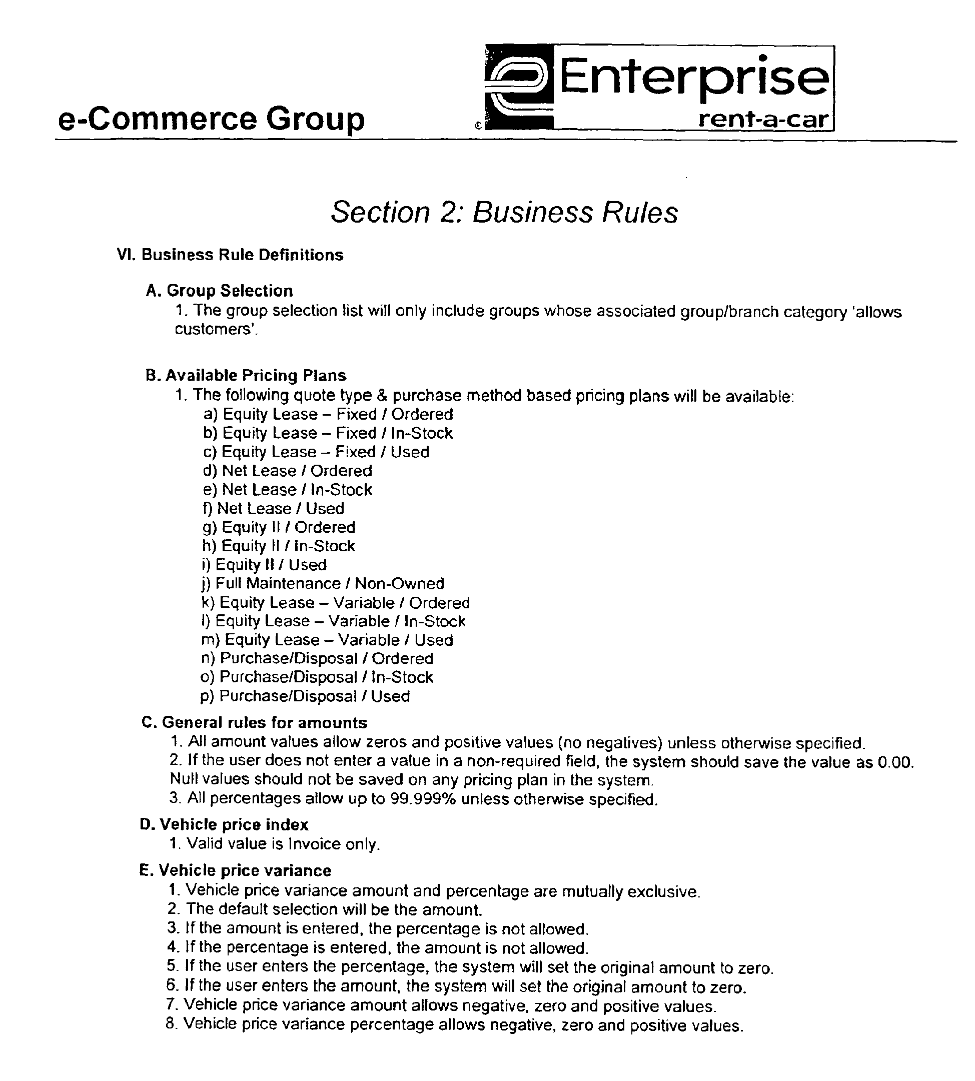

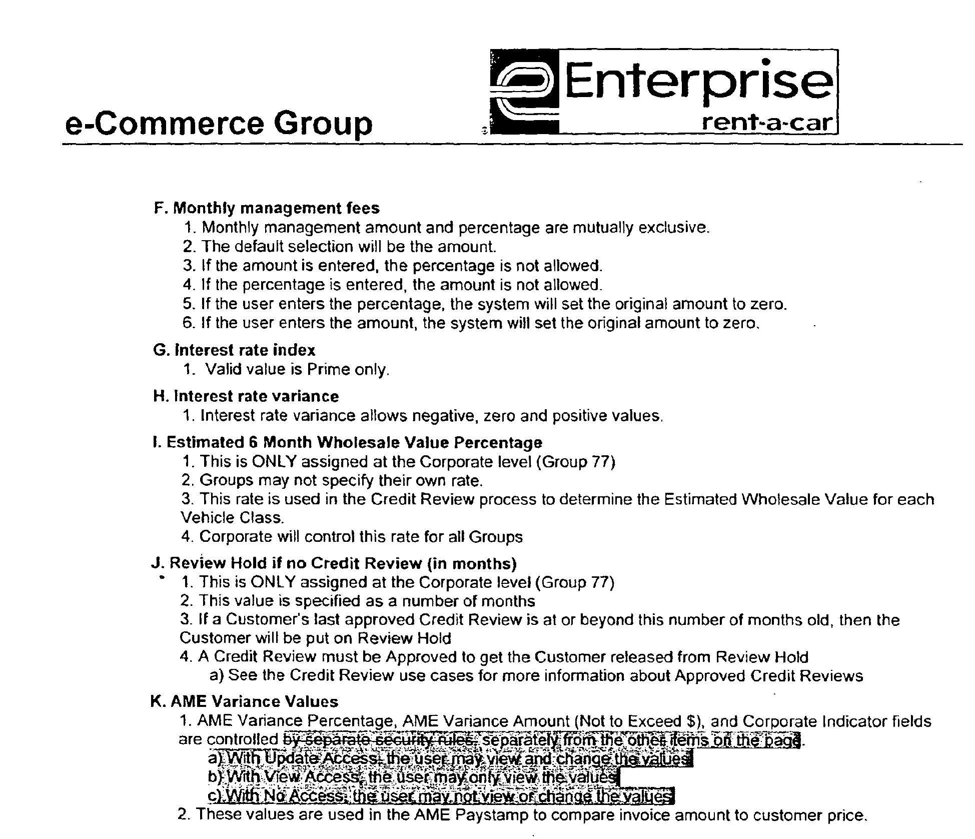

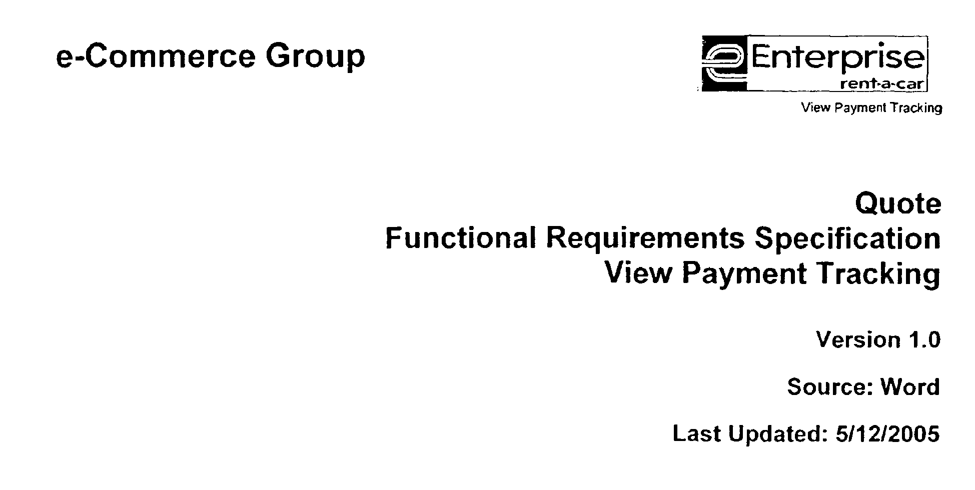

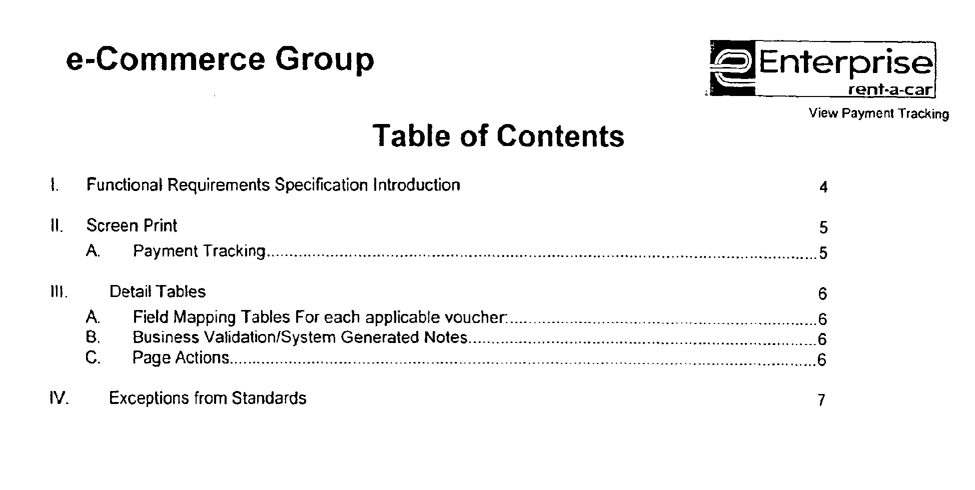

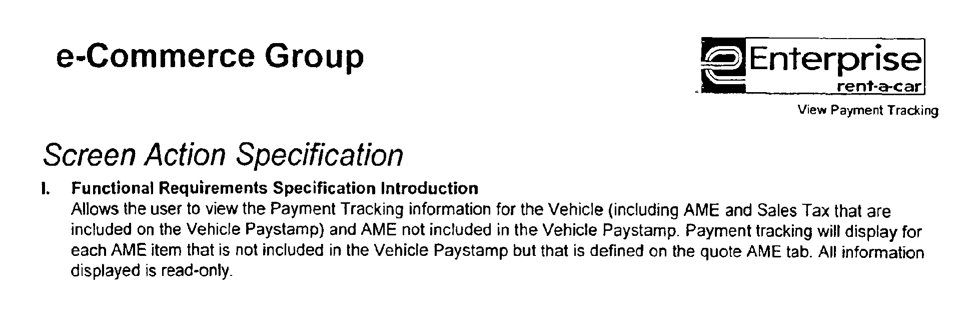

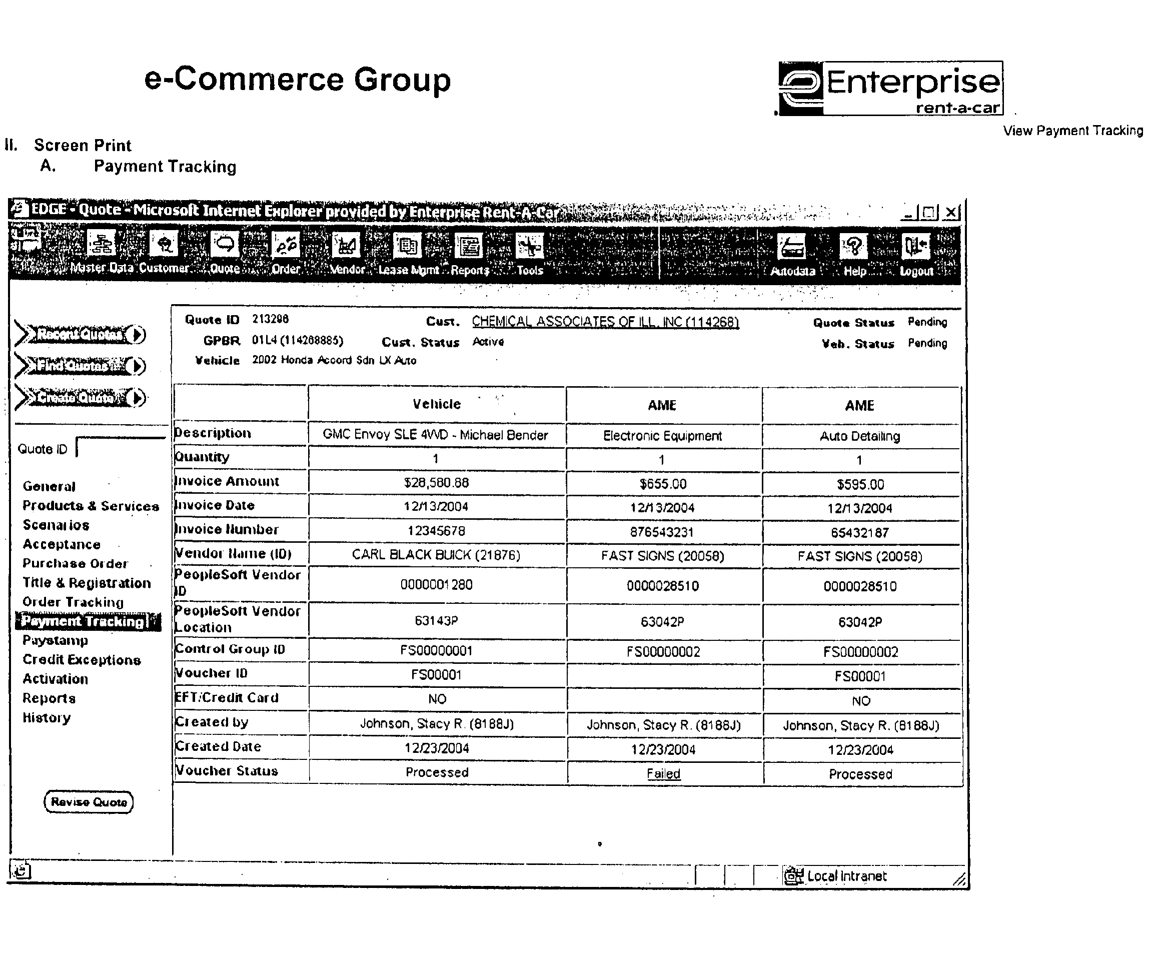

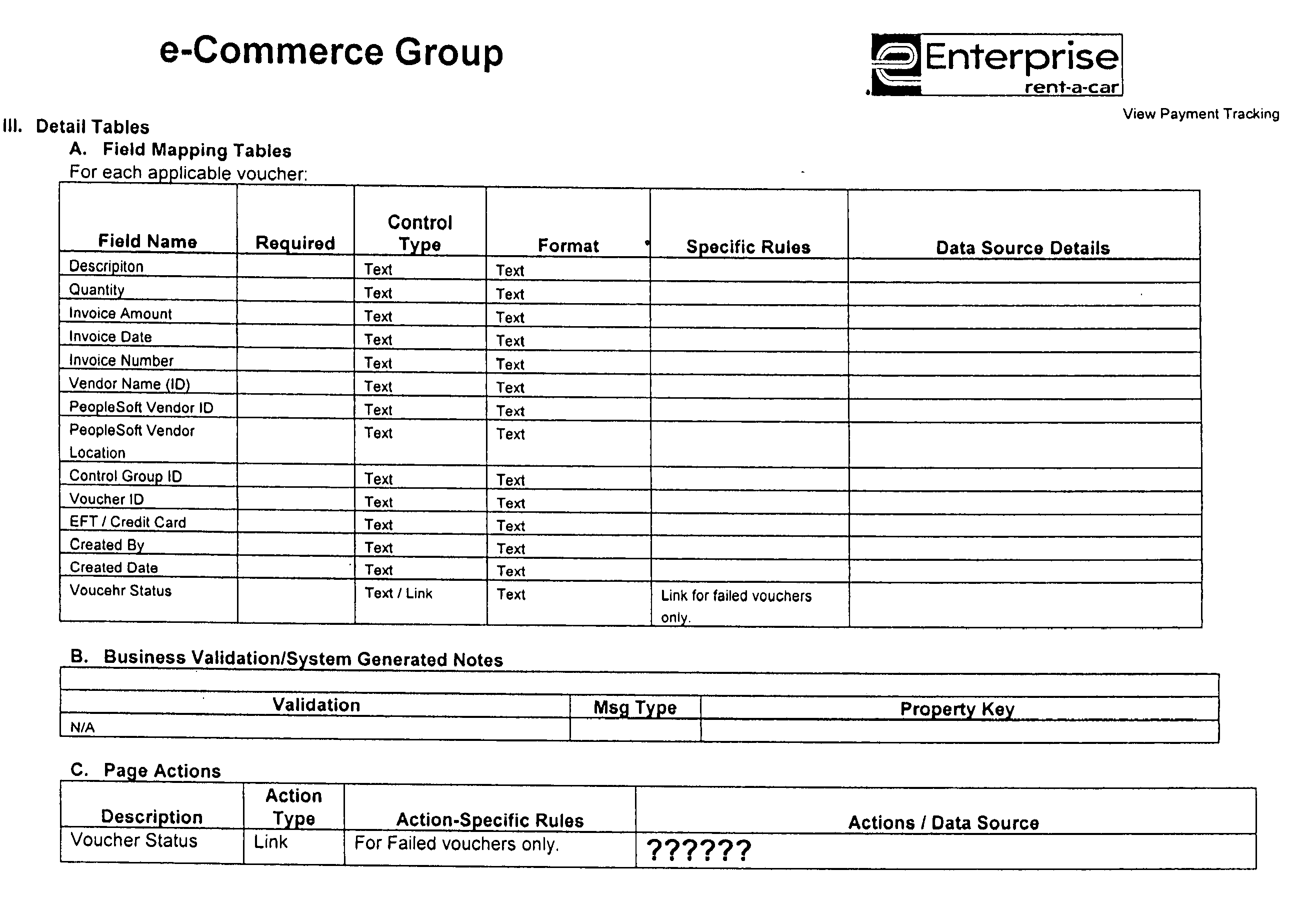

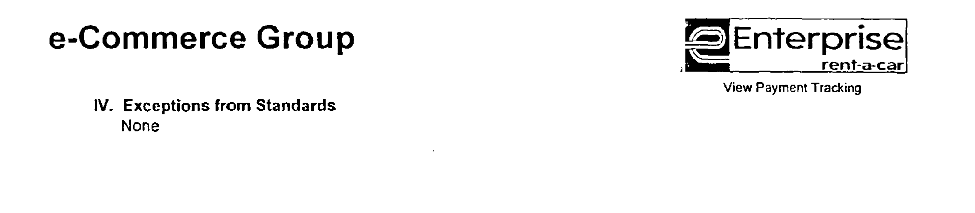

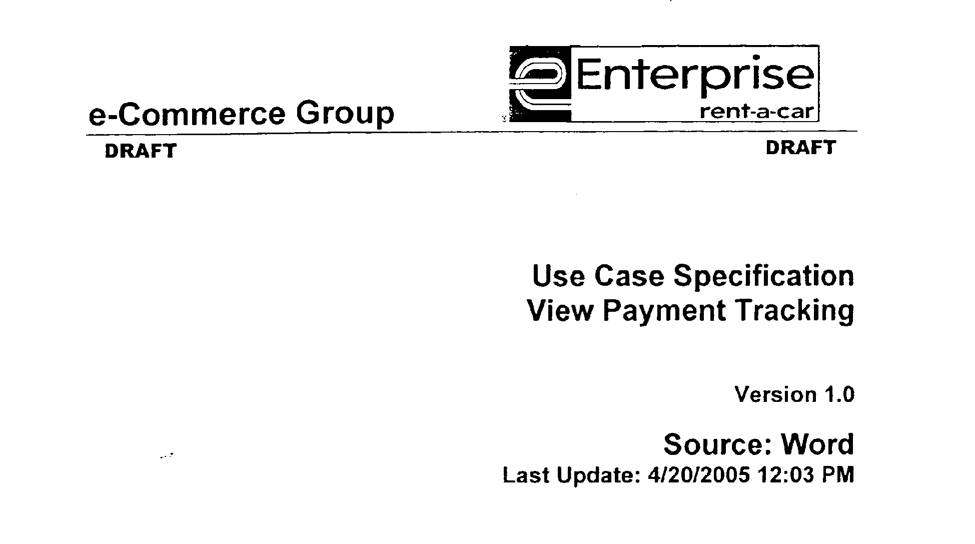

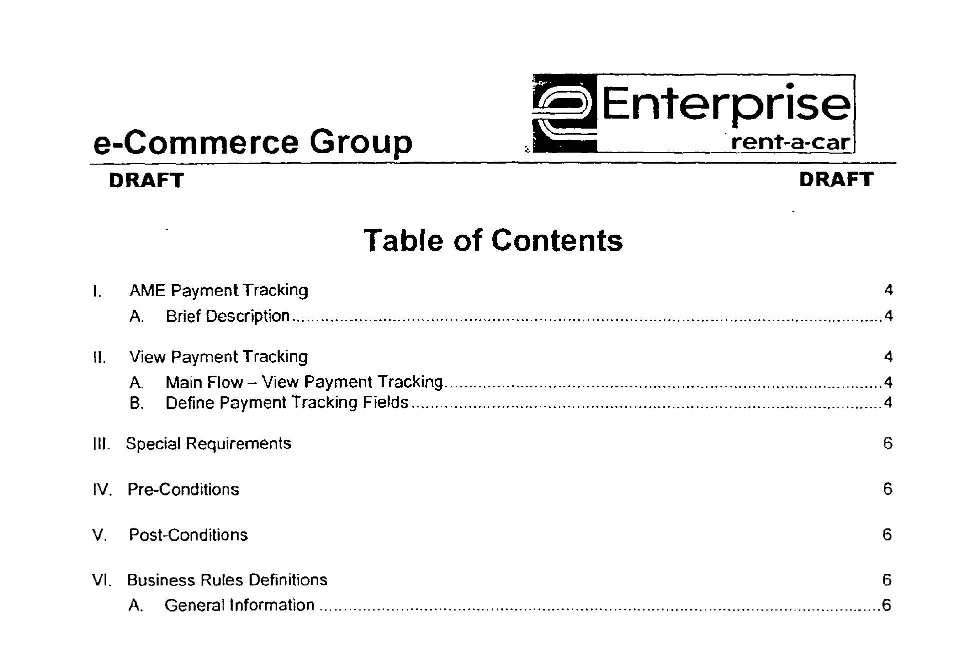

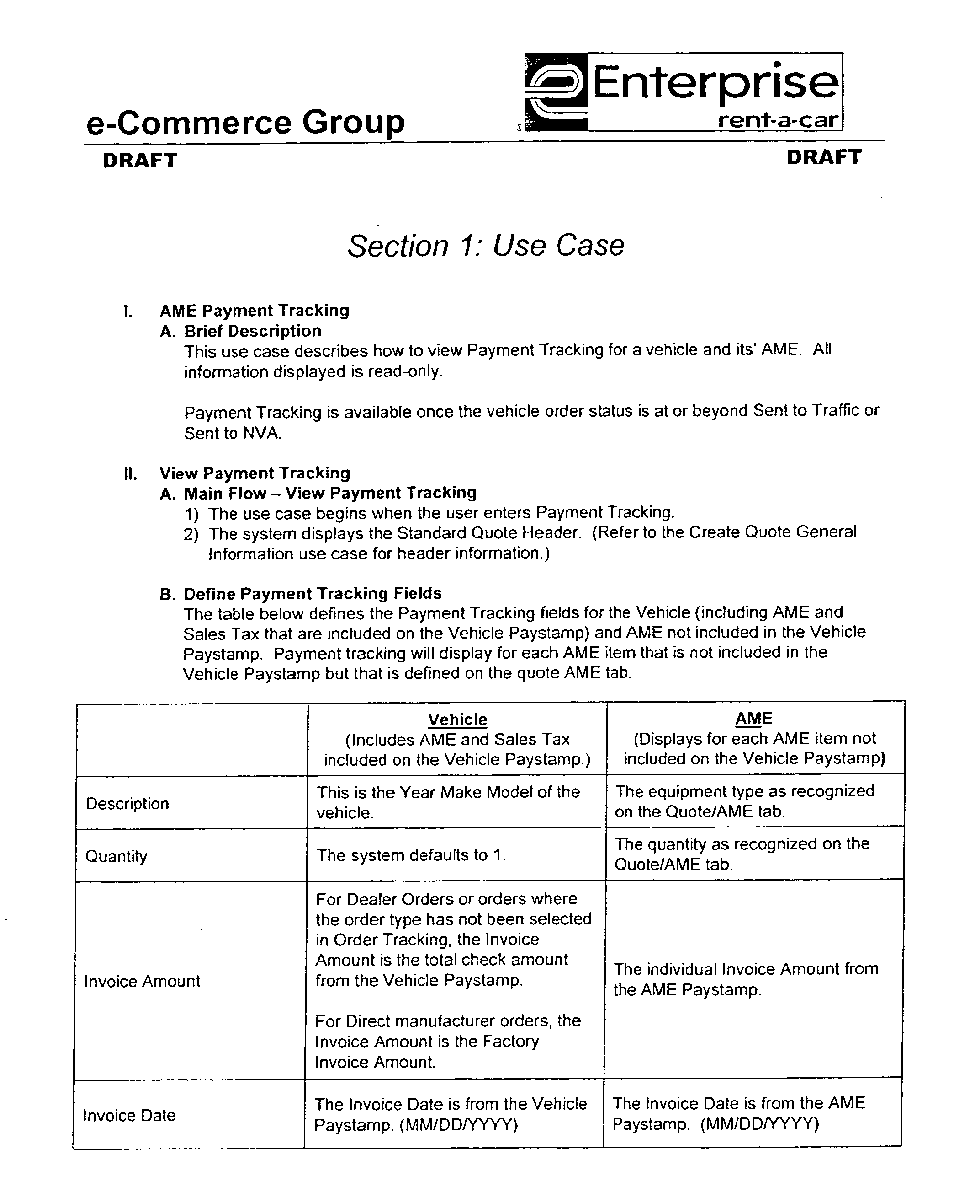

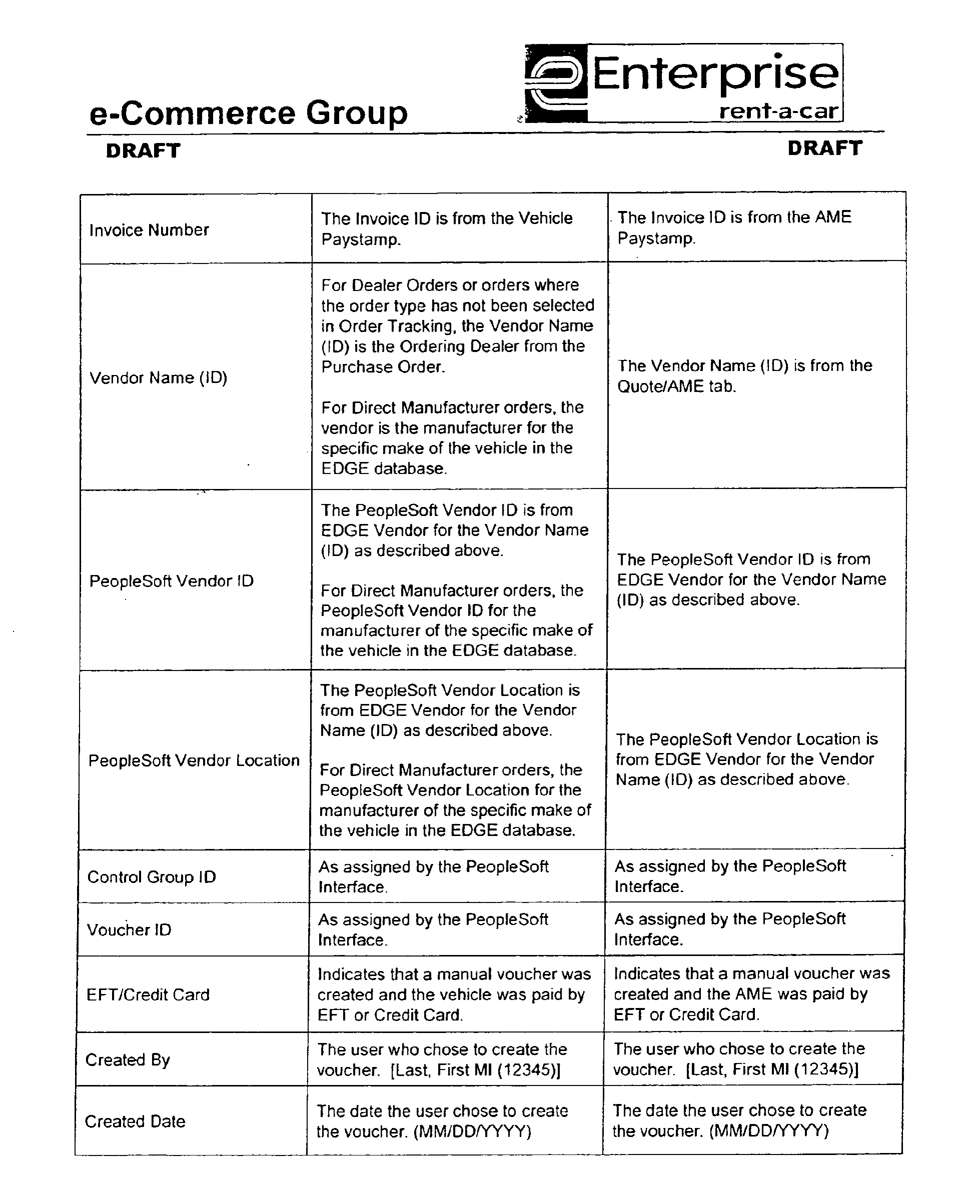

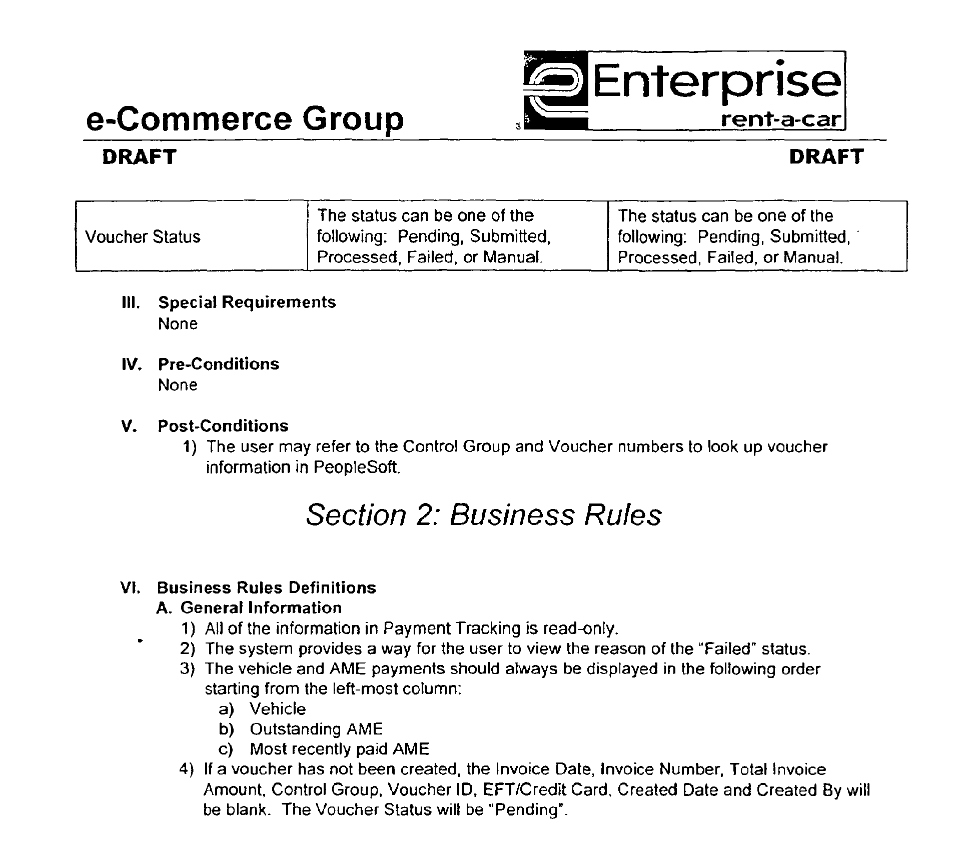

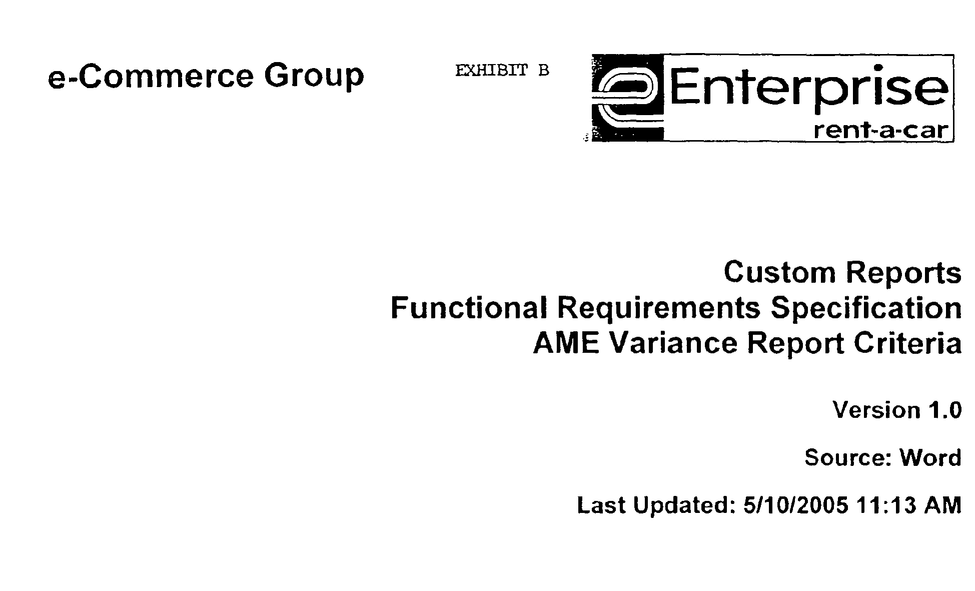

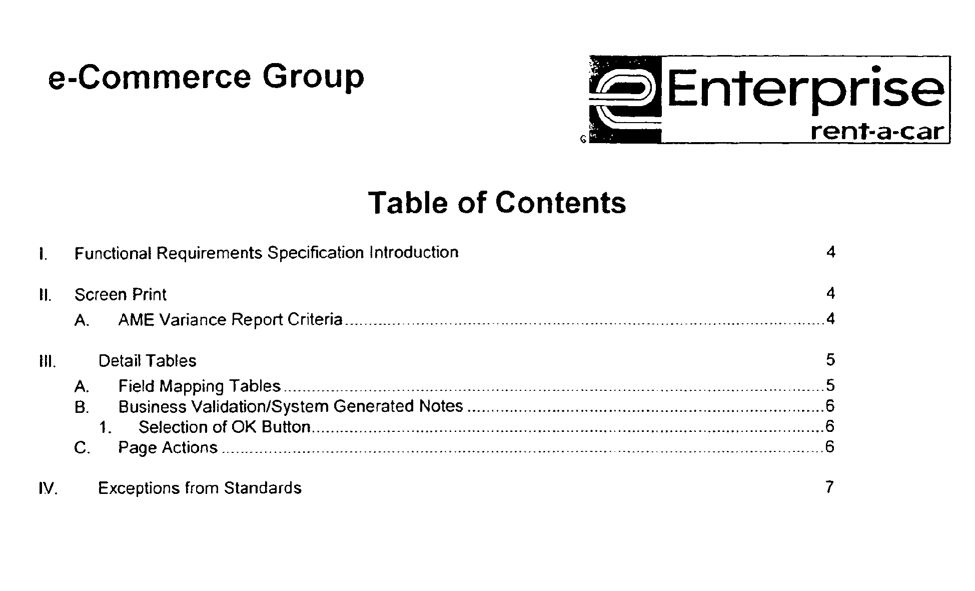

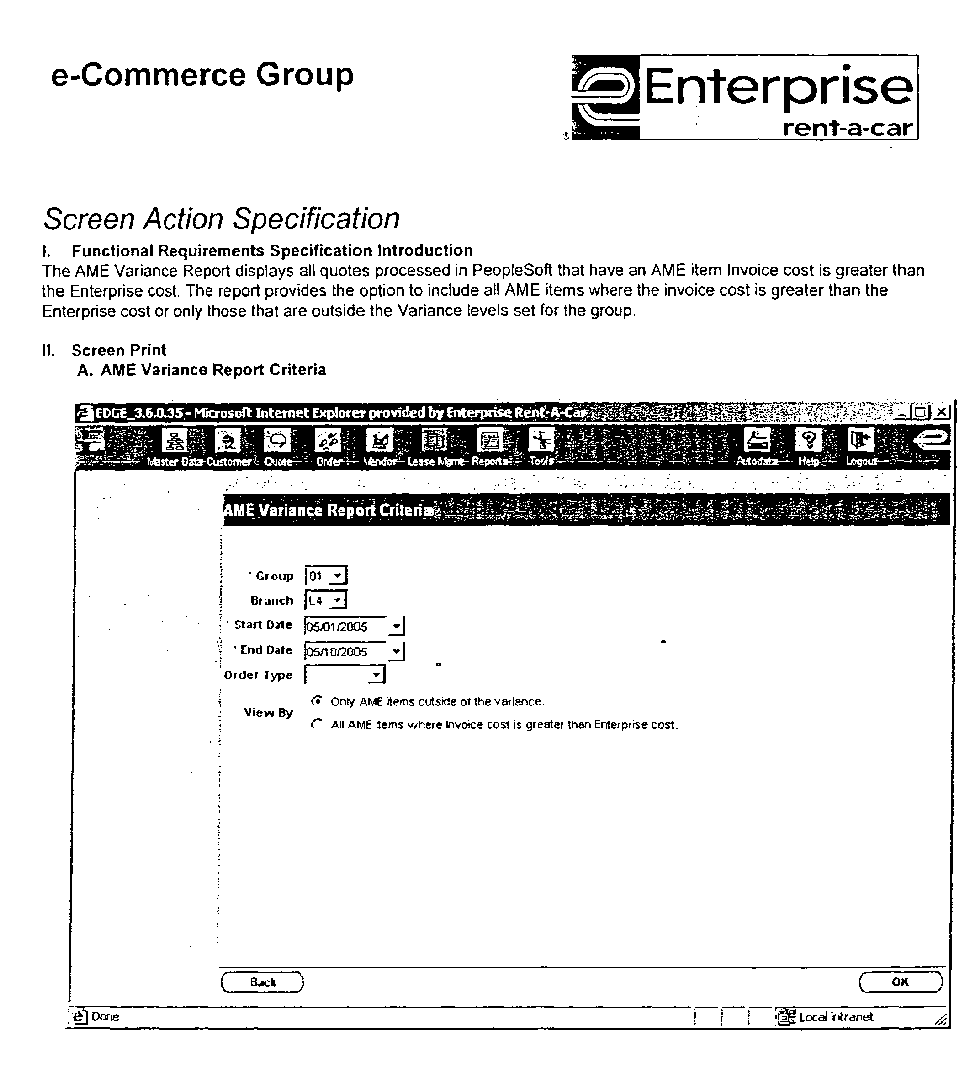

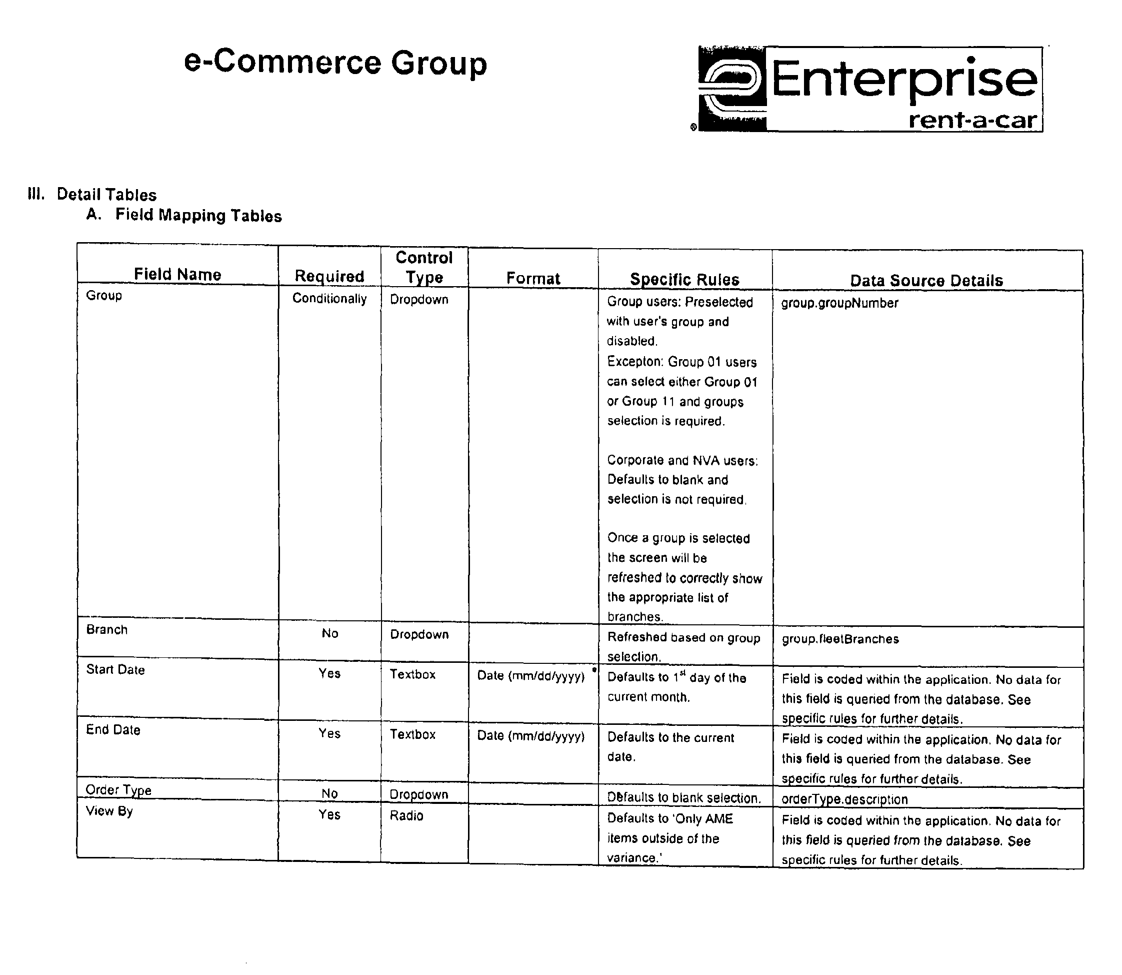

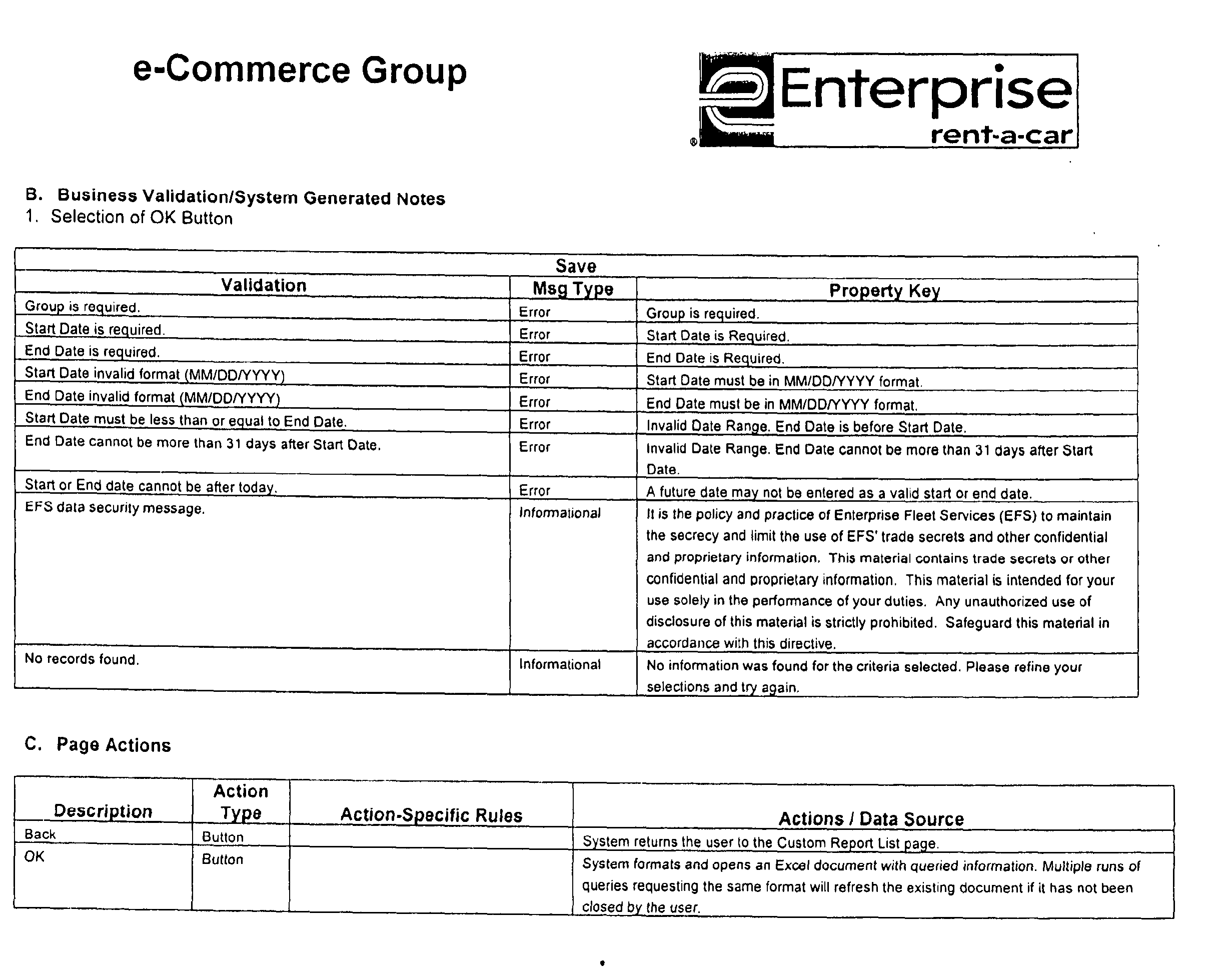

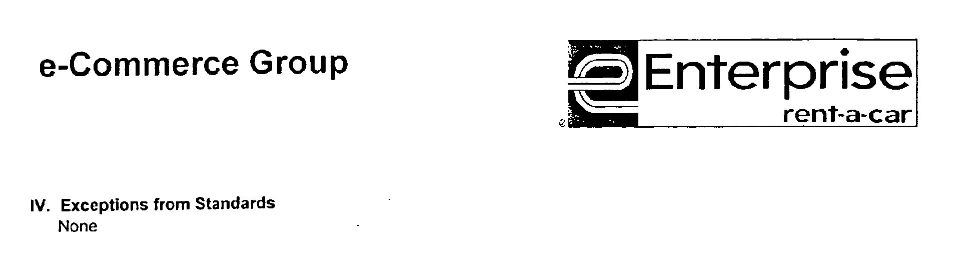

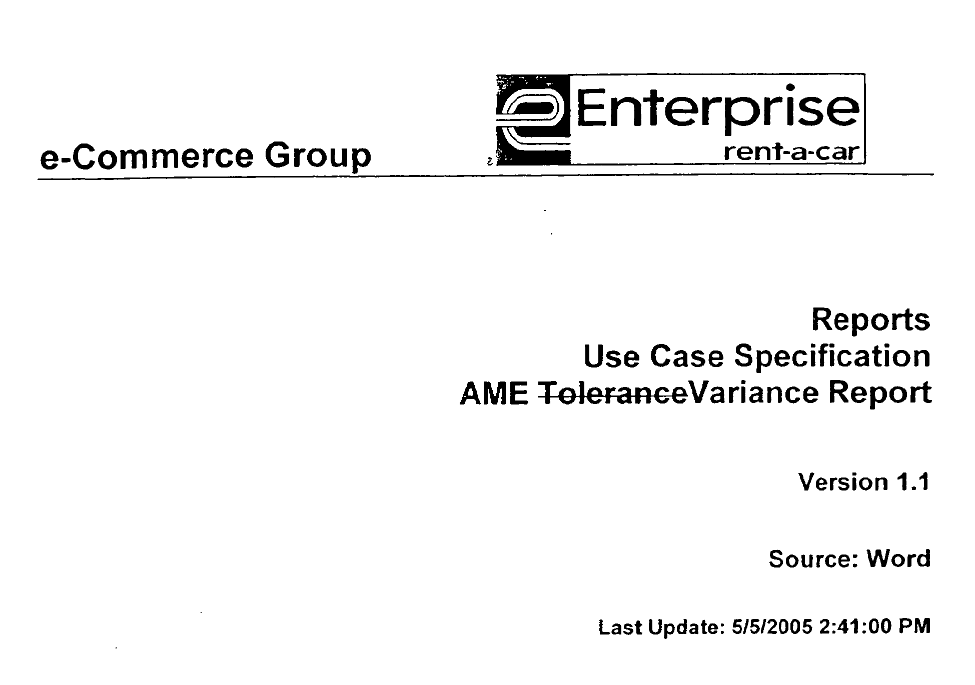

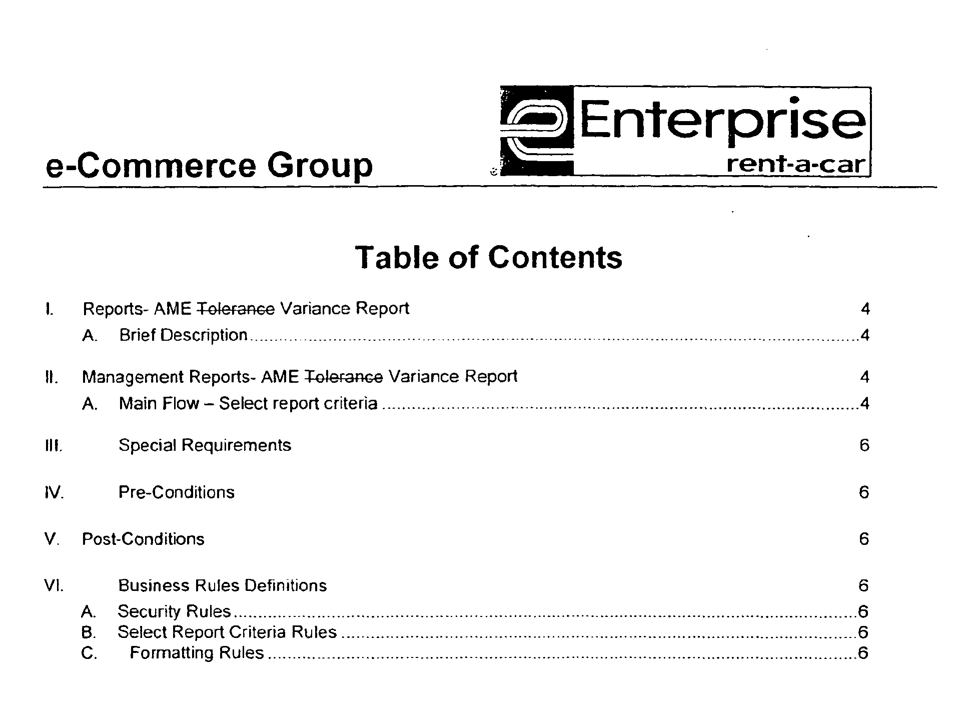

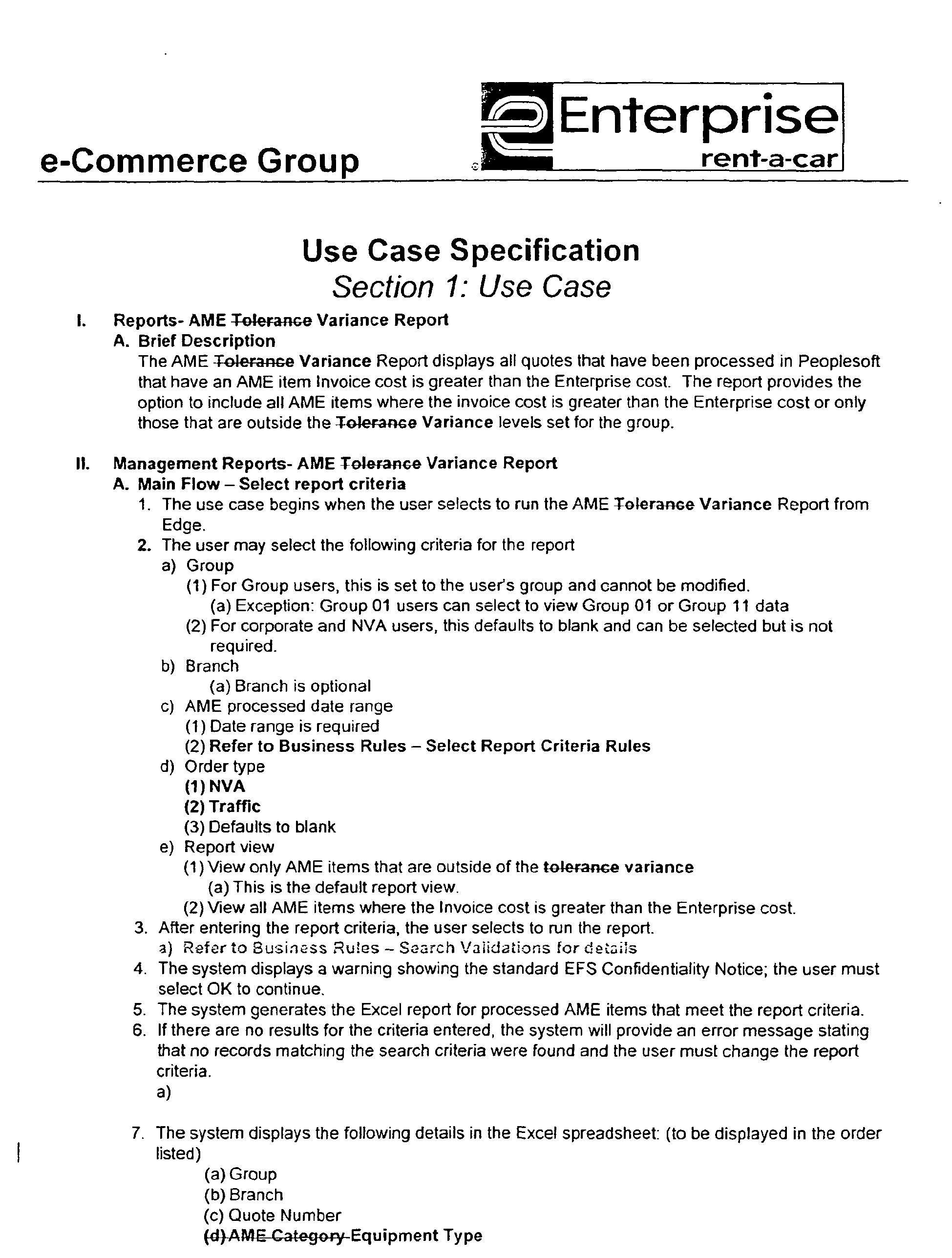

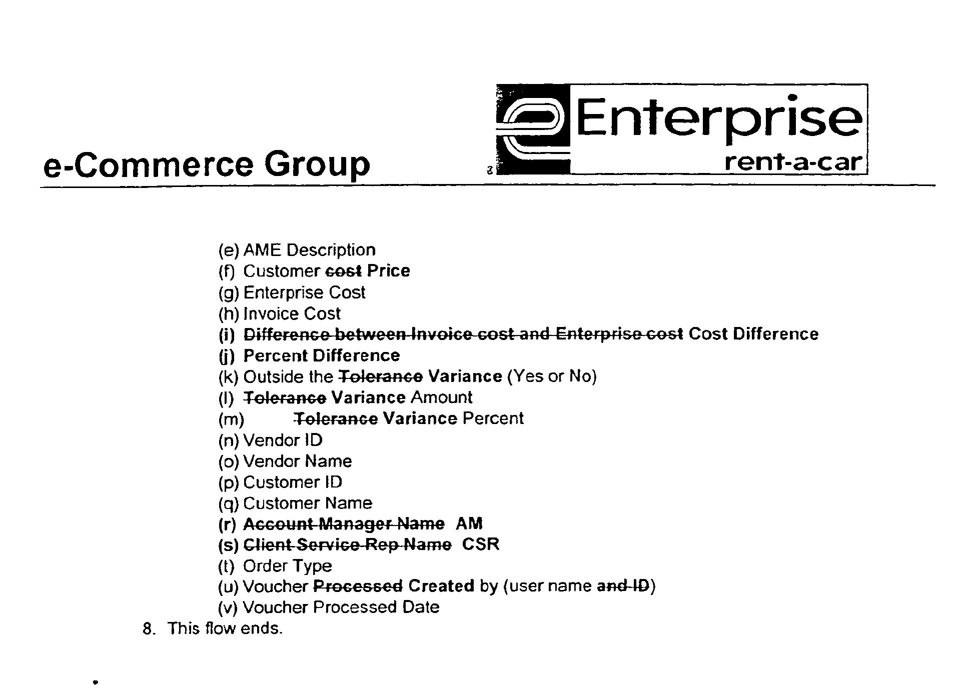

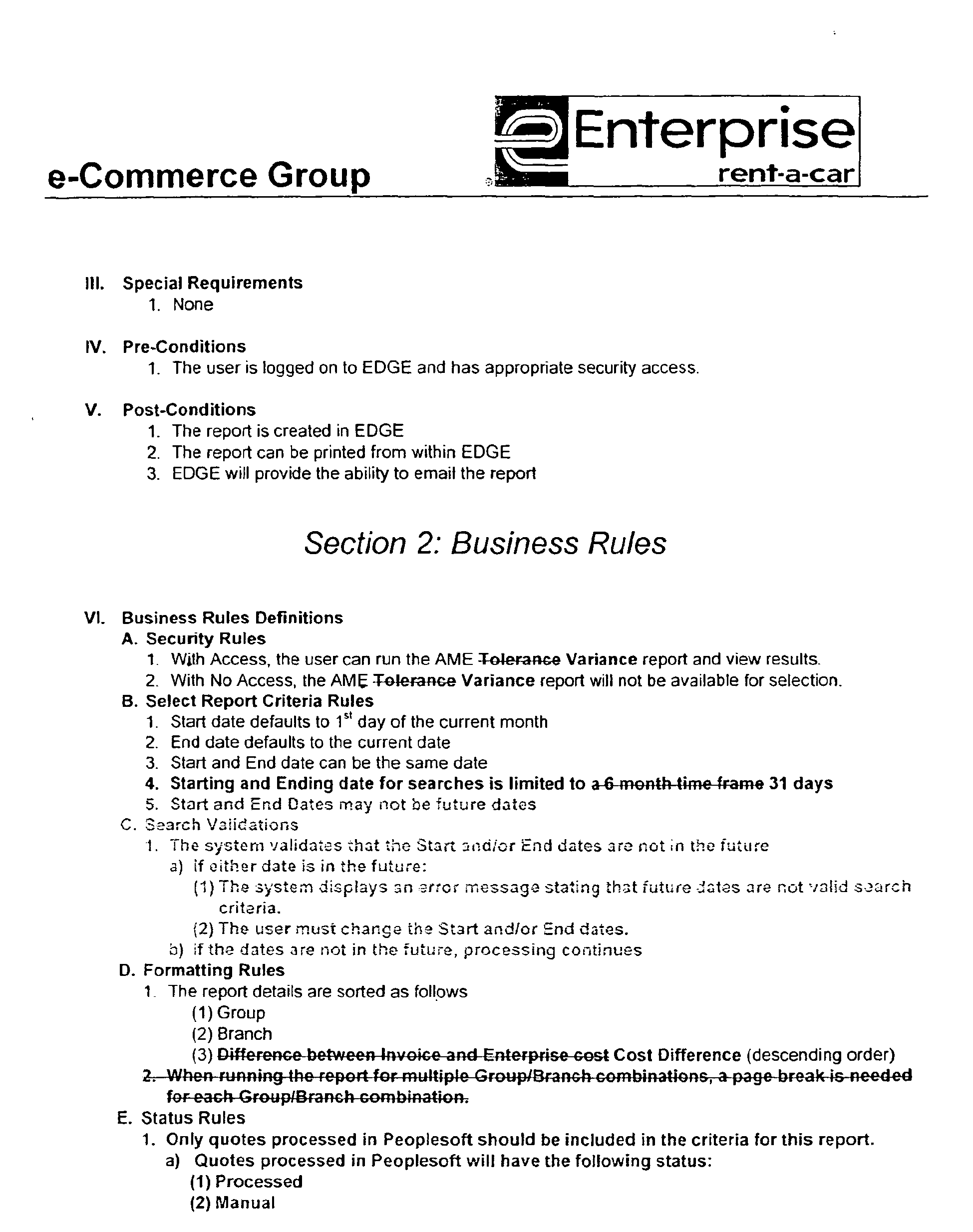

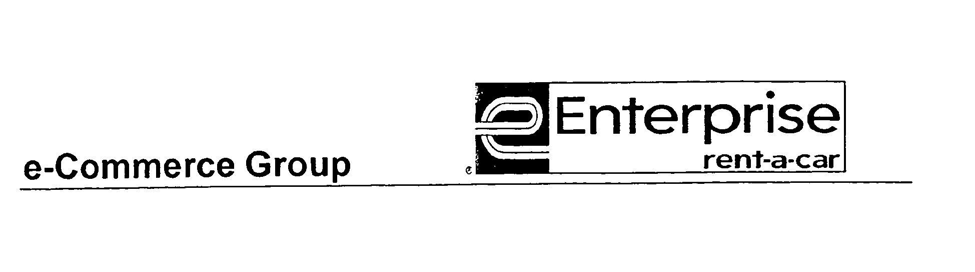

## Claims

1. A system for management of a plurality of vehicle leases, the system comprising:
at least one user computer;
a memory storing a database, the database being configured to store vehicle lease data for each of a plurality of vehicle leases; and
a server in communication with the user computer and the memory, the server being configured to execute a lease management software program, the lease management software program being configured to provide lease management functionality for each of said vehicle leases throughout a vehicle lease lifecycle via a plurality of interrelated graphical user interfaces (GUIs), the lease management functionality including a plurality of user selectable maintenance actions for an activated one of said customer vehicle leases, and wherein the lease management software program is further configured to update the stored vehicle lease data in the database in response to a user selection of at least one of said plurality of selectable maintenance actions.

2. The system of claim 1 wherein the lease management software program is further configured to validate a maintenance action against a plurality of predetermined business rules and update the stored vehicle lease data in accordance with the maintenance action in response to a positive validation.

3. The system of claim 2 wherein at least a plurality of the vehicle leases comprise customer vehicle leases, wherein the database is further configured to store a plurality of customer profiles, at least a plurality of the customer profiles defining at least a plurality of the predetermined business rules against which maintenance actions are validated, wherein the business rules defined by the customer profiles comprise at least one rule that defines how variances between an expected cost and an actual cost applicable to customer vehicle leases are handled, and wherein the lease management software program is further configured to access the customer profiles to identify the predetermined business rules against which maintenance actions are validated.

4. The system of claim 1 wherein the plurality of maintenance actions comprises at least one of a change in lease term for an activated vehicle lease, a change in a driver for an activated vehicle lease, and a change in a garage address for an activated vehicle lease.

5. The system of claim 4 wherein the database is further configured to store tax and surcharge data applicable to vehicle leases, wherein the stored tax and surcharge data varies by a plurality of taxing jurisdictions, wherein the stored tax and surcharge data is referenced by a plurality of geographical identifiers, and wherein the lease management software program is further configured to, for a new garage address that triggers a change in the taxes and surcharges that are applicable to an activated vehicle lease, access the database using at least a portion of the new garage address to determine all taxes that are applicable to a vehicle lease.

6. The system of claim 1 wherein the plurality of maintenance actions comprises at least one of a change in a physical damage and liability program enrollment for an activated vehicle lease, a change in a maintenance product enrollment for an activated vehicle lease, a change in depreciation for an activated vehicle lease, a change in terminal reduced book value (RBV) for an activated vehicle lease, and a change in interest rate for an activated vehicle lease.

7. A method for managing a plurality of vehicle leases, the method comprising:
storing vehicle lease data for each of a plurality of vehicle leases;
executing a lease management software program, the lease management software program being configured to (1) provide lease management functionality for each of said vehicle leases throughout a vehicle lease lifecycle via a plurality of interrelated graphical user interfaces (GUIs) for presentation to a user on the display, the lease management functionality including a plurality of user selectable maintenance actions for an activated one of said customer vehicle leases, and (2) update the stored vehicle lease data in response to a user selection through the input device of at least one of said plurality of selectable maintenance actions.

8. A method for interfacing a business accounting software program with a separate software program for managing a plurality of vehicles leased by a customer, the method comprising:
providing, via the separate software program, a graphical user interface (GUI) for display on a user computer that lists data describing a plurality of after market equipment (AME) cost items that have been purchased in connection with at least one customer vehicle lease;
receiving an input to the separate software program from a user through the displayed graphical user interface that is indicative of a command to pay a vendor for at least one of the listed AME cost items; and
responsive to the received input, automatically uploading vendor payment instructions for the at least one listed AME cost item from the separate software program to a separate business accounting software program.

9. A system for integrating a business accounting software program with a separate software program for managing a plurality of vehicles leased by a customer, the system comprising:
a user computer; and
a server in communication with the user computer via a computer network, the server being configured to (1) provide a graphical user interface (GUI) for display on the user computer that lists data describing a plurality of after market equipment (AME) cost items that have been purchased in connection with a customer vehicle lease, (2) receive an input from a user that is indicative of a command to pay a vendor for at least one of the listed AME cost items, and (3) responsive to the received input, automatically upload vendor payment instructions for the at least one listed AME cost item to a separate business accounting software program.

10. A system for identifying a total estimated holding cost for a potential vehicle lease, the system comprising:
a user computer;
a memory storing a database, the database configured to store vehicle lease data; and
a server in communication with the user computer over the Internet, the server also being in communication with the memory, the server being configured to execute a software program, the software program being configured to interface a user of the user computer with the database via a plurality of graphical user interfaces (GUIs) for display on the user computer, at least one of the GUIs being configured to display an estimated total holding cost for a potential vehicle lease in response to user input through a GUI of a plurality of lease parameters that define the potential vehicle lease.
